# EUROPEAN PATENT APPLICATION

(11) **EP 3 975 544 A1**
(43) Date of publication of application: **30.03.2022**
(21) Application number: 20826089.3
(22) Date of filing: 05.06.2020
(51) Int. Cl.: H04N 5/232, H04N 5/76, H04N 5/92, G06F 16/14

(54) **FILE PROCESSING DEVICE, FILE PROCESSING METHOD, AND PROGRAM**

(30) Priority: 18.06.2019 JP 2019112518
(71) Applicant: Sony Group Corporation, Tokyo 108-0075 (JP)
(72) Inventor: FUNAMOTO Daisuke, Tokyo 108-0075 (JP); ITO Ryogo, Tokyo 108-0075 (JP); ISOBE Yukio, Tokyo 108-0075 (JP); ISHIZAKA Toshihiro, Tokyo 108-0075 (JP); MATSUI Yuji, Tokyo 108-0075 (JP); YAMADA Takaharu, Tokyo 108-0075 (JP)
(74) Representative: D Young & Co LLP
(86) International application number: PCT/JP2020/022380
(87) International publication number: WO 2020/255756

(57) **Abstract**

The present technology relates to a file processing device, a file processing method, and a program that enable association of, for example, an image stored in a file with external data outside the file.

A file control unit generates a high efficiency image file format (HEIF) file in which a reserved area is secured that is used to store relationship information related to association of an image stored in the HEIF file with specification information specifying external data that is outside the HEIF file and is to be associated with the image. Furthermore, the file control unit writes the relationship information into the HEIF file by using the reserved area. The present technology can be applied to, for example, a case where a HEIF file is generated and an image stored in the HEIF file is associated with external data later, and the like.

## Description

### TECHNICAL FIELD

The present technology relates to a file processing device, a file processing method, and a program, and particularly relates to a file processing device, a file processing method, and a program that enable association of, for example, an image stored in a file with external data outside the file.

### BACKGROUND ART

As a file format for efficiently storing images, there is a high efficiency image file format (HEIF) (see Non Patent Document 1).

### CITATION LIST

### PATENT DOCUMENT

Non Patent Document 1: ISO/IEC 23008-12:2017, Information technology -- High efficiency coding and media delivery in heterogeneous environments -- Part 12: Image File Format

### SUMMARY OF THE INVENTION

### PROBLEMS TO BE SOLVED BY THE INVENTION

For a HEIF file conforming to high efficiency image file format (HEIF), it is convenient if an image stored in the HEIF file can be associated with external data outside the HEIF file.

The present technology has been made in view of such a situation, and is to enable association of an image stored in a HEIF file with external data outside the HEIF file.

### SOLUTIONS TO PROBLEMS

A first file processing device or program according to the present technology is a file processing device including a file control unit, or a program for causing a computer to function as such a file processing device, in which the file processing device generates a high efficiency image file format (HEIF) file in which a reserved area is secured that is used to store relationship information related to association of an image stored in the HEIF file with specification information specifying external data that is outside the HEIF file and is to be associated with the image.

A first file processing method of the present technology is a file processing method including: generating a high efficiency image file format (HEIF) file in which a reserved area is secured that is used to store relationship information related to association of an image stored in the HEIF file with specification information specifying external data that is outside the HEIF file and is to be associated with the image.

In the first file processing device, file processing method, and program of the present technology, a high efficiency image file format (HEIF) file is generated in which a reserved area is secured that is used to store relationship information related to association of an image stored in the HEIF file with specification information specifying external data that is outside the HEIF file and is to be associated with the image.

A second file processing device or program according to the present technology is a file processing device including a file control unit, or a program for causing a computer to function as such a file processing device, in which the file control unit uses a reserved area to write relationship information into a high efficiency image file format (HEIF) file in which the reserved area is secured that is used to store the relationship information related to association of an image stored in the HEIF file with specification information specifying external data that is outside the HEIF file and is to be associated with the image.

A second file processing method of the present technology is a file processing method including: using a reserved area to write relationship information into a high efficiency image file format (HEIF) file in which the reserved area is secured that is used to store the relationship information related to association of an image stored in the HEIF file with specification information specifying external data that is outside the HEIF file and is to be associated with the image.

In the second file processing device, file processing method, and program of the present technology, a reserved area is used to write relationship information into a high efficiency image file format (HEIF) file in which the reserved area is secured that is used to store the relationship information related to association of an image stored in the HEIF file with specification information specifying external data that is outside the HEIF file and is to be associated with the image.

Note that the first and second file processing devices may be independent devices, or may be internal blocks that form one device.

Furthermore, the first and second programs can be provided by being recorded on a recording medium or by being transmitted via a transmission medium.

### BRIEF DESCRIPTION OF DRAWINGS

Fig. 1 is a block diagram illustrating a configuration example of an embodiment of a digital camera to which the present technology is applied.
Fig. 2 is a view illustrating an example of a format of a joint photographic experts group (JPEG) file conforming to JPEG.
Fig. 3 is a view illustrating an example of an ISO base media file format.
Fig. 4 is a view illustrating an example of a format of a HEIF file conforming to HEIF.
Fig. 5 is a view illustrating an example of a format of a HEIF file in an image item format.
Fig. 6 is a view illustrating an example of an iprp box.
Fig. 7 is a view illustrating an example of a format of a HEIF file in an image sequence format.
Fig. 8 is a view illustrating an example of a trak box.
Fig. 9 is a view illustrating an example of a normal collection file in which a main image and a thumbnail image are stored.
Fig. 10 is a view illustrating an example of a first association-type collection file.
Fig. 11 is a view illustrating an example of a second association-type collection file.
Fig. 12 is a view illustrating an example of a third association-type collection file.
Fig. 13 is a view illustrating an example of a normal sequence file in which a track of a main image and a track of a thumbnail image of the main image are stored.
Fig. 14 is a view illustrating an example of an association-type sequence file.
Fig. 15 is a flowchart for explaining an outline of an example of generation processing of generating an association-type HEIF file.
Fig. 16 is a flowchart for explaining an outline of an example of reproduction processing of reproducing an association-type HEIF file.
Fig. 17 is a flowchart for explaining an example of reproduction processing of reproducing a collection file.
Fig. 18 is a flowchart for explaining an example of processing of reading a reproduction target image in step S32.
Fig. 19 is a flowchart for explaining a first example of processing of acquiring a reproduction target item ID in step S31.
Fig. 20 is a flowchart for explaining a second example of the processing of acquiring a reproduction target item ID in step S31.
Fig. 21 is a flowchart for explaining an example of processing of acquiring a uuid as specification information of a RAW file of a predetermined main image from the first association-type collection file.
Fig. 22 is a flowchart for explaining an example of processing of acquiring a uuid as specification information of a RAW file of a predetermined main image from the second association-type collection file.
Fig. 23 is a flowchart for explaining an example of processing of acquiring a uuid as specification information of a RAW file of a predetermined main image from the third association-type collection file.
Fig. 24 is a flowchart for explaining an example of processing of acquiring a list of item IDs of a main image from a collection file.
Fig. 25 is a flowchart for explaining an example of processing of reproducing a thumbnail image of (a frame of) a main image with respect to predetermined time information, from a sequence file.
Fig. 26 is a flowchart for explaining an example of processing of acquiring a uuid as specification information of a RAW file of (a frame of) a predetermined main image, from an association-type sequence file.
Fig. 27 is a view illustrating an example of storing a uuid into a RAW file in a case of adopting a RAW file of a main image as external data and generating association-type collection file.
Fig. 28 is a view illustrating an example of storing a uuid into a RAW file in a case of adopting a RAW file of a main image as external data and generating an association-type sequence file.
Fig. 29 is a view illustrating an example of storing a uuid into a WAV file in a case of adopting a WAV file of a main image as external data and generating association-type collection file.
Fig. 30 is a view illustrating an example of storing a uuid into a WAV file in a case of adopting a WAV file of a main image as external data and generating an association-type sequence file.
Fig. 31 is a view for explaining association between an image as internal data and external data after generation of a HEIF file.
Fig. 32 is a view for explaining an outline of an example of an area securing method.
Fig. 33 is a view for explaining an example of association processing of associating external data and a main image as internal data in a first association-type collection file generated by the area securing method, after generation of the first association-type collection file.
Fig. 34 is a view for explaining an outline of an example of a pre-storage method.
Fig. 35 is a view for explaining an example of association processing of associating external data and a main image as internal data in a first association-type collection file generated by the pre-storage method, after generation of the first association-type collection file.
Fig. 36 is a view for explaining an outline of another example of the pre-storage method.
Fig. 37 is a view for explaining an outline of still another example of the pre-storage method.
Fig. 38 is a view for explaining usable specification information and association between internal data and external data, for each of the area securing method and the pre-storage method.
Fig. 39 is a view for explaining an example of association processing of performing 1-to-N association for a first association-type collection file generated by the area securing method.
Fig. 40 is a view for explaining an example of association processing of performing 1-to-N association for a first association-type collection file generated by the pre-storage method.
Fig. 41 is a view for explaining an example of association processing of performing N-to-1 association for a first association-type collection file generated by the area securing method.
Fig. 42 is a view for explaining an example of association processing of performing N-to-1 association for a first association-type collection file generated by the pre-storage method.
Fig. 43 is a view illustrating a first example of association between a main image as internal data and audio as external data, in a case where an MP4 file is adopted as a file to store the audio as the external data.
Fig. 44 is a view illustrating a second example of association between a main image as internal data and audio as external data, in a case where an MP4 file is adopted as a file to store the audio as the external data.
Fig. 45 is a view illustrating a third example of association between a main image as internal data and audio as external data, in a case where an MP4 file is adopted as a file to store the audio as the external data.
Fig. 46 is a view illustrating a fourth example of association between a main image as internal data and audio as external data, in a case where an MP4 file is adopted as a file to store the audio as the external data.
Fig. 47 is a view illustrating a fifth example of association between a main image as internal data and audio as external data, in a case where an MP4 file is adopted as a file to store the audio as the external data.
Fig. 48 is a view illustrating a sixth example of association between a main image as internal data and audio as external data, in a case where an MP4 file is adopted as a file to store the audio as the external data.
Fig. 49 is a view for explaining a first example of a first association-type collection file generated by the area securing method and a state of the first association-type collection file after association processing.
Fig. 50 is a view for explaining a second example of the first association-type collection file generated by the area securing method and a state of the first association-type collection file after association processing.
Fig. 51 is a view for explaining a third example of the first association-type collection file generated by the area securing method and a state of the first association-type collection file after association processing.
Fig. 52 is a view for explaining a first example of a second association-type collection file generated by the area securing method and a state of the second association-type collection file after association processing.
Fig. 53 is a view for explaining a second example of the second association-type collection file generated by the area securing method and a state of the second association-type collection file after association processing.
Fig. 54 is a view for explaining a first example of a third association-type collection file generated by the area securing method and a state of the third association-type collection file after association processing.
Fig. 55 is a view for explaining a second example of the third association-type collection file generated by the area securing method and a state of the third association-type collection file after association processing.
Fig. 56 is a view for explaining a first example of an association-type sequence file generated by the area securing method and a state of the association-type sequence file after association processing.
Fig. 57 is a view for explaining a second example of the association-type sequence file generated by the area securing method and a state of the association-type sequence file after association processing.
Fig. 58 is a flowchart for explaining an example of processing of generating an association-type HEIF file by the area securing method.
Fig. 59 is a flowchart for explaining an example of association processing for an association-type HEIF file generated by the area securing method.
Fig. 60 is a flowchart for explaining an example of association processing for a first association-type collection file generated by the area securing method.
Fig. 61 is a flowchart for explaining another example of the association processing for the first association-type collection file generated by the area securing method.
Fig. 62 is a flowchart for explaining an example of processing of generating an association-type HEIF file by the pre-storage method.
Fig. 63 is a flowchart for explaining an example of association processing for an association-type HEIF file generated by the pre-storage method.
Fig. 64 is a block diagram illustrating a configuration example of an embodiment of a computer to which the present technology is applied.

### MODE FOR CARRYING OUT THE INVENTION

### <One embodiment of digital camera to which present technology is applied>

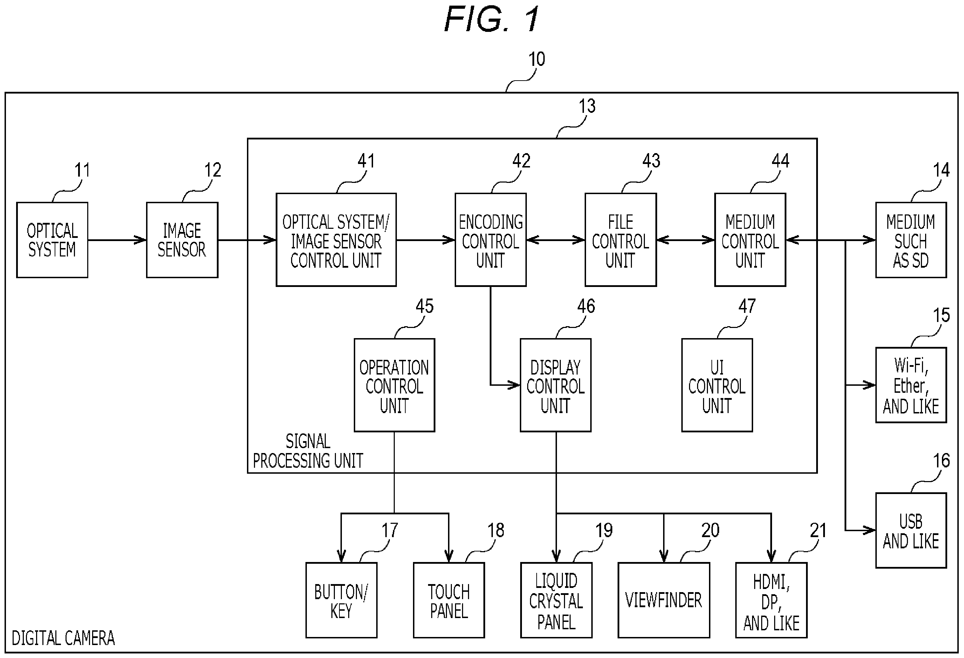

Fig. 1 is a block diagram illustrating a configuration example of an embodiment of a digital camera to which the present technology is applied.

A digital camera 10 includes an optical system 11, an image sensor 12, a signal processing unit 13, a medium 14, interfaces 15 and 16, a button/key 17, a touch panel 18, a liquid crystal panel 19, a viewfinder 20, an interface 21, and the like.

The optical system 11 condenses light from a subject on the image sensor 12.

The image sensor 12 receives light from the optical system 11 and performs imaging for photoelectric conversion, to generate image data as an electric signal and supply to the signal processing unit 13.

The signal processing unit 13 includes an optical system/image sensor control unit 41, an encoding control unit 42, a file control unit 43, a medium control unit 44, an operation control unit 45, a display control unit 46, and a UI control unit 47.

The optical system/image sensor control unit 41 controls the optical system 11 and the image sensor 12, and supplies, to the encoding control unit 42, (data of) an image obtained by imaging performed in accordance with the control.

The encoding control unit 42 supplies the image from the optical system/image sensor control unit 41 to the display control unit 46, and encodes the image as necessary and supplies to the file control unit 43. Furthermore, the encoding control unit 42 decodes the image supplied from the file control unit 43 as necessary, and supplies to the display control unit 46.

The file control unit 43 generates a file storing the image supplied from the encoding control unit 42, and supplies to the medium control unit 44. Furthermore, the file control unit 43 reproduces a file supplied from the medium control unit 44, that is, reads data such as an image stored in the file, and the like. For example, the image read from the file is supplied from the file control unit 43 to the encoding control unit 42.

The medium control unit 44 controls exchange of files between with the medium 14 and the interfaces 15 and 16. For example, the medium control unit 44 causes the file from the file control unit 43 to be recorded on the medium 14 or transmitted from the interfaces 15 and 16. Furthermore, the medium control unit 44 reads a file from the medium 14, or causes the interfaces 15 and 16 to receive a file, and supplies to the file control unit 43.

The operation control unit 45 supplies, in accordance with an operation of the button/key 17 or the touch panel 18 by a user, an operation signal corresponding to the operation to a necessary block.

The display control unit 46 performs display control and the like to supply an image and the like supplied from the encoding control unit 42 to the liquid crystal panel 19, the viewfinder 20, and the interface 21, to display.

The UI control unit 47 manages user interface (UI) control.

The medium 14 is, for example, a storage medium such as an SD card. The interface 15 is, for example, an interface of a local area network (LAN) such as Wi-Fi (registered trademark) or Ethernet (registered trademark). The interface 16 is, for example, a universal serial bus (USB) interface. The button/key 17 and the touch panel 18 are operated by the user when inputting a command or other information to the digital camera 10. The touch panel 18 can be formed integrally with the liquid crystal panel 19. The liquid crystal panel 19 and the viewfinder 20 display an image and the like supplied from the display control unit 46. The interface 21 is an interface that transmits at least an image, such as high-definition multimedia interface (HDMI) (registered trademark) or display port (DP).

In the digital camera 10 configured as described above, from an image (hereinafter, also referred to as a RAW image) of RAW data obtained by imaging by the image sensor 12, the optical system/image sensor control unit 41 generates, for example, a YUV image having the same resolution (the number of pixels) as that of the RAW image as a main image of a HEIF file, and supplies to the encoding control unit 42.

From a main image of YUV, the encoding control unit 42 generates, for example, an image (hereinafter, also referred to as a screen nail image) of YUV having a resolution lower than that of the main image for display use on the liquid crystal panel 19 or an external display as a first other image based on the main image, and generates, for example, an image (hereinafter, also referred to as a thumbnail image) of YUV having a resolution lower than that of the screen nail image for list display use as a second other image based on the main image. For example, the encoding control unit 42 supplies the screen nail image to the liquid crystal panel 19 via the display control unit 46, to display as a so-called through image. As the thumbnail image, for example, an image having a size of 320 pixels or less on a long side can be adopted. A ratio of a size (number of pixels) between the main image and the screen nail image as the first other image based on the main image or the thumbnail image as the second other image based on the main image can be, for example, 200 times or less. Similarly, a ratio of sizes between the main image and the screen nail image as the first other image based on the main image and the thumbnail image as the second other image based on the main image can also be 200 times or less. As the screen nail image, for example, an image having a resolution of 4K or more can be adopted. Furthermore, as the screen nail image, for example, a 4K (QFHD) or FHD image can be adopted in accordance with a user's selection. Moreover, images having the same resolution can be adopted as the main image and the screen nail image. In a case where images having the same resolution are adopted as the main image and the screen nail image, both the main image and the screen nail image can be stored in the HEIF file, or the main image can be stored without the screen nail image being stored. In a case where the main image is stored in the HEIF file without the screen nail image being stored, the main image can be resized and used as the screen nail image.

Furthermore, the encoding control unit 42 encodes the main image, the screen nail image, and the thumbnail image corresponding to the RAW image (the main image, the screen nail image, and the thumbnail image generated from the same RAW image) as necessary, and supplies to the file control unit 43 together with the RAW image.

The file control unit 43 generates a RAW file storing the RAW image, and generates a HEIF file, a JPEG file, or the like storing the corresponding main image, screen nail image, and thumbnail image (the main image, the screen nail image, and the thumbnail image generated from the same RAW image), and supplies to the medium control unit 44. The HEIF file is a file conforming to high efficiency image file format (HEIF), and the JPEG file is a file conforming to joint photographic experts group (JPEG).

The medium control unit 44 records the RAW file and the HEIF file or the JPEG file from the file control unit 43 on the medium 14, or causes the RAW file and the HEIF file or the JPEG file to be transmitted from the interface 15 or 16.

In the file control unit 43, which one of the HEIF file and the JPEG file is to be generated can be selected, for example, in accordance with a user's operation. Furthermore, while the HEIF file includes an image item format and an image sequence format as described later, for example, which one of the image item format and the image sequence format is to be adopted can be selected in accordance with a user's operation. Moreover, the file control unit 43 can perform mutual conversion between the HEIF file and the JPEG file in accordance with a user's operation.

Moreover, in generating the HEIF file, the file control unit 43 can associate internal data (data stored in the HEIF file), which is in the HEIF file and is to be associated with external data (data not stored in the HEIF file) outside the HEIF file, with specification information specifying the external data, and store into the HEIF file. The HEIF file in which the internal data and the specification information of the external data to be associated with the internal data are stored in association with each other is also referred to as an association-type HEIF file. The association-type HEIF file can store the internal data and the specification information in association with each other, for example, by storing association information associating the internal data and the specification information, or the like.

### <JPEG File>

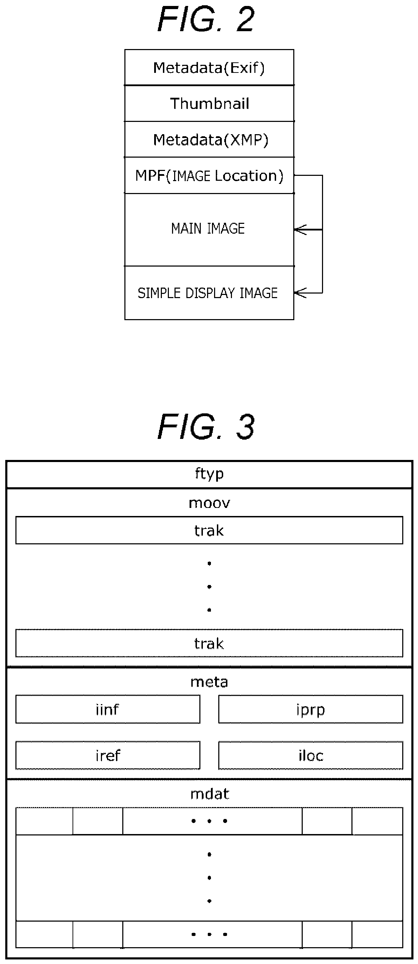

Fig. 2 is a view illustrating an example of a format of a joint photographic experts group (JPEG) file conforming to JPEG.

The JPEG file is configured by storing, for example, Exif metadata, a thumbnail image, and extensible metadata platform (XMP) (registered trademark) metadata, MPF representing storage locations (positions) and the like of a main image and a simple display image, the main image, and the simple display image. As the simple display image, for example, the screen nail image can be adopted.

### <ISO base media file format>

Fig. 3 is a view illustrating an example of an ISO base media file format.

HEIF (ISO/IEC 23008-12) is a file format conforming to the ISO base media file format (ISO/IEC 14496-12), and therefore, the HEIF file is conforming to the ISO base media file format.

The ISO base media file format is formed with units called boxes as containers to store data, and has a structure called a box structure.

The box includes a type (box type), actual data (data), and the like. The type represents a type of actual data in the box. As the actual data, it is possible to adopt reproducible media data such as an image (a still image or a moving image), audio, and subtitles, an attribute name (field name) and an attribute value (field value) of (a variable represented by) the attribute name, and other various other data.

Moreover, a box can be adopted as the actual data. That is, the box can have a box as the actual data, which enables a hierarchical structure.

The base media file conforming to the ISO base media file format can have an ftyp box, a moov box (MovieBox), a meta box (MetaBox), an mdat box (MediaDataBox), and the like. The ftyp box stores identification information for identifying a file format. The moov box can store a trak box and the like. The meta box can store an iinf box, an iprp box, an iref box, an iloc box, and the like. The mdat box can store media data (AV data) and any other data.

The HEIF conforms to the ISO base media file format as described above.

### <HEIF File>

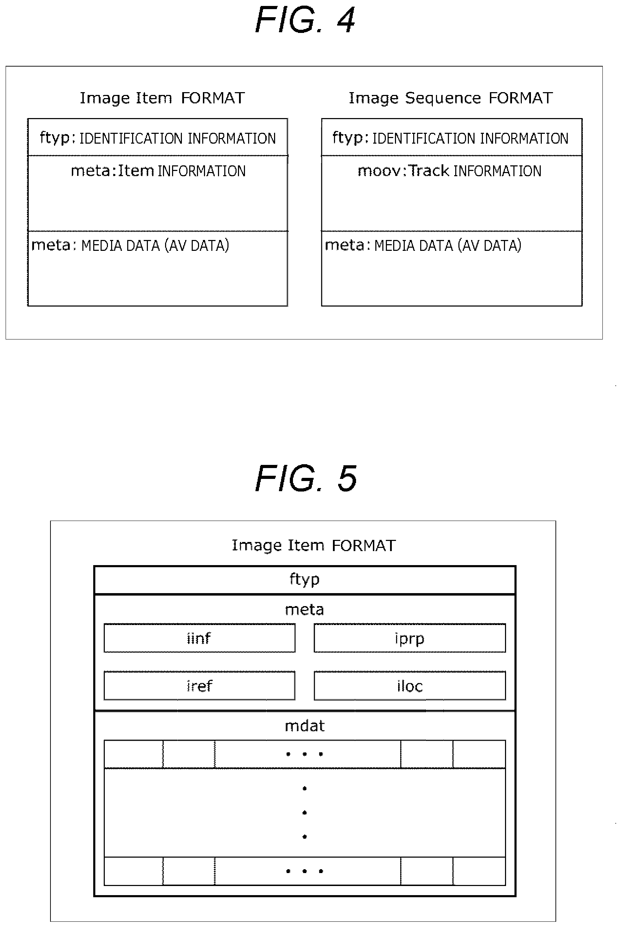

Fig. 4 is a view illustrating an example of a format of a HEIF file conforming to HEIF.

The HEIF file is roughly divided into the image item format and the image sequence format. Moreover, the image item format includes a single image format having only one item to be described later and an image collection format having a plurality of items.

The HEIF file in the image item format has an ftyp box, a meta box, and an mdat box.

The HEIF file in the image sequence format has an ftyp box, a moov box, and an mdat box.

Note that the HEIF file can also have both the meta box and the moov box, rather than having only one of them.

The ftyp box stores identification information for identifying a file format, for example, such as the fact that the file is a HEIF file in the image item format or the image sequence format.

The meta box and the moov box store metadata necessary for reproduction, management, and the like of the media data stored in the mdat box, for example, metadata such as a storage location of the media data.

The mdat box stores media data (AV data) and the like.

In the digital camera 10, which HEIF file of the HEIF files in the image item format and the image sequence format is to be generated can be selected in accordance with a user's operation, for example. Furthermore, in a case where an image is encoded and stored in the mdat box of the HEIF file, only intra coding is allowed for the image item format, and intra coding and inter coding are allowed for the image sequence format. Therefore, for example, in a case where priority is given to high-speed access to data stored in the HEIF file, generation of the HEIF file in the image item format can be selected. Whereas, in a case where priority is given to reducing a size (data amount) of the HEIF file, generation of the HEIF file in the image sequence format can be selected.

Fig. 5 is a view illustrating an example of a format of a HEIF file in the image item format.

The HEIF file in the image item format stores information indicating that the HEIF file is in the image item format, for example, mif1 or the like (as an attribute value), in the ftyp box.

The meta box stores an iinf box, an iref box, an iprp box, and an iloc box.

The iinf box stores (an attribute name and an attribute value representing) the number of items that are media data (AV data) stored in the mdat box, and the like. The item is one data stored in the mdat box of the HEIF file in the image item format, and for example, one image (screen) is the item. In the present specification, one image is also referred to as a frame regardless of a still image and a moving image. One frame is one item.

The iref box stores information indicating a relationship between items. For example, in the mdat box, each of the corresponding main image, screen nail image, and thumbnail image can be stored as an item. In a case where the mdat box stores an item I1 as the main image, an item I2 as the screen nail image, and an item I3 as the thumbnail image, the iref box stores information indicating that the item I2 is the screen nail image of the main image as the item I1 and information indicating that the item I3 is the thumbnail image of the main image as the item I1.

The iprp box stores information regarding a property of an item.

The iloc box stores information regarding a storage location of an item stored in the mdat box.

The mdat box (of the HEIF file) in the image item format stores, for example, a frame of an image as an item. In the mdat box, one or more items can be stored. Furthermore, a frame as an item can be encoded and stored in the mdat box. However, the encoding of the frame as an item stored in the mdat box in the image item format is limited to intra encoding. As an encoding method (codec) for encoding a frame as an item, for example, HEVC or the like can be adopted.

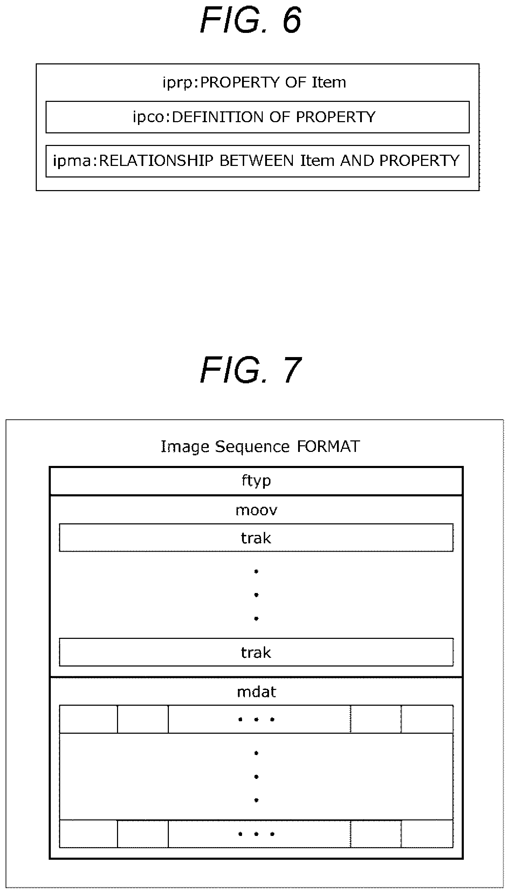

Fig. 6 is a view illustrating an example of the iprp box of Fig. 5.

The iprp box stores an ipco box and an ipma box related to a property of an item. The ipco box stores a property of an item stored in the mdat box, for example, codec information regarding a codec of an image as the item and image size information regarding a size. The ipma box stores an index (pointer) of an item stored in the mdat box to the property stored in the ipco box.

Fig. 7 is a view illustrating an example of a format of a HEIF file in the image sequence format.

The HEIF file in the image sequence format stores information indicating that the HEIF file is in the image sequence format, for example, msf1 or the like, in the ftyp box.

The moov box stores a trak box. The trak box stores information regarding a track stored in the mdat box.

The track includes one independent piece of media data, such as an image or audio, to be reproduced in accordance with a timeline. For example, the track includes an image of one or more frames that are to be an elementary stream. For the track stored in the mdat box, a plurality of tracks, for example, individual tracks of an image and audio recorded at the same time can be reproduced at the same time.

The media data of the track is formed in units called samples. The sample is a minimum unit (access unit) in a case where the media data in the HEIF file is accessed. Therefore, the media data in the HEIF file cannot be accessed in units finer than the samples.

For image media data, for example, one frame or the like is one sample. Furthermore, for audio media data, for example, one audio frame or the like defined in the standard of the audio media data is one sample.

In the mdat box (of the HEIF file) in the image sequence format, the media data of the track is arranged in units called chunks. The chunk is a set of one or more samples arranged at logically continuous addresses.

In a case where a plurality of tracks as media data is stored in the mdat box, the plurality of tracks is interleaved and arranged in units of chunks.

As described above, in the mdat box in the image sequence format, one or more tracks including media data such as an image and audio are stored.

In the mdat box, frames of images constituting a track can be encoded and stored. For the encoding of the frames constituting the track stored in the mdat box in the image sequence format, a long group of picture (GOP) can be adopted as a GOP, and either of intra encoding and inter encoding can be adopted. As a codec to encode the frames constituting the track, for example, HEVC or the like can be adopted.

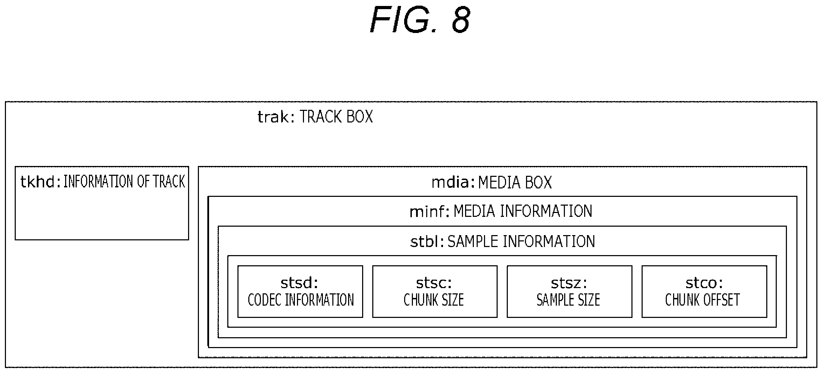

Fig. 8 is a view illustrating an example of a trak box.

The trak box can store a tkhd box and an mdia box. The tkhd box stores header information of a track, such as creation date and time of a track managed by the trak box. The mdia box stores an minf box and the like. The minf box stores an stbl box. The stbl box stores an stsd box, an stsc box, an stsz box, and an stco box that store a sample of a track and, consequently, information for accessing a chunk. The stsd box stores codec information regarding a codec of a track. The stsc box stores a chunk size (the number of samples of one chunk). The stsz box stores a sample size. The stco box stores a chunk offset, that is, an offset of an arrangement position of each chunk of a track stored in the mdat box.

Here, the HEIF file in the image item format is also referred to as a collection file, and the HEIF file in the image sequence format is also referred to as a sequence file. Moreover, the association-type HEIF file in the image item format is also referred to as an association-type collection file, and the association-type HEIF file in the image sequence format is also referred to as an association-type sequence file.

In the digital camera 10, it is possible to generate the HEIF file (including the association-type HEIF file) that stores a main image, and further stores one or both of a necessary screen nail image and thumbnail image.

### <Collection file>

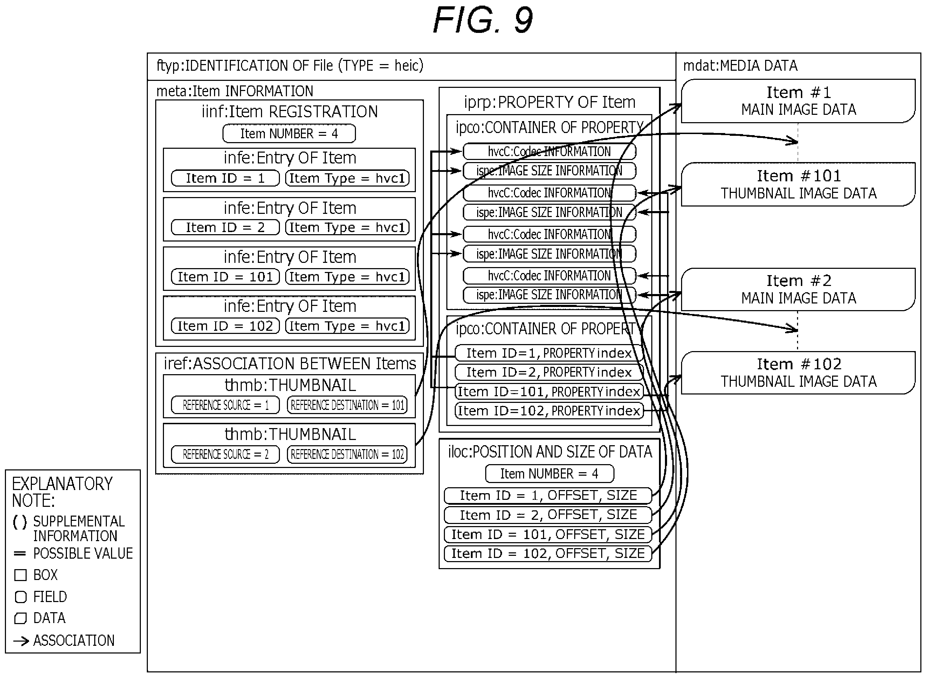

Fig. 9 is a view illustrating an example of a normal collection file in which a main image and a thumbnail image are stored.

Here, the normal collection file means a collection file in which internal data in the collection file is not associated with specification information of external data.

Now, it is assumed that a frame (item) is encoded by HEVC and stored in the mdat box of the collection file.

The ftyp box stores, as identification information for identifying a file format, heic indicating that the format is the image item format and that the codec is HEVC.

The iinf box stores the number (item number) of items stored in the mdat box. In Fig. 9, the mdat box stores a total of four items (frames) of: a main image (hereinafter, also described as a main image Item #1) specified by an item ID #1; a main image Item #2; a thumbnail image (hereinafter, also described as a thumbnail image Item #101) specified by an item ID #101; and a thumbnail image Item #102. Therefore, the number of items is 4. Note that the thumbnail image Item #101 is a thumbnail image of the main image Item #1, and the thumbnail image Item #102 is a thumbnail image of the main image Item #2.

Moreover, the iinf box further stores, for example, an infe box for every item stored in the mdat box. In the infe box, an item ID for specifying the item and an item type are registered. In Fig. 9, there is the infe box of each of the main images Item #1 and Item #2 and the thumbnail images Item #101 and Item #102.

The iref box stores, for example, a thmb box as information for associating items stored in the mdat box. In the thmb box, a reference source and a reference destination as information for associating a main image with a thumbnail image of the main image are correlated with each other and stored. In the thmb box, the reference source represents an item ID of the main image, and the reference destination represents an item ID of the thumbnail image of the main image specified by the item ID of the reference source. Therefore, according to the reference destination correlated with the reference source, the item ID of the thumbnail image of the main image specified by the item ID represented by the reference source can be recognized. Furthermore, according to the reference source correlated with the reference destination, the item ID of the main image of the thumbnail image specified by the item ID represented by the reference destination can be recognized.

As described in Fig. 6, the ipco box and the ipma box are stored in the iprp box. The ipco box stores, as described in Fig. 6, a property of a frame as an item stored in the mdat box, for example, codec information regarding a codec and image size information regarding a size. As described in Fig. 6, the ipma box stores an index of the item stored in the mdat box to the property stored in the ipco box.

The iloc box stores, as described in Fig. 6, information regarding a storage location of an item in the mdat box. In Fig. 9, the iloc box stores that the number of items is 4. Moreover, in the iloc box, an offset to each storage location and a size of the main images Item #1 and Item #2 and the thumbnail images Item #101 and Item #102 stored in the mdat box are stored in correlation with an item ID.

Hereinafter, an association-type collection file in which internal data and specification information of external data are stored in association with each other in the normal collection file of Fig. 9 will be described.

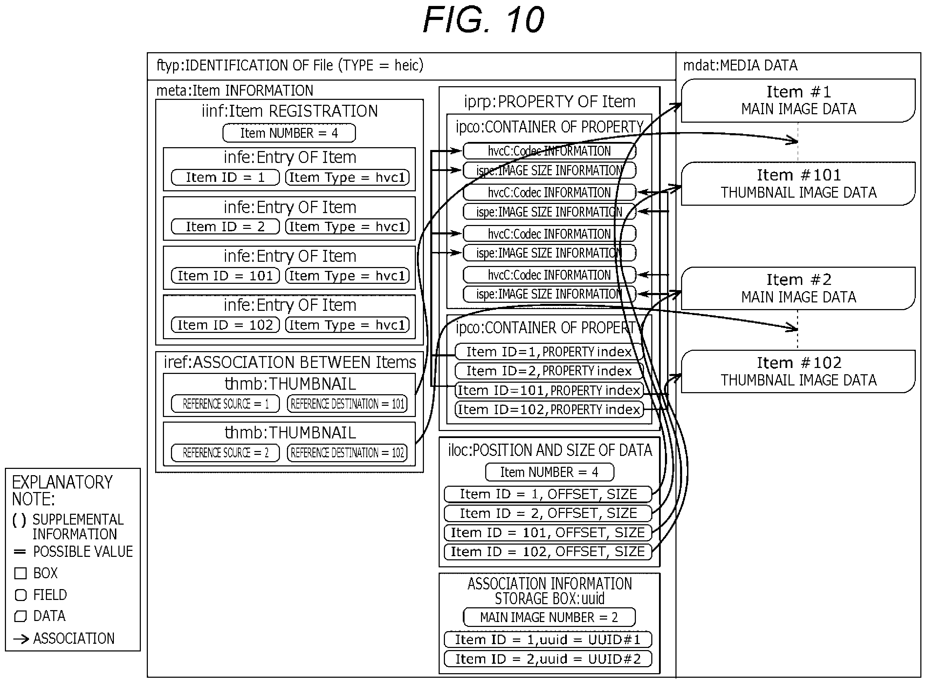

Fig. 10 is a view illustrating an example of a first association-type collection file.

Here, it is assumed that, as external data to be associated with a main image as internal data in the HEIF file, for example, (a RAW file that stores) a RAW image of the main image is adopted.

In the first association-type collection file, the main image and specification information of the RAW file storing the RAW image are stored in association with each other, by storing association information associating the main image as the internal data with the specification information of (the RAW image stores in) the RAW file storing the RAW image as the external data. Moreover, in the first association-type collection file, the association information is stored in the meta box.

As the specification information of the RAW file storing the RAW image as the external data, it is possible to adopt any information that can specify (the RAW image stored in) the RAW file, in addition to a file name of the RAW file, a universally unique identifier (uuid) issued for the RAW file, and a uniform resource locator (URL).

For the first association-type collection file, as a new box to be stored in the meta box, an association information storage box storing association information is defined and stored in the meta box. The association information storage box of the first association-type collection file stores association information in which, for example, an item ID for specifying a main image is correlated with a uuid as specification information specifying (the RAW image stored in) the RAW file (that stores the RAW image) to be associated with the main image. Moreover, the association information storage box stores the number of main images (main image number) to be associated with (the RAW image stored in) the RAW file. The main image number stored in the association information storage box is the number of main images to be associated with the RAW file, and thus is to be a value equal to or less than the number of main images stored in the mdat box.

In Fig. 10, a uuid of the RAW file of the main image Item #1 (a uuid of the RAW image associated with the main image Item #1) is a UUID #1, and a uuid of the RAW file of the main image Item #2 is a UUID #2. Now, assuming that a RAW file whose uuid is a UUID #i is described as a RAW file UUID #i, in Fig. 10, the association information storage box stores association information in which the item ID #1 of the main image Item #1 is correlated with the uuid of the RAW file UUID #1, and an item ID #2 of the main image Item #2 is correlated with the uuid of the RAW file UUID #2.

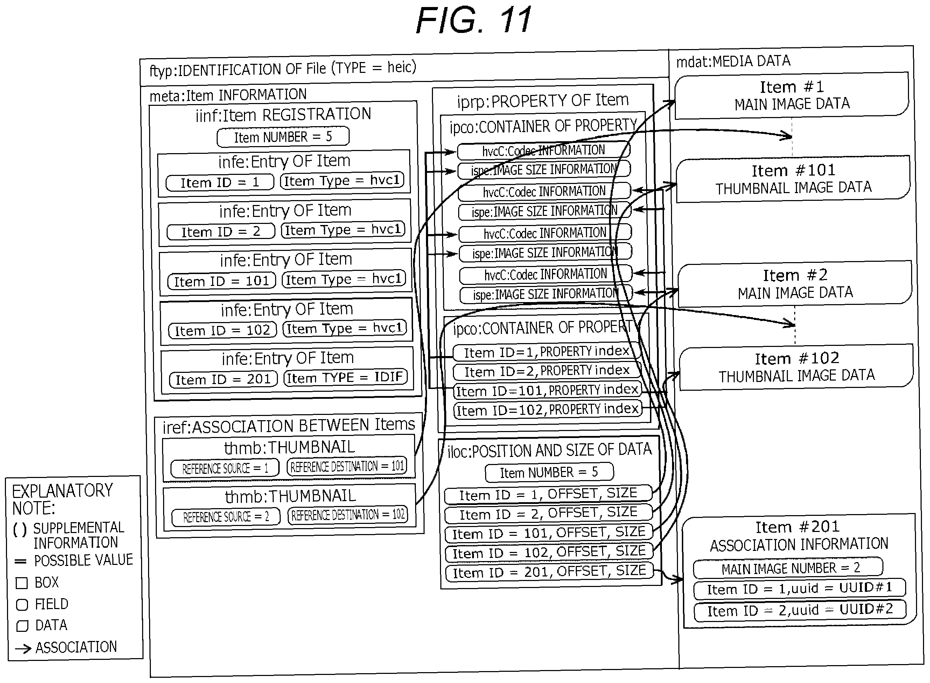

Fig. 11 is a view illustrating an example of a second association-type collection file.

In the second association-type collection file, similarly to the first association collection file, a main image and specification information of a RAW file are stored in association with each other, by storing association information associating the main image as internal data with specification information of the RAW file as external data. However, in the second association-type collection file, the association information is stored in the mdat box.

For the second association-type collection file, for example, association information similar to a case of the first association collection file is stored as an item in the mdat box. In Fig. 11, the association information is stored in the mdat box as an item with an item ID #201.

As described above, in the second association-type collection file, information to be stored in the meta box in response to the storage of the association information as an item Item #201 in the mdat box is different from that in a case of the normal collection file in Fig. 9. In the second association-type collection file, metadata of the association information as the item Item #201 is stored in the meta box.

Specifically, in the second association-type collection file, the number of items stored in the iinf box and the iloc box is 5, which is obtained from 4 in the case of Fig. 9 by adding 1 of the item Item #201 to 4. Moreover, an infe box for the item Item #201 is added to the iinf box, and an offset to a storage location and a size of the item Item #201 are added to the iloc box. The infe box for the item Item #201 stores the item ID #201 of the item Item #201 and an item type identifying data info (IDIF) indicating that the item Item #201 is association information. The IDIF is a newly defined attribute value (field value) indicating that the item is the association information.

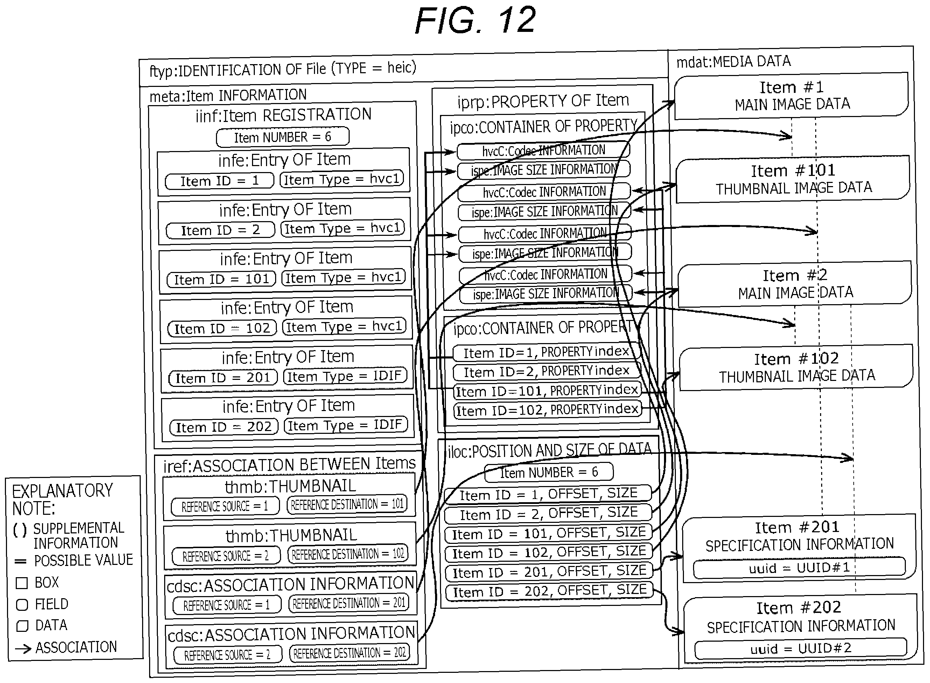

Fig. 12 is a view illustrating an example of a third association-type collection file.

In the third association-type collection file, a main image and specification information of a RAW file are stored in association with each other, by storing the specification information of the RAW file as external data into the mdat box as an item for every piece of the specification information, and storing, into a meta box, association information associating the main image as the internal data with the specification information of the RAW file as the external data. However, in the third association-type collection file, the association information is information in which an item ID of the main image as an item is correlated with an item ID of the specification information (of the RAW file) as an item, and is stored in the cdsc box stored in the iref box in the meta box.

The cdsc box can store a reference source and a reference destination as information for associating the main image with items as individual pieces of the specification information in the RAW file of the main image in correlation with each other. In the cdsc box, the reference source represents the item ID of the main image, and the reference destination represents the item ID of the specification information as an item of the RAW file of the main image specified by the item ID of the reference source.

In Fig. 12, the UUID #1 that is the uuid as the specification information of the RAW file of the main image Item #1 is stored in the mdat box as the item Item #201, and the UUID #2 that is the uuid as specification information of the RAW file of the main image Item #2 is stored as an item Item #202 in the mdat box. Moreover, the iref box stores a cdsc box storing association information in which the item ID #1 of the main image Item #1 and the item ID #201 of the specification information UUID #1 are correlated with each other respectively as the reference source and the reference destination, and the iref box stores a cdsc box storing association information in which the item ID #2 of the main image Item #2 and the item ID #202 of the specification information UUID #2 are correlated with each other respectively as the reference source and the reference destination.

### <Sequence file>

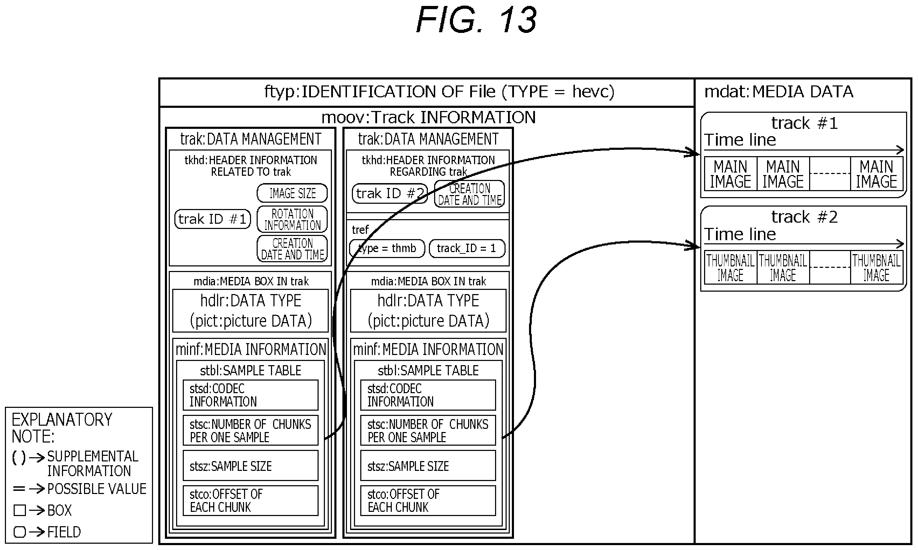

Fig. 13 is a view illustrating an example of a normal sequence file in which a track of a main image and a track of a thumbnail image of the main image are stored.

Here, the normal sequence means a sequence file in which internal data in the sequence file is not associated with specification information of external data.

Now, it is assumed that a frame is encoded by HEVC and stored in the mdat box of the sequence file.

The ftyp box stores, as identification information for identifying a file format, hevc indicating that the format is the image sequence format and that the codec is HEVC.

The moov box stores, as described in Fig. 7, the trak box that manages each track stored in the mdat box. In Fig. 13, the mdat box stores a track (hereinafter, also described as a track #1) of a main image specified by the track ID #1 and a track #2 of a thumbnail image of the main image specified by the track #1. Therefore, in the moov box, the trak box that manages the track #1 and the trak box that manages the track #2 are stored. (A frame of) an n-th thumbnail image (from the head) of the track #2 is a thumbnail image of an n-th main image of the track #1.

For example, in a case where continuous shooting is performed by the digital camera 10, the sequence file is useful in a case where main images and thumbnail images of a plurality of frames obtained by the continuous shooting are recorded as one track, or the like.

The tkhd box of the trak box that manages the track #1 of the main image stores: a track ID #1 specifying the track #1; an image size of a main image constituting the track #1; rotation information indicating an orientation of the digital camera 10 when the main image is captured; and a creation date and time of the track #1. In the tkhd box of the trak box that manages the track #2 of the thumbnail image, the track ID #2 specifying the track #2 and the creation date and time of the track #2 are stored.

In the trak box, in addition to the tkhd box and the mdia box described in Fig. 7, a tref box can be stored. The tref box stores a track ID for specifying another track related to a track managed by the trak box in which the tref box is stored, information indicating contents of the track, and the like. In Fig. 13, the tref box is provided in the trak box that manages the track #2. Then, the tref box stores information indicating that another track related to the track #2 is the track #1 (track_ID = 1), and that data constituting the track #2 is a thumbnail image (the track #2 is a track of a thumbnail image) (type = thmb).

In the mdia box of the trak box, in addition to the minf box described in Fig. 8, an hdlr box can be stored. The hdlr box stores information indicating a type of data constituting a track managed by the trak box in which the hdlr box is stored. In the hdlr box stored (in the mdia box stored) in the trak box that manages the track #1 of the main image, information (pict) indicating that data constituting the track #1 is a picture (frame) is stored. In the hdlr box stored in the trak box that manages the track #2 of the thumbnail image, information indicating that data constituting the track #2 is a picture is stored.

The minf box is as described in Fig. 8.

Hereinafter, an association-type sequence file in which internal data and specification information of external data are stored in association with each other in the normal sequence file of Fig. 13 will be described.

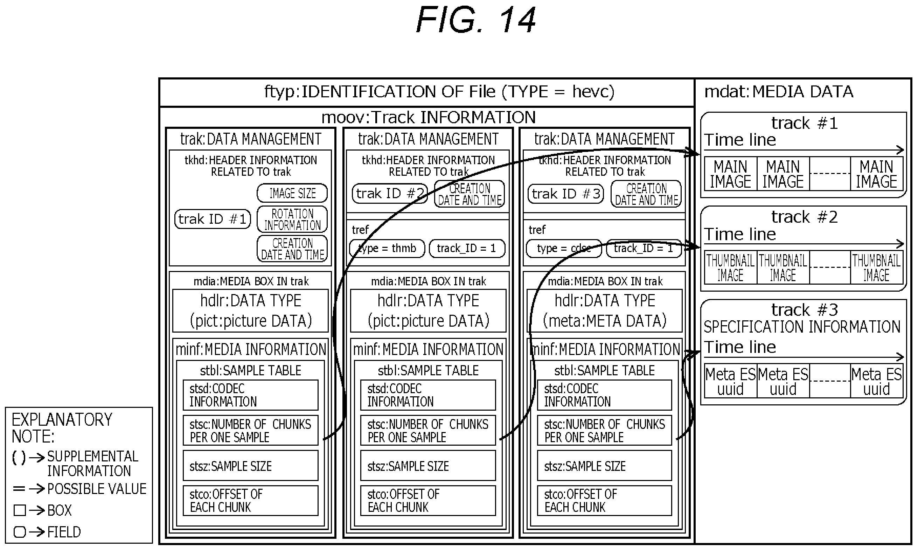

Fig. 14 is a view illustrating an example of an association-type sequence file.

In the association-type sequence file, a track #3 of a (elementary) stream (Meta ES) of a uuid as specification information of a RAW file as external data is added to the mdat box, and a trak box that manages the track #3 is added to the moov box.

Here, the track #1 is a time series of one or more frames of the main image aligned on a timeline, and the track #3 is a time series of a uuid of a RAW file of each frame of the main image aligned on the timeline.

An n-th uuid (from the head) of the track #3 is specification information of a RAW file of a frame of an n-th main image of the track #1. Furthermore, (data of) a plurality of tracks stored in the mdat box can be synchronously reproduced in accordance with time information on one timeline. Therefore, by storing, into the mdat box, the track #1 of the main image and the track #3 of (a stream of) the uuid of the RAW file of each frame of the main image constituting the track #1, the frame of the n-th main image of the track #1 and the uuid of the RAW file of (the frame of) the main image are stored in association with each other. In this case, it can be said that the frame of the main image of the track #1 and the uuid of the RAW file of (the frame of) the main image are associated with each other by the time information on the timeline.

Note that the n-th uuid (from the head) of the track #3 is specification information of the RAW file of the n-th frame of the track #1, and it can also be understood that (the frame of) the main image constituting the track #1 and the uuid constituting the track #3 are associated with each other in accordance with the order of arrangement in the track.

In the association-type sequence file, in response to the addition of the track #3 of the uuid of the RAW file to the mdat box, a trak box that manages the track #3 is added to the moov box.

In the trak box that manages the track #3 of the uuid of the RAW file, a tkhd box, a tref box, an mdia box, and the like are stored.

In the tkhd box of the trak box that manages the track #3, the track ID #3 specifying the track #3 and a creation date and time of the track #3 are stored.

The tref box of the trak box that manages the track #3 stores a track ID for specifying another track related to the track #3 managed by the trak box in which the tref box is stored, and information or the like indicating contents of the track #3. The uuid constituting the track #3 is specification information of the RAW file of the main image constituting the track #1. Since the track #3 is related to the track #1, the tref box of the trak box to manage the track #3 in Fig. 14 stores information indicating that another track related to the track #3 is the track #1 (track_ID = 1) and that the track #3 is a track of metadata (here, specification information) (type = cdsc).

In the mdia box of the trak box that manages the track #3, an hdlr box and an minf box are stored. In the trak box that manages the track #3, the hdlr box stores information indicating that data constituting the track #3 is metadata (of the main image), and the minf box stores an stsc box, an stsc box, an stsz box, and an stco box for the track #3.

### <Generation and reproduction of HEIF file>

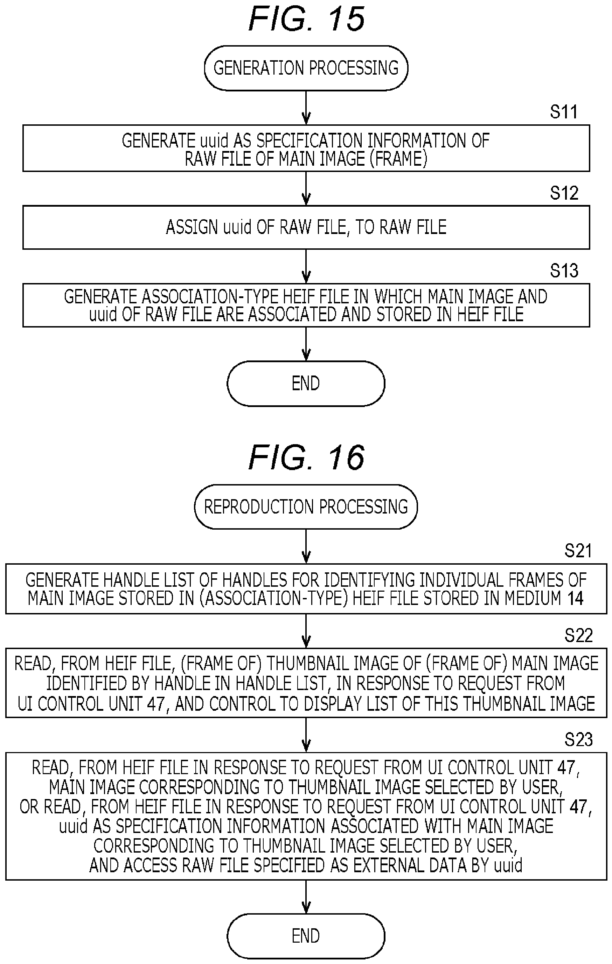

Fig. 15 is a flowchart for explaining an outline of an example of generation processing of generating an association-type HEIF file.

In the generation processing, in step S11, the file control unit 43 generates a uuid as specification information of a RAW file (RAW image) of a frame of a main image, and the process proceeds to step S12.

In step S12, the file control unit 43 assigns the uuid generated in step S11 to the RAW file (RAW image) of the frame of the main image, and the process proceeds to step S13.

In step S13, the file control unit 43 generates an association-type HEIF file in which the frame of the main image and the uuid of the RAW file of the frame are stored in association with each other in the HEIF file, and the generation processing ends.

Fig. 16 is a flowchart for explaining an outline of an example of reproduction processing of reproducing an association-type HEIF file.

In the reproduction processing, in step S21, the file control unit 43 generates, for example, a handle list of handles for identifying individual frames of the main image stored in the HEIF file stored in the medium 14, and the process proceeds to step S22.

Here, the handle of the frame of the main image includes a file name of the HEIF file in which the frame is stored. Moreover, the handle of the frame (item) of the main image stored in the collection file further includes an item ID of the frame. Moreover, the handle of the frame of the main image stored in the sequence file further includes time information of the frame. According to the handle of the frame of the main image, the frame for the handle can be uniquely identified (specified).

Note that, the handle of the frame of the main image stored in the sequence file can include, instead of the time information of the frame, a track ID of a track including the frame and the order (what number the frame is) of the frame in the track.

Regardless of whether one or a plurality of tracks including the frame of the main image is stored in the sequence file, time information of each frame is unique. Therefore, according to the time information of the frame, even if a plurality of tracks is stored in the sequence file, the frame of the time information included in the handle can be uniquely specified from the frame constituting each of the plurality of tracks. Therefore, in a case where the time information of the frame is included in the handle of the frame of the main image, the frame corresponding to the time information can be uniquely specified even if there is no track ID of the track in which the frame exists.

The handle list can be generated for all the frames of the main image stored in the HEIF file stored in the medium 14, or can also be generated only for a frame narrowed down under a specific condition, such as a frame of a specific creation date and time.

After generating the handle list, the file control unit 43 accesses the HEIF file with reference to the handle list, as necessary.

In step S22, for example, after waiting for an operation and the like by the user on the digital camera 10 to display a thumbnail image, the UI control unit 47 requests the file control unit 43 to display the thumbnail image. In response to the request for display of the thumbnail image from the UI control unit 47, the file control unit 43 reads, from the HEIF file, (the frame of) the thumbnail image of the frame of the main image identified by the handle of the handle list. Then, the file control unit 43 causes, for example, the liquid crystal panel 19 (Fig. 1) to display a list of thumbnail images read from the HEIF file, and the process proceeds from step S22 to step S23.

In step S23, for example, after waiting for selection or the like by the user on (a frame of) a desired thumbnail from the list of thumbnail images, the UI control unit 47 requests the file control unit 43 for transmitting a main image corresponding to the thumbnail image selected by the user. The file control unit 43 reads the main image from the HEIF file in response to the request for the main image from the UI control unit 47. The file control unit 43 can cause the liquid crystal panel 19 to display the main image read from the HEIF file, as necessary.

Alternatively, the UI control unit 47 requests the file control unit 43 for the uuid of the RAW file of the main image corresponding to the thumbnail image selected by the user. In response to the uuid request from the UI control unit 47, the file control unit 43 reads the uuid from the association-type HEIF file. The file control unit 43 can access the RAW file specified by the uuid read from the association-type HEIF file, as necessary.

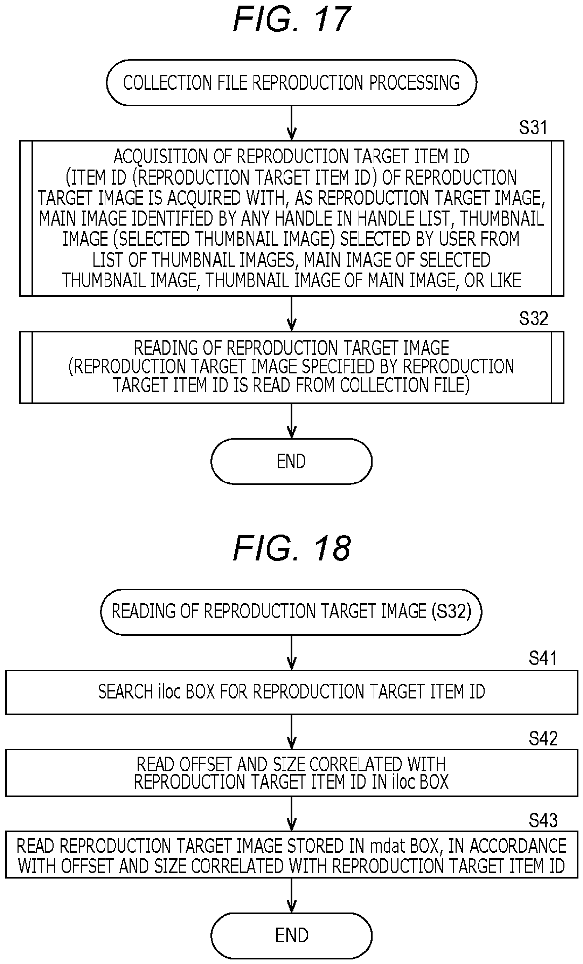

Fig. 17 is a flowchart for explaining an example of reproduction processing of reproducing a collection file.

In step S31, the file control unit 43 acquires an item ID (hereinafter, also referred to as a reproduction target item ID) of a reproduction target image, which is an image (item) to be reproduced, and the process proceeds to step S32.

In the acquisition of the reproduction target item ID, the item ID (reproduction target item ID) of the reproduction target image is acquired with, as the reproduction target image, for example, a main image identified by any handle in the handle list, a thumbnail image of the main image, a thumbnail image (hereinafter, also referred to as a selected thumbnail image) selected by the user from the list of thumbnail images, a main image of the selected thumbnail image, or the like.

In step S32, the file control unit 43 reads the reproduction target image in accordance with the reproduction target item ID acquired in step S31.

In the reading of the reproduction target image, the reproduction target image specified by the reproduction target item ID is read from the collection file.

Fig. 18 is a flowchart for explaining an example of processing of reading the reproduction target image in step S32 of Fig. 17.

In step S41, the file control unit 43 searches the iloc box of the collection file (Figs. 9 to 12) for the reproduction target item ID, and the process proceeds to step S42.

In step S42, the file control unit 43 reads an offset and a size correlated with the reproduction target item ID searched for in step S41 in the iloc box, and the process proceeds to step S43.

In step S43, the file control unit 43 reads the reproduction target image stored in the mdat box of the collection file in accordance with the offset and the size correlated with the reproduction target item ID, and the process ends.

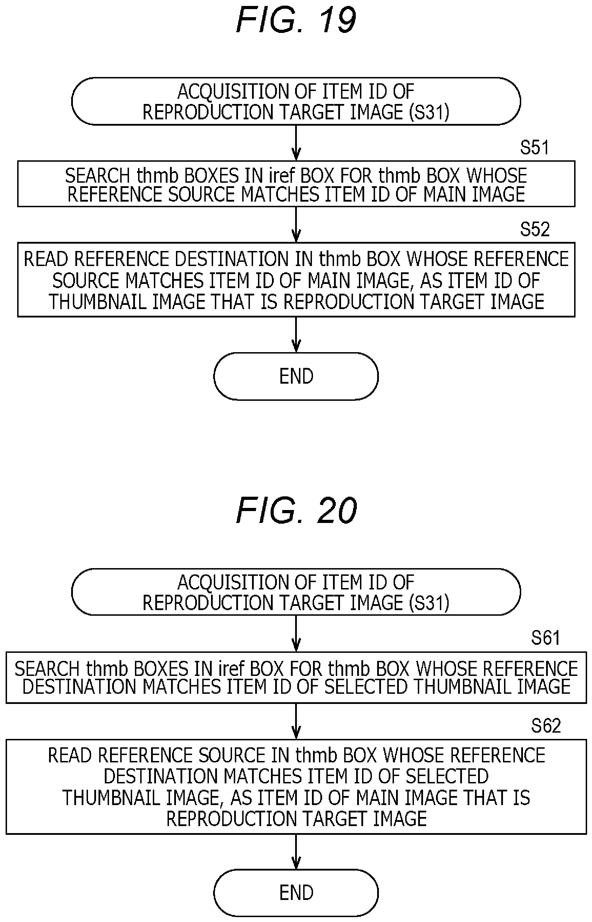

Fig. 19 is a flowchart for explaining a first example of processing of acquiring the reproduction target item ID in step S31 in Fig. 17.

That is, Fig. 19 illustrates an example of acquiring an item ID of a thumbnail image that is the reproduction target image, with the thumbnail image as the reproduction target image.

Note that, in Fig. 19, it is assumed that the file control unit 43 has recognized an item ID of a main image of the thumbnail image as the reproduction target image, for example, from the handle.

In step S51, the file control unit 43 searches the thmb boxes in the iref box of the collection file (Figs. 9 to 12) for a thmb box whose reference source matches the item ID of the main image, and the process proceeds to step S52.

In step S52, as the item ID of the thumbnail image as the reproduction target image, the file control unit 43 reads the reference destination in the thmb box searched for in step S51 and has the reference source matching the item ID of the main image, and the process ends.

Fig. 20 is a flowchart for explaining a second example of the processing of acquiring the reproduction target item ID in step S31 in Fig. 17.

That is, Fig. 20 illustrates an example of acquiring an item ID of a main image that is the reproduction target image, with the main image as the reproduction target image.

Note that, in Fig. 20, for example, it is assumed that the user has selected a thumbnail image (selected thumbnail image) from the list of thumbnail images, and the file control unit 43 has recognized the item ID of the selected thumbnail image.

In step S61, the file control unit 43 searches the thmb boxes in the iref box of the collection file (Figs. 9 to 12) for a thmb box whose reference destination matches the item ID of the selected thumbnail image, and the process proceeds to step S62.

In step S62, as the item ID of the main image as the reproduction target image, the file control unit 43 reads a reference source in the thmb box searched for in step S61 and has the reference destination matching the item ID of the selected thumbnail image, and the process ends.

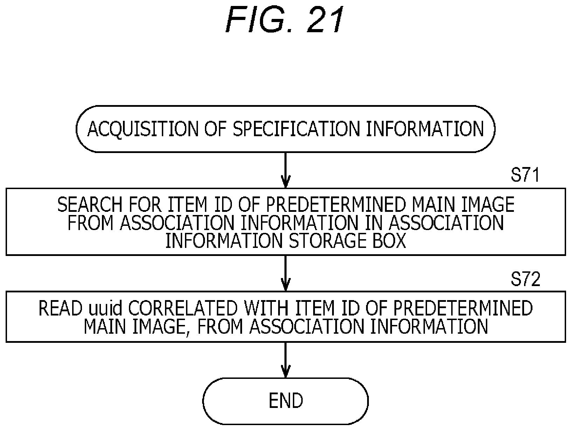

Fig. 21 is a flowchart for explaining an example of processing of acquiring a uuid as specification information of a RAW file of a predetermined main image from the first association-type collection file in Fig. 10.

Note that, in Fig. 21, for example, it is assumed that the file control unit 43 has recognized the item ID of a predetermined main image by a handle list or the like.

In step S71, the file control unit 43 searches for the item ID of the predetermined main image from association information in the association information storage box of the first association-type collection file (Fig. 10), and the process proceeds to step S72.

In step S72, the file control unit 43 reads a uuid correlated with the item ID of the predetermined main image searched for in step S71 in the association information, and the process ends.

The file control unit 43 can access the RAW file of the predetermined main image by the uuid read as described above.

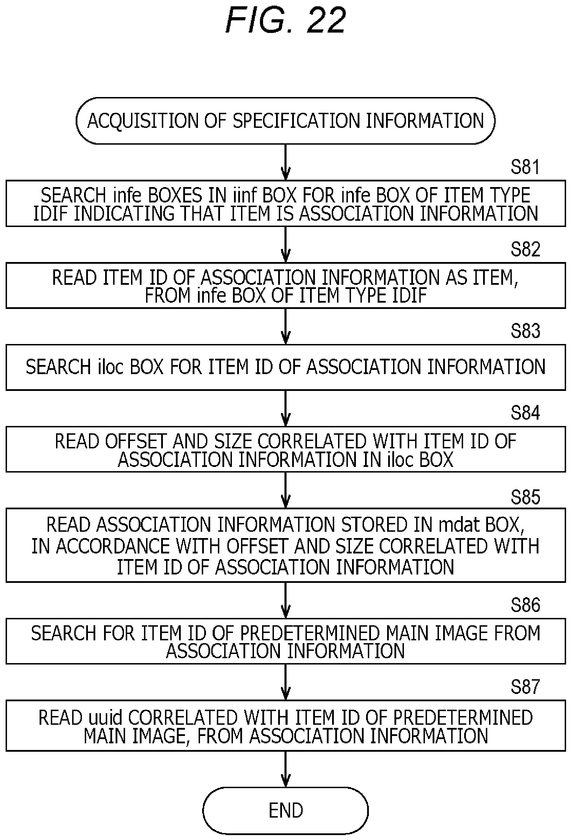

Fig. 22 is a flowchart for explaining an example of processing of acquiring a uuid as specification information of a RAW file of a predetermined main image from the second association-type collection file in Fig. 11.

Note that, in Fig. 22, for example, it is assumed that the file control unit 43 has recognized the item ID of the predetermined main image by a handle list or the like.

In step S81, the file control unit 43 searches the infe boxes in the iinf box of the second association-type collection file (Fig. 11) for an infe box of an item type IDIF indicating that the item is the association information, and the process proceeds to step S82.

In step S82, the file control unit 43 reads the item ID of the association information as an item from the infe box of the item type IDIF searched for in step S81, and the process proceeds to step S83.

In step S83, the file control unit 43 searches the iloc box of the second association-type collection file for the item ID of the association information read in step S82, and the process proceeds to step S84.

In step S84, the file control unit 43 reads an offset and a size correlated with the item ID of the association information searched for in step S83 in the iloc box, and the process proceeds to step S85.

In step S85, in accordance with the offset and the size correlated with the item ID of the association information read in step S84, the file control unit 43 reads the association information as an item stored in the mdat box of the second association-type collection file, and the process proceeds to step S86.

In step S86, the file control unit 43 searches for the item ID of the predetermined main image from the association information read in step S85, and the process proceeds to step S87.

In step S87, the file control unit 43 reads the uuid correlated with the item ID of the predetermined main image searched for in step S86 in the association information, and the process ends.

The file control unit 43 can access the RAW file of the predetermined main image by the uuid read as described above.

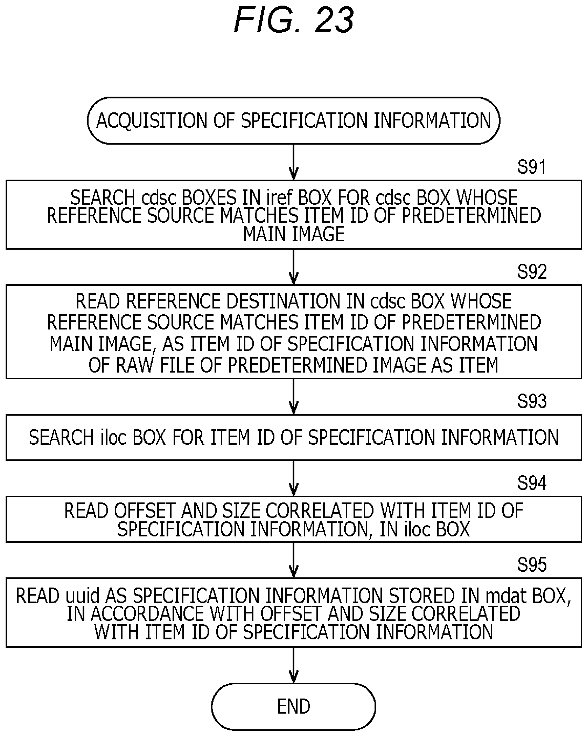

Fig. 23 is a flowchart for explaining an example of processing of acquiring a uuid as specification information of a RAW file of a predetermined main image from the third association-type collection file in Fig. 12.

Note that, in Fig. 23, for example, it is assumed that the file control unit 43 has recognized the item ID of the predetermined main image by a handle list or the like.

In step S91, the file control unit 43 searches the cdsc boxes in the iref box of the third association-type collection file (Fig. 12) for a cdsc box whose reference source matches the item ID of the predetermined main image, and the process proceeds to step S92.

In step S92, as an item ID of specification information of the RAW file of the predetermined main image as an item, the file control unit 43 reads the reference destination in the cdsc box searched for in step S91 and has the reference source matching the item ID of the predetermined main image, and the process proceeds to step S93.

In step S93, the file control unit 43 searches the iloc box of the third association-type collection file for the item ID of the specification information as an item read in step S92, and the process proceeds to step S94.

In step S94, the file control unit 43 reads an offset and a size correlated with the item ID of the specification information searched for in step S93 in the iloc box, and the process proceeds to step S95.

In step S95, in accordance with the offset and the size correlated with the item ID of the specification information read in step S94, the file control unit 43 reads a uuid as specification information of the RAW file of the predetermined main image stored in the mdat box of the third association-type collection file, and the process ends.

The file control unit 43 can access the RAW file of the predetermined main image by the uuid read as described above.

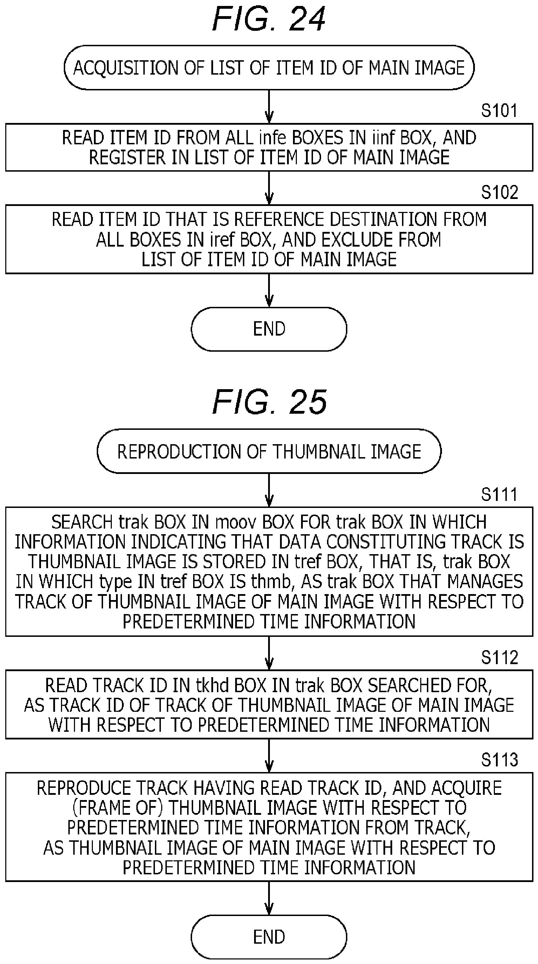

Fig. 24 is a flowchart for explaining an example of processing of acquiring a list of item IDs of a main image from a collection file.

The processing of acquiring the list of the item IDs of the main image from the collection file is performed, for example, in a case where a handle list is generated, and the like.

In step S101, the file control unit 43 reads the item IDs from all the infe boxes in the iinf box of the collection file (Figs. 9 to 12) and registers in the list of item IDs of the main image (hereinafter, also referred to as a main image list), and the process proceeds to step S102.

In step S102, the file control unit 43 reads the item ID that is a reference destination from all the boxes in the iref box of the collection file, excludes the item ID from the main image list, and the process ends.

After the above processing, the item ID registered in the main image list becomes the item ID of the main image.

Fig. 25 is a flowchart for explaining an example of processing of reproducing a thumbnail image of (a frame of) a main image with respect to predetermined time information, from a sequence file.

Note that, in Fig. 25, for example, it is assumed that the file control unit 43 has recognized time information (or order) of the predetermined main image by a handle list or the like.

In step S111, as a trak box that manages a track of a thumbnail image of a main image with respect to predetermined time information, the file control unit 43 searches the trak box in the moov box of the sequence file (Figs. 13 and 14) for a trak box in which information indicating that data constituting the track is a thumbnail image is stored in the tref box, that is, a trak box in which the type in the tref box is thmb, and the process proceeds to step S112.

In step S112, the file control unit 43 reads a track ID in the tkhd box in the trak box searched for in step S111 as the track ID of the track of the thumbnail image of the main image with respect to the predetermined time information, and the process proceeds to step S113.

In step S113, the file control unit 43 reproduces a track having the track ID read in step S112, and acquires (a frame of) a thumbnail image corresponding to predetermined time information (or order) from the track as the thumbnail image of the main image corresponding to the predetermined time information, and the process ends.

Note that the processing of reproducing the track of the image stored in the sequence file is similar to the processing of reproducing a moving image of an MP4 file.

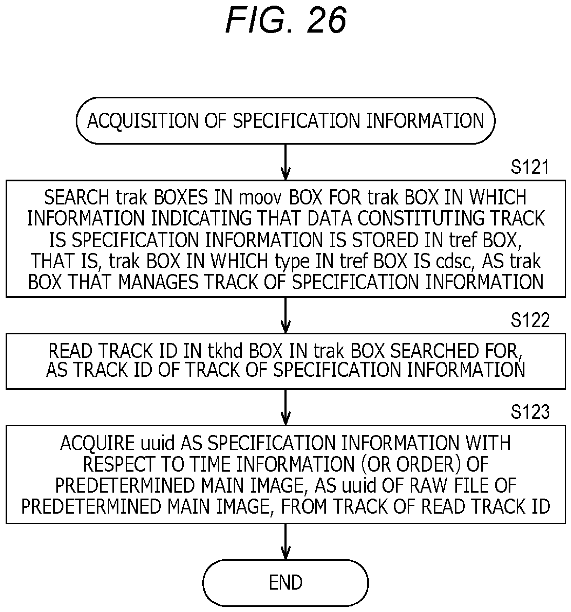

Fig. 26 is a flowchart for explaining an example of processing of acquiring a uuid as specification information of a RAW file of (a frame of) a predetermined main image, from an association-type sequence file.

Note that, in Fig. 26, for example, it is assumed that the file control unit 43 has recognized time information (or order) of the predetermined main image by a handle list or the like.

In step S121, the file control unit 43 searches the trak boxes in the moov box of the association-type sequence file (Fig. 14) for a trak box in which information indicating that data constituting a track is specification information is stored in the tref box, that is, a trak box in which a type in the tref box is cdsc, as a trak box that manages a track of specification information, and the process proceeds to step S122.

In step S122, the file control unit 43 reads the track ID in the tkhd box in the trak box searched for in step S121 as the track ID of the track of the specification information, and the process proceeds to step S123.

In step S123, from a track having the track ID read in step S122, the file control unit 43 acquires a uuid as specification information with respect to time information (or order) of the predetermined main image, as a uuid of a RAW file of the predetermined main image, and the process ends.

The file control unit 43 can access the RAW file of the predetermined main image by the uuid acquired as described above.

As described above, the file control unit 43 generates and reproduces an association-type HEIF file storing, in association with each other in a HEIF file conforming to HEIF, a main image in the HEIF file and specification information specifying external data that is outside the HEIF file and is to be associated with the main image. Therefore, the main image stored in the HEIF file can be associated with external data outside the HEIF file.

Furthermore, in a case where a uuid is used as the specification information, even if a file name of the external data is changed, association between the main image in the HEIF file and the external data with the changed file name can be maintained by the uuid.

### <Storage of specification information assigned to external data>

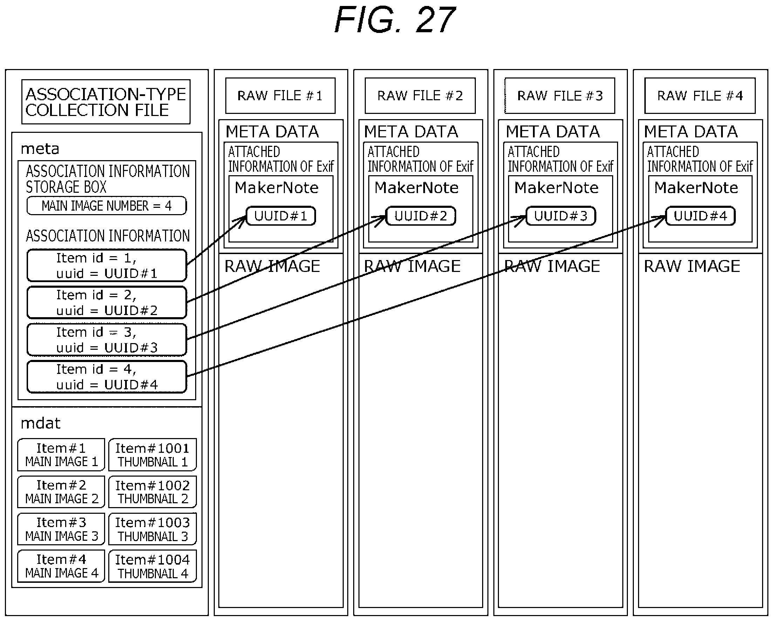

Fig. 27 is a view illustrating an example of storing a uuid into a RAW file in a case of adopting a RAW file of a main image as (a file storing) external data and generating an association-type collection file.

Note that, in Fig. 27, the first association-type collection file is adopted as the association-type collection file.

The RAW file has an area called a marker note (MakerNote) as a partial area of an area for storing attached information of Exif as metadata.

The file control unit 43 can store the uuid assigned to the RAW file (RAW image) into, for example, the marker note of the RAW file.

In Fig. 27, main images Item #1, Item #2, Item #3, and Item #4 as four items are stored in the association-type collection file, and RAW files #1, #2, #3, and #4 storing RAW images of the main images Item #1, Item #2, Item #3, and Item #4 are generated. Then, a UUID #i is assigned to a RAW file #i (RAW image), and the association information storage box stores, as association information associating the main image Item #i with the UUID #i of the RAW file #i of the main image Item #i, association information in which an item ID #i specifying the main image Item #i is correlated with the UUID #i of the RAW file #i to be associated with the main image Item #i.

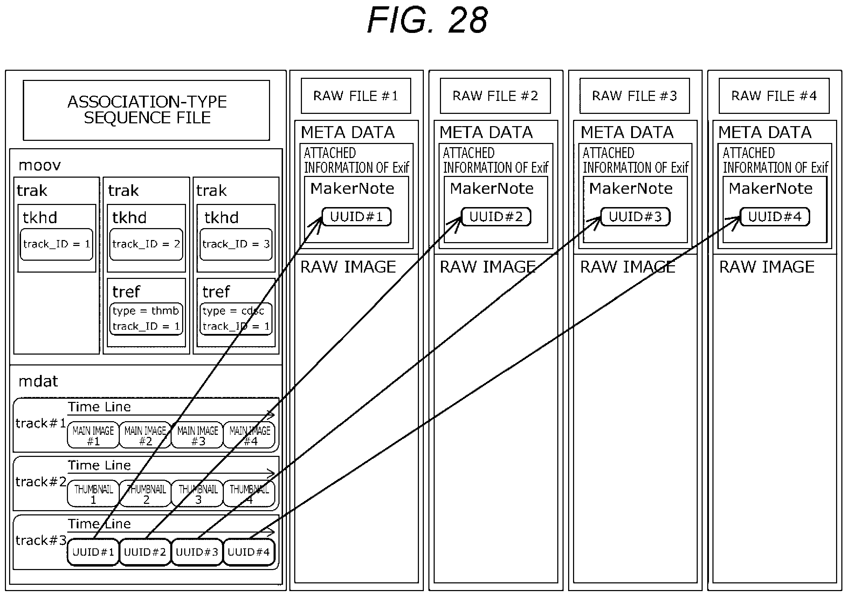

Fig. 28 is a view illustrating an example of storing a uuid into a RAW file in a case of adopting a RAW file of a main image as external data and generating an association-type sequence file.

Also in a case of generating the association-type sequence file, similarly to the case of generating the association-type collection file described in Fig. 27, the file control unit 43 can store the uuid assigned to the RAW file into the marker note of the RAW file.

In Fig. 28, a track #1 including main images #1, #2, #3, and #4 as four frames is stored in the association-type sequence file, and RAW files #1, #2, #3, and #4 storing RAW images of the main images #1, #2, #3, and #4 are generated. Then, the UUID #i is assigned to the RAW file #i, and the association-type sequence file stores the track #3 configured such that the UUID #i of the RAW file #i is arranged so as to have the same time information as a main image #i corresponding to the RAW file #i (RAW image).

As described above, when the track #3 is configured such that the UUID #i of the RAW file #i is arranged so as to have the same time information as the main image #i corresponding to the RAW file #i, the i-th main image #i of the track #1 and the i-th UUID #i of the track #3, that is, the UUID #i of the RAW file #i of the main image #i are associated and stored in the association-type sequence file.

In the above description, the RAW file (RAW image) of the main image is adopted as the external data, but other data can be adopted as the external data. As the external data, for example, audio (sound) or the like recorded together with imaging of the main image can be adopted. As a file to store audio, for example, a WAV file in a WAV format, an MP4 file in an MP4 format, or the like can be adopted. Hereinafter, for example, it is assumed that a WAV file is adopted as the file storing the audio.

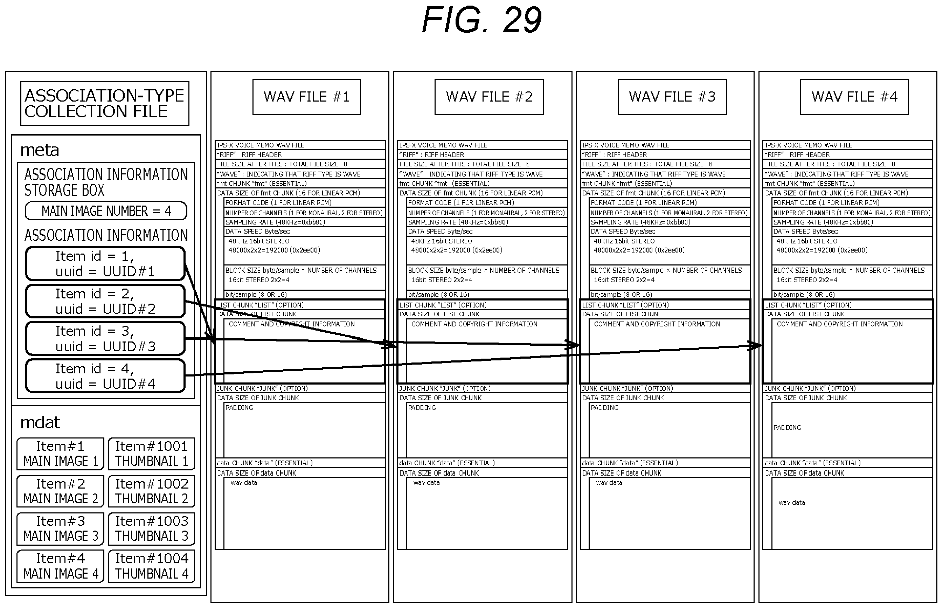

Fig. 29 is a view illustrating an example of storing a uuid into a WAV file in a case of adopting a WAV file of a main image as (a file storing) external data and generating an association-type collection file.

Note that, in Fig. 29, the first association-type collection file is adopted as the association-type collection file.

The WAV file has an area called a List chunk as a partial area of an area in which metadata is described.

The file control unit 43 can store the uuid assigned to the WAV file (audio) into, for example, the List chunk of the WAV file.

In Fig. 29, the main images Item #1, Item #2, Item #3, and Item #4 as four items are stored in the association-type collection file, and WAV files #1, #2, #3, and #4 of the main images Item #1, Item #2, Item #3, and Item #4 are generated. Then, the UUID #i is assigned to a WAV file #i (audio), and the association information storage box stores, as association information for associating the main image Item #i with the UUID #i of the WAV file #i of the main image Item #i, association information in which the item ID #i specifying the main image Item #i is correlated with the UUID #i of the WAV file #i to be associated with the main image Item #i.

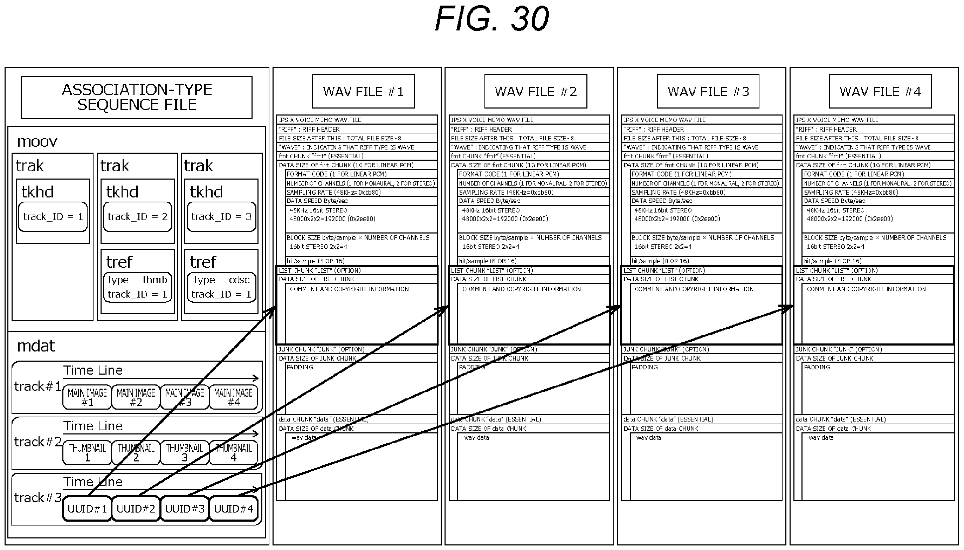

Fig. 30 is a view illustrating an example of storing a uuid into a WAV file in a case of adopting a WAV file of a main image as external data and generating an association-type sequence file.

Also in a case of generating the association-type sequence file, similarly to the case of generating the association-type collection file described in Fig. 29, the file control unit 43 can store the uuid assigned to the WAV file into the List chunk of the WAV file.

In Fig. 30, a track #1 including main images #1, #2, #3, and #4 as four frames is stored in the association-type sequence file, and WAV files #1, #2, #3, and #4 of the main images #1, #2, #3, and #4 are generated. Then, the UUID #i is assigned to the WAV file #i, and the association-type sequence file stores the track #3 configured such that the UUID #i of the WAV file #i is arranged so as to have the same time information as the main image #i corresponding to the WAV file #i.

As described above, when the track #3 is configured with the UUID #i of the WAV file #i arranged so as to have the same time information as the main image #i corresponding to the WAV file #i, the i-th main image #i of the track #1 and the i-th UUID #i of the track #3, that is, the UUID #i of the WAV file #i of the main image #i are associated and stored in the association-type sequence file.

Note that, in addition to the HEIF file, the present technology can be applied to, for example, an ISO base media file, an MP4 file, a Miaf file, and the like having a box structure, other than the HEIF file.

Furthermore, the present technology can be applied to, for example, a file or the like that stores an image (main image) having no box structure and another image in which the resolution of the image is reduced.

Moreover, the present technology can be applied to a case where the external data is associated with a screen nail image or a thumbnail image in the HEIF file, in addition to a case where the external data is associated with a main image in the HEIF file.

Furthermore, the present technology can be applied, for example, to a case where external data is associated with internal data other than an image such as a main image in a HEIF file.

### <Association between image as internal data and external data after generation of HEIF file>

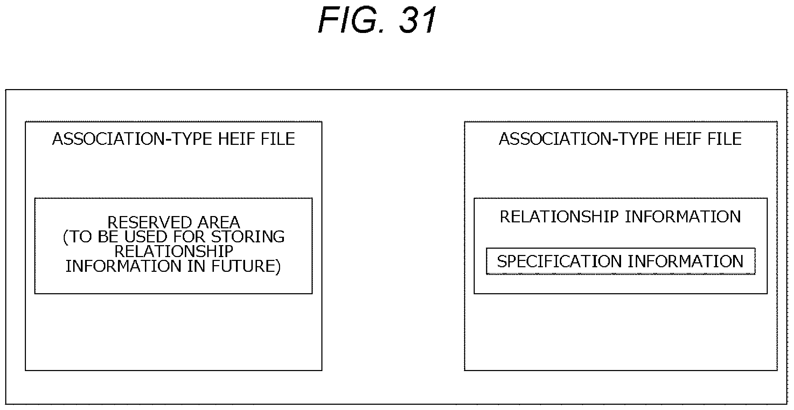

Fig. 31 is a view for explaining association between an image as internal data and external data after generation of a HEIF file.

In a case where there is external data to be associated with an image (main image) as internal data stored in the HEIF file at the time of generating the HEIF file, by storing the image as the internal data and specification information of the external data in association with each other in the HEIF file, an association-type HEIF file can be generated.

However, in a case where there is no external data desired to be associated with the image as the internal data at the time of generating the HEIF file, but external data is generated after the generation of the HEIF file and it is desired to associate the image as the internal data with the external data, it is necessary to store relationship information related to association between the image as the internal data and specification information of the external data into the HEIF file after the generation of the HEIF file, to generate the association-type HEIF file. Furthermore, even in a case where external data exists at the time of generating the HEIF file, it may be desired to associate the image as the internal data with the existing external data after the generation of the HEIF file. Also in this case, after the generation of the HEIF file, it is necessary to store the relationship information into the HEIF file to generate the association-type HEIF file.

Note that, as a case where external data is generated after generation of the HEIF file and it is desired to associate the image as the internal data with the external data, for example, there is a case where it is desired to add a comment by audio or text as external data to an image captured by the digital camera 10, and the like. As a case where it is desired to associate the image as the internal data with the existing external data after generation of the HEIF file, for example, there is a case where it is desired to add back ground music (BGM) as external data to an image captured by the digital camera 10, and the like.

Here, as described above, the relationship information is information related to the association between the image as the internal data and the specification information of the external data. As the relationship information, for example, there is association information stored in the association information storage box of the first association-type collection file (Fig. 10). Moreover, as the relationship information, for example, there are association information as the item Item #201 stored in the mdat box of the second association-type collection file (Fig. 11), the infe box for the item Item #201 stored in the iinf box of the meta box, an offset to a storage location of the item Item #201 stored in the iloc box of the meta box, and the like. Furthermore, as the relationship information, for example, there are specification information as an item stored in the mdat box in the third association-type collection file (Fig. 12), and association information in which an item ID of a main image as an item stored in the cdsc box of the iref box of the meta box is correlated with an item ID of specification information as an item. Moreover, as the relationship information, for example, there are the track #3 of the specification information stored in the mdat box of the association-type sequence file (Fig. 14), and a trak box that is stored in the moov box and manages the track #3 of the specification information.

As described above, in a case of associating the image as the internal data with the external data after generation of the HEIF file, it is necessary to store the relationship information into the HEIF file. In this case, when no measure for storing the relationship information is taken, an offset of data stored in the mdat box may be shifted in storing the relationship information into the HEIF file.

In a case where the offset of the data stored in the mdat box is shifted, it is necessary to calculate an offset shift amount for each piece of the data stored in the mdat box, and rewrite the iloc box with an offset reflecting the shift amount, which increases a load of the association processing of associating the image as the internal data with the external data.

As a method of preventing the offset shift of the data stored in the mdat box as described above and accordingly the increase of the load of the association processing, for example, there are a method (hereinafter, also referred to as an area securing method) of generating, as an association-type HEIF file, a HEIF file in which a reserved area is secured storing relationship information related to association between the internal data and the specification information specifying the external data, and a method (hereinafter, also referred to as a pre-storage method) of generating, as an association-type HEIF file, a HEIF file storing relationship information including specification information before being assigned to external data.

In a case where external data is generated after generation of the HEIF file, when information generated at the time of generating (a file of) the external data, such as a URL or a file name, is used as the specification information, the specification information cannot be obtained when the HEIF file is generated. Therefore, it is possible to adopt the area securing method of generating the association-type HEIF file in which the reserved area storing the relationship information is secured so that relationship information including any specification information can be stored in the future. As the specification information generated at the time of generating the external data, in addition to a URL or a file name, for example, there are a hash value generated using the external data as an input, a track ID (track number) of a track in a case where the external data is data of a track stored in an MP4 file, and the like.

Furthermore, when information that can be generated before generation of the external data such as a UUID is used as the specification information, it is possible to adopt the pre-storage method of generating the specification information before being assigned to the external data in advance (before being assigned to the external data) at the time of generating the HEIF file, and generating an association-type HEIF file storing the relationship information including the specification information. It can also be said that the specification information before being assigned to the external data is specification information not assigned to the external data at the time of generation of the association-type HEIF file. Note that, in a case where the pre-storage method can be adopted, the area securing method can also be adopted.

By generating an association-type HEIF file with the area securing method or the pre-storage method, it is possible to prevent offset shift of data stored in the mdat box in a case where the association processing is performed after generation of the HEIF file. As a result, an increase of the load of the association processing can be prevented, and the image as the internal data can be easily associated with the external data.

Hereinafter, the area securing method and the pre-storage method will be described.

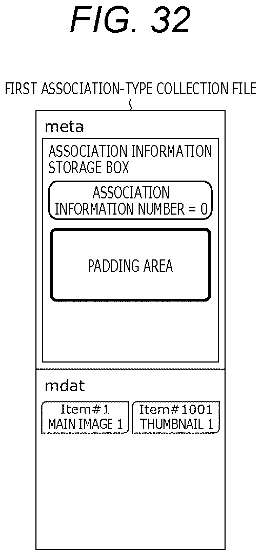

Fig. 32 is a view for explaining an outline of an example of the area securing method.

Note that, in Fig. 32, a first association-type collection file is assumed to be generated by the area securing method.

The file control unit 43 generates a first association-type collection file similar to that of the case of Fig. 10. In Fig. 32, a first association-type collection file is generated in which a main image of one frame and a thumbnail image of the main image are stored in the mdat box. Item IDs of the main image and the thumbnail image are an item ID #1 and an item ID #1001, respectively.

However, in the area securing method, in the association information storage box, the association information is not stored, but a padding area is secured as a reserved area for writing (storing (overwriting)) association information as the relationship information in the future.

Note that, in Fig. 32, the association information storage box is provided with an association information number in addition to the reserved area. The association information number represents the number of pieces of association information (here, each piece of information that associates a main image of one frame with one piece of specification information) stored in the association information storage box. In the area securing method, the association information number is set to 0 as an initial value upon generation of the first association-type collection file, and updated (rewritten) with the number of pieces of association information stored in the association information storage box in accordance with writing of the association information to the reserved area of the association information storage box.

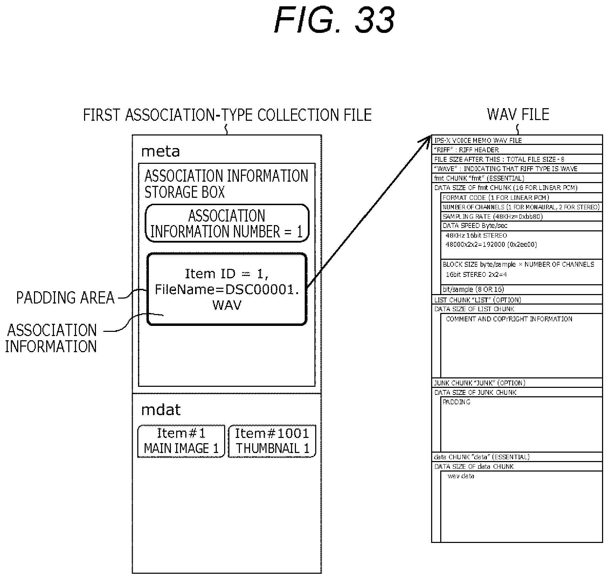

Fig. 33 is a view for explaining an example of association processing of associating external data and a main image as internal data in a first association-type collection file generated by the area securing method, after generation of the first association-type collection file.

Note that, in Fig. 33, it is assumed that, after generation of the first association-type collection file in Fig. 32, association processing is performed in which the main image (main image Item #1) of the item ID #1 in the first association-type collection file is associated with (audio stored in) a WAV file as the external data.

In the association processing, for the WAV file to be associated with the main image Item #1 in the first association-type collection file, the file control unit 43 acquires (recognizes) a file name (DSC00001.WAV) as specification information of (audio stored in) the WAV file, and generates association information in which the file name is correlated with the item ID #1 of the main image Item #1. Then, the file control unit 43 overwrites (a part of) the padding area in the association information storage box with the association information generated for the WAV file, and updates the association information number to a value (here, 1) obtained by incrementing a current value by 1.

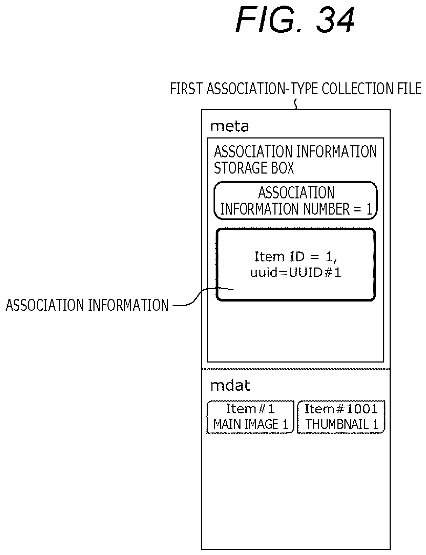

Fig. 34 is a view for explaining an outline of an example of the pre-storage method.

Note that, in Fig. 32, a first association-type collection file is assumed to be generated by the pre-storage method.

The file control unit 43 generates a first association-type collection file similar to that of the case of Fig. 10. In Fig. 34, similarly to Fig. 32, a first association-type collection file is generated in which one-frame main image Item #1 and the thumbnail image Item #1001 of the main image Item #1 are stored in the mdat box.

However, in this case, external data to be associated with the main image Item #1 in the first association-type collection file is not determined. Therefore, for (all or some) the main image Item #1 in the first association-type collection file, the file control unit 43 generates an association-type HEIF file storing relationship information including specification information that is before being assigned to the external data and is for specifying external data to be associated with the main image Item #1 in the future.

Specifically, the file control unit 43 generates in advance the UUID #1 that is a uuid as specification information specifying external data to be associated with the main image Item #1 in the future, that is, generates the UUID #1 in a state where the external data to which the UUID #1 is assigned is not determined, and generates association information in which the UUID #1 is correlated with the item ID #1 of the main image Item #1. Then, the file control unit 43 generates a first association-type collection file provided with an association information storage box storing association information in which the UUID #1 is correlated with the item ID #1 of the main image Item #1, and the association information number indicating the number of pieces of association information.

Note that, in Fig. 34, since one piece of association information in which the main image Item #1 is correlated with the UUID #1 is stored in the association information storage box, the association information number is 1.

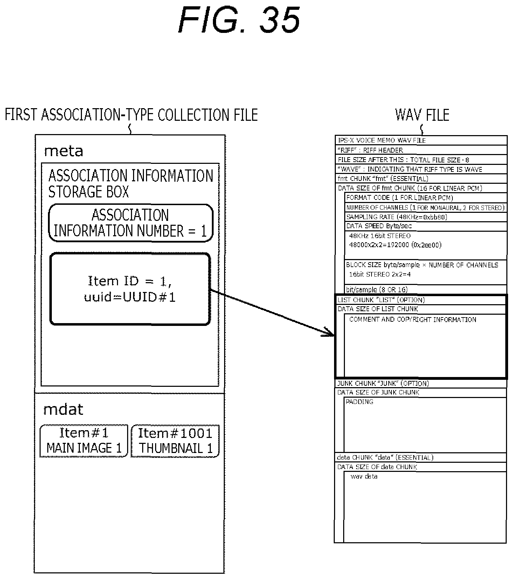

Fig. 35 is a view for explaining an example of association processing of associating external data and a main image as internal data in a first association-type collection file generated by the pre-storage method, after generation of the first association-type collection file.

Note that, in Fig. 35, association processing is assumed to be performed in which the main image Item #1 in the first association-type collection file is associated with the WAV file (audio) as the external data, after generation of the first association-type collection file in Fig. 34.

In the association processing, the file control unit 43 assigns the UUID #1, which is generated in advance for the main image Item #1 in the first association-type collection file and serves as specification information of external data to be associated with the main image Item #1, to a WAV file (audio) to be associated with the main image Item #1, and the file control unit 43 stores (writes) the UUID #1 assigned to the WAV file into, for example, a List chunk of the WAV file. As a result, the assignment of the UUID #1 to the WAV file is maintained (saved).

Note that, regarding the association information, assuming that the facts that the specification information included in the association information has been assigned and has not been assigned to the external data are respectively defined as valid and invalid, all the association information including the specification information generated in advance is invalid when the first association-type collection file is generated, in the pre-storage method. Then, when the specification information not assigned to the external data is assigned to the external data, the association information including the specification information is to be valid. In the pre-storage method, information indicating whether the association information is valid or invalid can be further stored in the association information storage box.

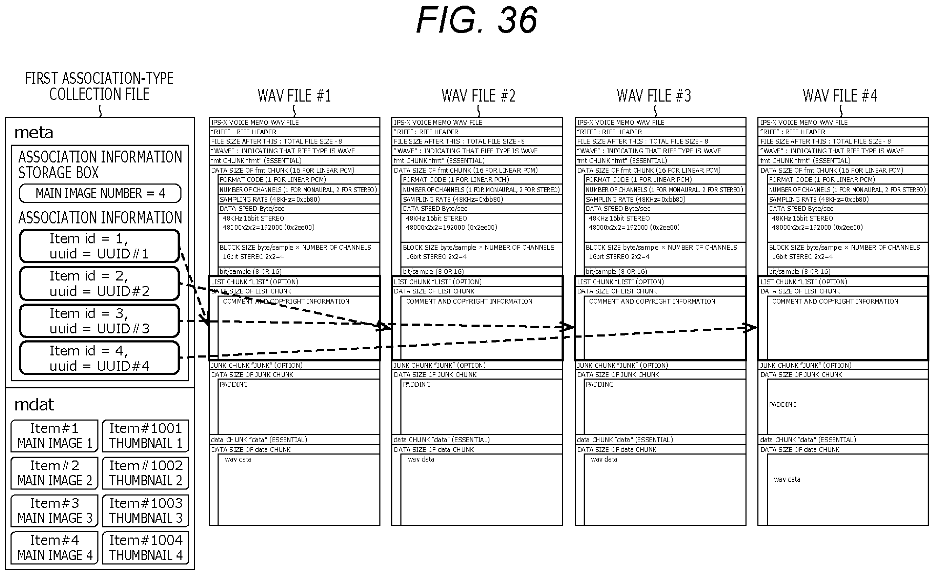

Fig. 36 is a view for explaining an outline of another example of the pre-storage method.

Note that, in Fig. 36, similarly to Fig. 34, a first association-type collection file is assumed to be generated by the pre-storage method.

The file control unit 43 generates a first association-type collection file similar to that of the case of Fig. 10. In Fig. 36, a first association-type collection file is generated in which main images Item #1 to Item #4 of four frames and thumbnail images Item #1001 to Item #1004 of the main images Item #1 to Item #4 of the four frames are stored in the mdat box.

However, at the time of generating the first association-type collection file, external data to be associated with the main image Item #i is not determined. Therefore, for each main image Item #i in the first association-type collection file, the file control unit 43 generates in advance a UUID #i as specification information that is before being assigned to the external data and is for specifying the external data to be associated with the main image Item #i in the future, and generates association information in which the UUID #i is correlated with an item ID #i of the main image Item #i. Then, the file control unit 43 generates a first association-type collection file provided with an association information storage box storing association information in which the UUID #i is correlated with the item ID #i of the main image Item #i, and an association information number indicating the number of pieces of association information. In Fig. 36, four pieces of association information are stored in the association information storage box in accordance with the number of the main images Item #1 to Item #4, and the association information number is 4.

In the association processing of respectively associating the main images Item #1 to Item #4 in the first association-type collection file with the WAV files #1 to #4 as the external data after generation of the first association-type collection file, the file control unit 43 assigns the UUID #i, which is generated in advance for the main image Item #i in the first association-type collection file and serves as specification information of the WAV file to be associated with the main image Item #i, to a WAV file #i to be associated with the main image Item #i, and the file control unit 43 stores the UUID #i assigned to the WAV file #i into, for example, a List chunk of the WAV file #i. As a result, the assignment of the UUID #i to the WAV file #i is maintained.

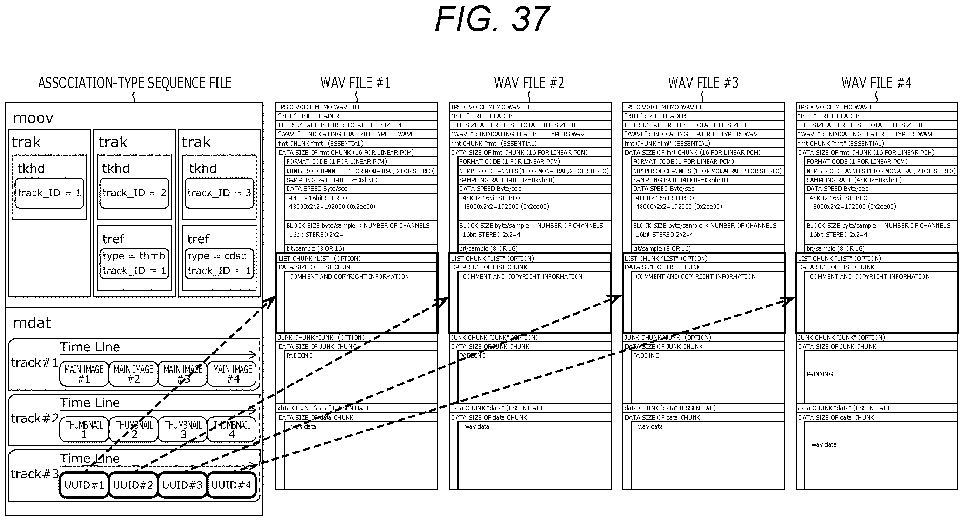

Fig. 37 is a view for explaining an outline of still another example of the pre-storage method.

Note that, in Fig. 37, an association-type sequence file is assumed to be generated by the pre-storage method.

The file control unit 43 generates an association-type sequence file similar to that in the case of Fig. 14.

In Fig. 37, a track #1 including main images of four frames and a track #2 including thumbnail images of the main images of the four frames are stored in the mdat box, and an association-type collection file stored in the moov box is generated in a trak box that manages the tracks #1 and #2.

However, in Fig. 37, external data to be associated with the main images of four frames is not determined at the time of generation of the association-type sequence file. Then, for each of the main images of four frames in the association-type sequence file, a UUID #i is generated in advance as specification information that is before being assigned to the external data and is for specifying the external data to be associated with the main image in the future, a track #3 including the UUID #i is stored in the mdat box, and an association-type sequence file stored in the moov box is generated in a trak box that manages the track #3. In Fig. 37, the UUID #i is adopted as specification information of the external data to be associated with an i-th main image among the main images of four frames. Note that, in the association-type sequence file, a plurality of tracks (main image tracks) including the main image and a plurality of tracks (specification information tracks) including the specification information can be stored in the mdat box. In a case where the plurality of main image tracks and the plurality of specification information tracks are stored in the mdat box in the association-type sequence file, the association-type sequence file stores information for correlating the main image track with the specification information track having the specification information before being assigned to the external data to be associated with the main image of the main image track. The information for correlating the main image track with the specification information track can be stored into, for example, the moov box of the association-type sequence file. This point similarly applies to a case where the association processing is performed after generation of the association-type sequence file generated by the area securing method.

In the association processing of associating the i-th main image of the track #1 in the association-type sequence file with a WAV file #i (audio) as the external data after generation of the association-type sequence file, the file control unit 43 assigns the UUID #i, which is generated in advance for the i-th main image of the track #1 in the association-type sequence file and serves as specification information of a WAV file to be associated with the i-th main image, to the WAV file #i to be associated with an i-th main image, and the file control unit 43 stores the UUID #i assigned to the WAV file #i into, for example, a List chunk of the WAV file #i. As a result, the assignment of the UUID #i to the WAV file #i is maintained.

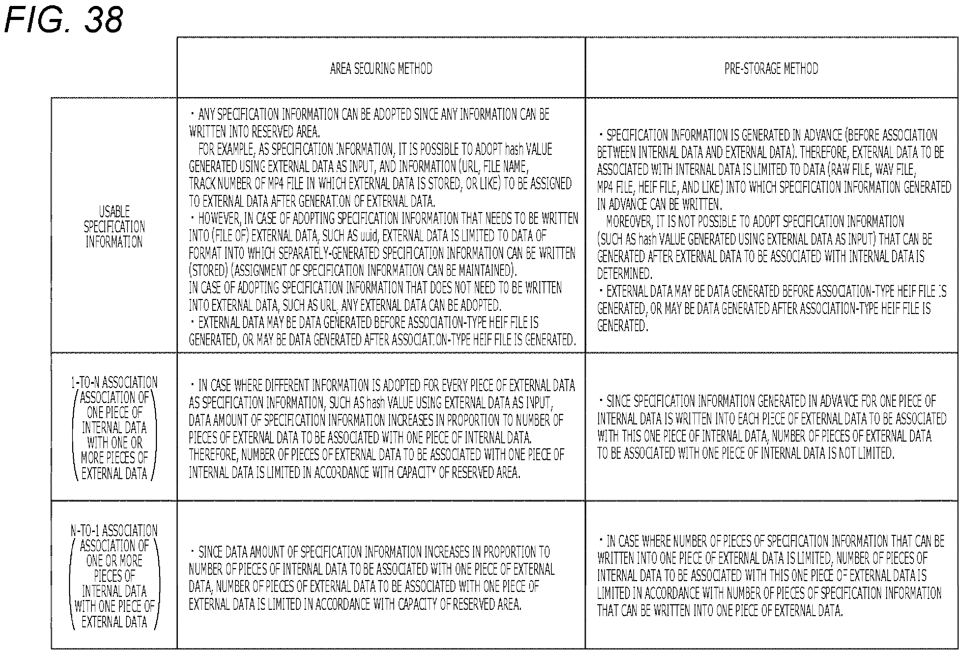

Fig. 38 is a view for explaining usable specification information and association between internal data and external data, for each of the area securing method and the pre-storage method.

For usable specification information, in the area securing method, any specification information can be adopted since any information can be written into the reserved area. For example, as the specification information, it is possible to adopt a hash value generated using external data as an input, and information (a URL, a file name, a track ID of an MP4 file in which external data is stored, and the like) to be assigned to the external data after generation of external data.

However, in a case of adopting specification information that needs to be written into a file of external data (a file in which external data is stored), such as a uuid, the file of the external data is limited to a file of a format into which separately-generated specification information can be written (stored) (assignment of the specification information can be maintained).

In a case of adopting specification information that does not need to be written into a file of external data, such as a URL, (a file of) any external data can be adopted.

Whereas, in the pre-storage method, specification information is generated in advance (before association between internal data and external data). Therefore, the file of the external data to be associated with the internal data is limited to a file (a RAW file, a WAV file, an MP4 file, a HEIF file, and the like) into which specification information generated in advance can be written.

Moreover, it is not possible to adopt specification information (such as a hash value generated using external data as an input) that can be generated after external data to be associated with internal data is determined.

Note that, in either of the area securing method and the pre-storage method, the external data may be data generated before the association-type HEIF file is generated, or may be data generated after the association-type HEIF file is generated.

For 1-to-N association that associates one piece of internal data with one or more pieces of external data, in the area securing method, in a case where different information is adopted as specification information for every piece of external data, such as a hash value with the external data as an input, a data amount of the specification information increases in proportion to the number of pieces of external data to be associated with one piece of internal data. Therefore, the number of pieces of external data to be associated with one piece of internal data is limited in accordance with a capacity of the reserved area.

Whereas, in the pre-storage method, since specification information generated in advance for one piece of internal data is written into a file in which each piece of external data to be associated with the one piece of internal data is stored, the number of pieces of external data to be associated with one piece of internal data is not limited.

For N-to-1 association of associating one or more pieces of internal data with one piece of external data, in the area securing method, since a data amount of specification information increases in proportion to the number of pieces of internal data to be associated with one piece of external data, the number of pieces of external data to be associated with one piece of external data is limited in accordance with a capacity of the reserved area.

Whereas, in the pre-storage method, in a case where the number of pieces of specification information that can be written into a file storing one piece of external data is limited, the number of pieces of internal data to be associated with the one piece of external data is limited in accordance with the number of pieces of specification information that can be written into the file storing the one piece of external data.

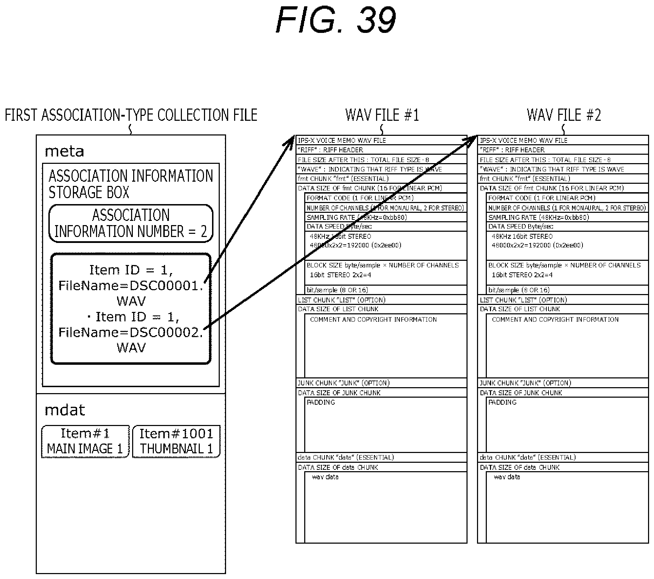

Fig. 39 is a view for explaining an example of association processing of performing 1-to-N association for a first association-type collection file generated by the area securing method.

The file control unit 43 generates a first association-type collection file in which the padding area described in Fig. 32 is secured, for example, by the area securing method.

In Fig. 39, similarly to Fig. 32, a first association-type collection file is generated in which one-frame main image Item #1 and a thumbnail image Item #1001 of the main image Item #1 are stored in the mdat box.

In a case where there is a request for 1-to-2 association processing of associating the main image Item #1 in the first association-type collection file with (audio stored in) two WAV files #1 and #2 as external data after generation of the first association-type collection file, in the association processing, for each of the WAV files #1 and #2 to be associated with the main image Item #1 in the first association-type collection file, the file control unit 43 acquires a file name as specification information, and generates association information in which the file name is correlated with the item ID #1 of the main image Item #1. File names of the WAV files #1 and #2 are DSC00001.WAV and DSC00002.WAV, respectively. Therefore, as the association information, there are generated information in which the item ID #1 and the file name DSC00001.WAV are correlated with each other, and information in which the item ID #1 and the file name DSC00002.WAV are correlated with each other. Then, the file control unit 43 overwrites the padding area in the association information storage box with the association information generated for the WAV files #1 and #2, and updates the association information number to a value (here, 2) obtained by incrementing a current value by the number 2 of pieces of association information overwritten on the padding area. As a result, the main image Item #1 can be associated with the WAV files #1 and #2.

For example, in a case where a different file name is adopted as the specification information for every WAV file as the external data, there is an increase in a data amount of the specification information, that is, association information in which the specification information and the item ID #1 of the main image Item #1 are correlated with each other, in proportion to the number of WAV files to be associated with the main image Item #1 as one piece of internal data. Therefore, the number of WAV files (external data) to be associated with the main image Item #1 as one piece of internal data is limited in accordance with a capacity of the padding area as the reserved area.

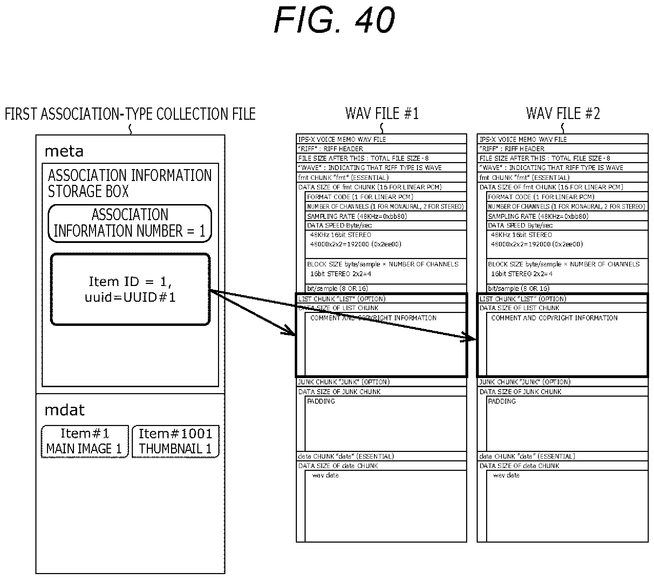

Fig. 40 is a view for explaining an example of association processing of performing 1-to-N association for a first association-type collection file generated by the pre-storage method.

The file control unit 43 generates, for example, the first association-type collection file described in Fig. 34 by the pre-storage method.

In Fig. 40, similarly to Fig. 34, a first association-type collection file is generated in which one-frame main image Item #1 and a thumbnail image Item #1001 of the main image Item #1 are stored in the mdat box. Moreover, in Fig. 40, similarly to Fig. 34, a UUID #1 as the specification information specifying external data to be associated with the main image Item #1 in the future is generated in advance, and association information in which the UUID #1 is correlated with an item ID #1 of the main image Item #1 is generated. Then, there is generated a first association-type collection file provided with an association information storage box storing association information in which the UUID #1 is correlated with the item ID #1 of the main image Item #1, and an association information number indicating the number of pieces of association information.

In a case where there is a request for 1-to-2 association processing of associating the main image Item #1 in the first association-type collection file with two WAV files #1 and #2 as external data after generation of the first association-type collection file, in the association processing, the file control unit 43 assigns the UUID #1, which is generated in advance for the main image Item #1 in the first association-type collection file and serves as specification information of external data to be associated with the main image Item #1, to the WAV files #1 and #2 to be associated with the main image Item #1, and the file control unit 43 stores (writes) the UUID #1 assigned to the WAV files #1 and #2 into a List chunk of each of the WAV files #1 and #2. As a result, the main image Item #1 can be associated with (audio stored in) the WAV files #1 and #2.

As described above, for the first association-type collection file generated by the pre-storage method, any number of WAV files as external data can be associated with the main image Item #1, by maintaining the assignment of the UUID #1 to the WAV file by writing the UUID #1 as the specification information generated in advance for the main image Item #1 into the WAV file as the external data.

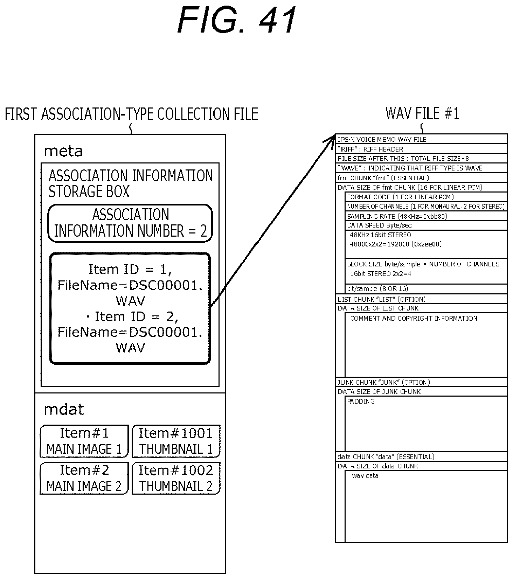

Fig. 41 is a view for explaining an example of association processing of performing N-to-1 association for a first association-type collection file generated by the area securing method.

The file control unit 43 generates a first association-type collection file in which the padding area described in Fig. 32 is secured, for example, by the area securing method.

In Fig. 41, a first association-type collection file is generated in which the mdat box stores main images Item #1 and Item #2 of two frames and thumbnail images Item #1001 and Item #1002 of the main images Item #1 and Item #2.

In a case where there is a request for 2-to-1 association processing of associating each of the main images Item #1 and Item #2 in the first association-type collection file with (audio stored in) one WAV file #1 as external data after generation of the first association-type collection file, in the association processing, the file control unit 43 acquires a file name as specification information for the WAV file #1 to be associated with the main images Item #1 and Item #2 in the first association-type collection file, and generates association information in which the file name is correlated with each of an item ID #1 of the main image Item #1 and an item ID #2 of the main image Item #2. In a case where the file name of the WAV file #1 is DSC00001.WAV, there are generated two pieces of association information in total: association information in which the item ID #1 and the file name DSC00001.WAV are correlated with each other; and association information in which the item ID #2 and the file name DSC00001.WAV are correlated with each other. Then, the file control unit 43 overwrites the padding area in the association information storage box with the two pieces of association information generated for the WAV file #1, and updates the association information number to a value (here, 2) obtained by incrementing a current value by the number 2 of pieces of association information overwritten on the padding area. As a result, the main image Item #1 and (audio stored in) the WAV file #1 can be associated with each other, and the main image Item #2 and the WAV file #1 can be associated with each other.

For the association-type HEIF file generated by the area securing method, a data amount of association information in which an item ID of a main image is correlated with specification information of a WAV file #i increases in proportion to the number of main images associated with one WAV file #1 as the external data. Therefore, the number of main images to be associated with the one WAV file #1 as the external data is limited in accordance with a capacity of the padding area as the reserved area.

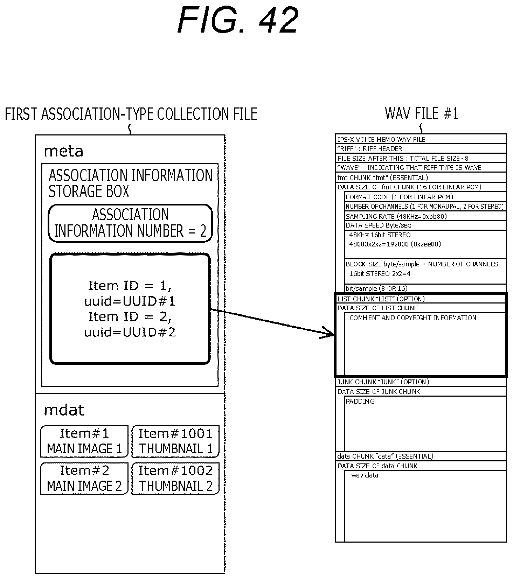

Fig. 42 is a view for explaining an example of association processing of performing N-to-1 association for a first association-type collection file generated by the pre-storage method.

The file control unit 43 generates, for example, the first association-type collection file described in Fig. 34 by the pre-storage method.

In Fig. 42, a first association-type collection file is generated in which the mdat box stores main images Item #1 and Item #2 of two frames and thumbnail images Item #1001 and Item #1002 of the main images Item #1 and Item #2. Moreover, in Fig. 42, similarly to Fig. 34, a UUID #1 and a UUID #2 as specification information specifying external data to be associated in the future with each of the main images Item #1 and Item #2 are generated in advance, and two pieces of association information are generated: association information in which the UUID #1 is correlated with an item ID #1 of the main image Item #1; and association information in which the UUID #2 is correlated with an item ID #2 of the main image Item #2. Then, there is generated a first association-type collection file provided with an association information storage box storing the two pieces of association information and an association information number indicating the number of pieces of association information.

In a case where there is a request for 2-to-1 association processing of associating each of the main images Item #1 and Item #2 in the first association-type collection file with one WAV file #1 as external data after generation of the first association-type collection file, in the association processing, the file control unit 43 assigns the UUID #1, which is generated in advance for the main image Item #1 in the first association-type collection file and serves as specification information of external data to be associated with the main image Item #1, and the UUID #2, which is generated in advance for the main image Item #2 and serves as specification information of external data to be associated with the main image Item #2, to the WAV file #1 (audio) to be associated with the main images Item #1 and iterm #2, and the file control unit 43 stores the UUID #1 and the UUID #2 assigned to the WAV file #1 into a List chunk of the WAV file #1. As a result, each of the main images Item #1 and Item #2 can be associated with the WAV file #1.

As described above, for the first association-type collection file generated by the pre-storage method, a uuid as specification information generated in advance for a main image is written into a WAV file (in which audio is stored) as external data. Therefore, in a case where the number of pieces of specification information that can be written into one WAV file is limited, the number of main images to be associated with (audio stored in) the one WAV file is limited in accordance with the number of pieces of specification information that can be written into the one WAV file.

### <In case of adopting MP4 file as file to store external data>

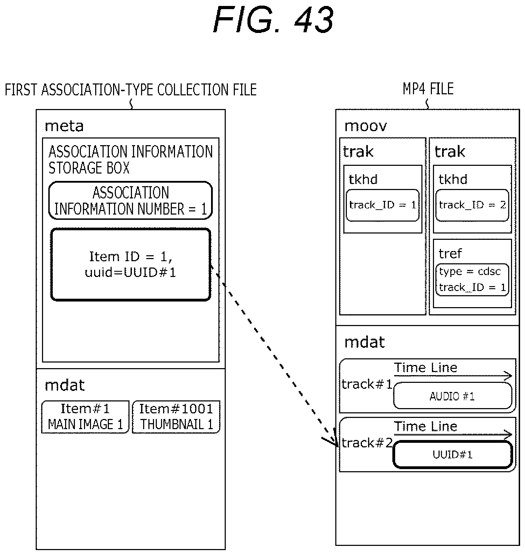

Fig. 43 is a view illustrating a first example of association between a main image as internal data and audio as external data, in a case where an MP4 file is adopted as a file to store the audio as the external data.

Here, one piece of (a series of) audio is stored into a WAV file. Whereas, in an MP4 file including a moov box, an mdat box, and the like, it is possible to make one piece of audio in a multi-track as one track, that is, to collectively store a plurality of pieces of audio. Therefore, in a case where the audio as the external data is stored in the MP4 file, in associating a main image stored in a HEIF file that can store one or more images (frames) with a plurality of pieces of audio as external data, a one-to-one correspondence relationship in which, in units of files, one file of the HEIF file is correlated with one file of the MP4 file can be realized by storing the plurality of pieces of audio as the external data into the MP4 file with multi-track.

In a case where a main image as internal data is associated with a plurality of pieces of audio as external data, the plurality of pieces of audio can be collectively handled by storing the plurality of pieces of audio as external data into the MP4 file, which is convenient. For example, in a case of associating a main image in an association-type HEIF file with a plurality of pieces of audio, WAV files equal in number to the plurality of pieces of audio are required when the pieces of audio are stored into the WAV file. As a result, in a case of transmitting the main image and the plurality of pieces of audio that have been associated, it is necessary to transmit an association-type HEIF file storing the main image and a plurality of WAV files storing the pieces of audio.

Whereas, in a case of associating a main image in an association-type HEIF file with a plurality of pieces of audio, when the pieces of audio are stored in an MP4 file, the plurality of pieces of audio can be stored in one MP4 file. As a result, in a case of transmitting the main image and the plurality of pieces of audio that have been associated, it is only necessary to transmit one file of the association-type HEIF file storing the main image and one file of the MP4 file storing the pieces of audio.

Note that, as the plurality of pieces of audio as the external data, for example, pieces of audio having the same contents in different languages, or the like, can be adopted.

Fig. 43 illustrates an example of association between one main image stored in a first association-type collection file and one audio stored in an MP4 file.

The first association-type collection file is generated, for example, by the pre-storage method. In the first association-type collection file of Fig. 43, one (one-frame) main image Item #1 and a thumbnail image Item #1001 of the main image Item #1 are stored in the mdat box. Moreover, in Fig. 43, similarly to Fig. 34, a UUID #1 as specification information specifying external data to be associated with the main image Item #1 in the future is generated in advance, and association information in which the UUID #1 is correlated with an item ID #1 of the main image Item #1 is generated, and the association information and an association information number indicating the number of pieces of association information are stored in the association information storage box.

Whereas, in the MP4 file to store one audio #1 to be associated with the main image Item #1, a track #1 of audio #1 is stored in the mdat box, and a trak box to manage the track #1 is stored in the moov box. Here, a trak box having a tkhd box in which a track ID is set to i is the trak box that manages a track #i.

In a case where there is a request for association processing of associating the main image Item #1 in the first association-type collection file with the audio #1 in the MP4 file after generation of the first association-type collection file, in the association processing, the file control unit 43 assigns a UUID #1, which is generated in advance for the main image Item #1 in the first association-type collection file and serves as specification information of external data to be associated with the main image Item #1, to the audio #1 to be associated with the main image Item #1, and the file control unit 43 stores (writes) the UUID #1 assigned to the audio #1 into the MP4 file storing the audio #1.

That is, the file control unit 43 generates a track #2 of the UUID #1 for the MP4 file and stores in the mdat box, and generates a trak box to manage the track #2 and stores in the moov box.

The trak box that manages the track #2 has a tkhd box and a tref box. In the tkhd box of the trak box that manages the track #2, it is set that a track ID for specifying the track #2 to be managed is 2.

Moreover, in the tref box of the trak box that manages the track #2, it is set that another track related to the track #2 is the track #1 (track_ID = 1) and that the track #2 is a track of metadata (here, specification information) (type = cdsc).

As described above, by storing the UUID #1 as the specification information generated in advance for the main image Item #1 into the MP4 file storing the audio #1, the main image Item #1 and the audio #1 can be associated with each other.

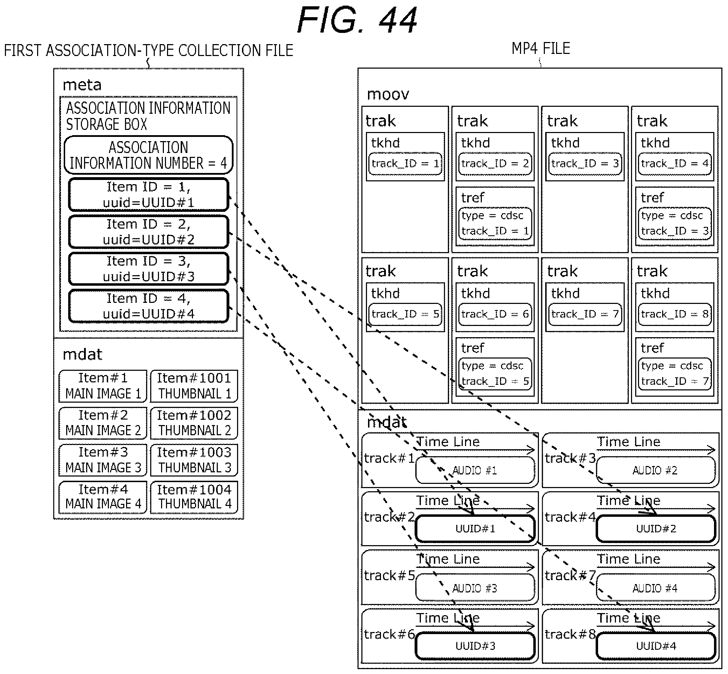

Fig. 44 is a view illustrating a second example of association between a main image as internal data and audio as external data, in a case where an MP4 file is adopted as a file to store the audio as the external data.

Fig. 44 illustrates an example of association between four main images stored in a first association-type collection file and four pieces of audio stored in an MP4 file.

The first association-type collection file is generated, for example, by the pre-storage method. In the first association-type collection file of Fig. 44, four main images Item #1 to Item #4 and thumbnail images Item #1001 to Item #1004 of the main images Item #1 to Item #4 are stored in the mdat box. Moreover, in Fig. 44, similarly to Fig. 34, a UUID #i as specification information specifying external data to be associated in the future with the main image Item #i (where i = 1, 2, 3, 4) is generated in advance, and four pieces of association information in which the UUID #i is correlated with an item ID #i of a main image Item #i are generated. Then, an association information number indicating the number of pieces of the four pieces of association information is stored in the association information storage box.

Whereas, in the MP4 file to store audio #i to be associated with the main image Item #i, a track #2i-1 of each of the four pieces of the audio #i is stored in the mdat box (i = 1, 2, 3, 4), and a trak box (a trak box having a tkhd box with a track ID set to 2i-1) that manages the track #2i-1 is stored in the moov box.

In a case where there is a request for association processing of associating the main image Item #i in the first association-type collection file with the audio #i in the MP4 file after generation of the first association-type collection file, in the association processing, the file control unit 43 assigns a UUID #i, which is generated in advance for the main image Item #i in the first association-type collection file and serves as specification information of external data to be associated with the main image Item #i, to the audio #i to be associated with the main image Item #i, and the file control unit 43 stores the UUID #i assigned to the audio #i into the MP4 file storing the audio #i.

That is, the file control unit 43 generates a track #2i of the UUID #i for the MP4 file and stores in the mdat box, and generates a trak box to manage the track #2i and stores in the moov box.

The trak box that manages the track #2i has a tkhd box and a tref box. In the tkhd box of the trak box that manages the track #2i, it is set that a track ID for specifying the track #2i to be managed is 2i.

Moreover, in the tref box of the trak box that manages the track #2i, it is set that another track related to the track #2i is a track #2i-1 (track_ID = 2i-1) and that the track #2i is a track of metadata (here, specification information) (type = cdsc).

As described above, by storing the UUID #i as the specification information generated in advance for the main image Item #1 into the MP4 file storing the audio #i, the main image Item #i and the audio #i can be associated with each other.

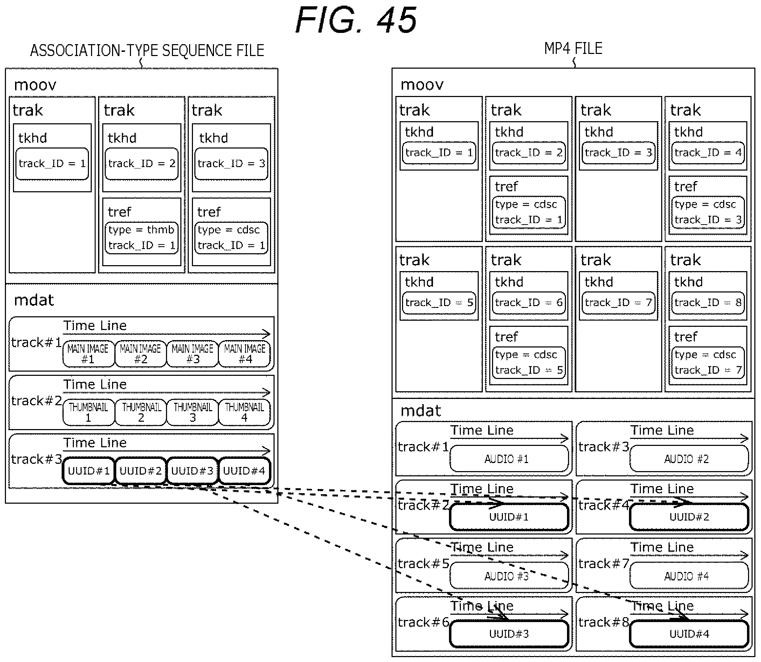

Fig. 45 is a view illustrating a third example of association between a main image as internal data and audio as external data, in a case where an MP4 file is adopted as a file to store the audio as the external data.

Fig. 45 illustrates an example of association between four main images stored in an association-type sequence file and four pieces of audio stored in an MP4 file.

The association-type sequence file is generated by, for example, the pre-storage method. In the association-type sequence file of Fig. 45, a track #1 including four main images and a track #2 including thumbnail images of the respective four main images are stored in the mdat box.

Moreover, in Fig. 45, similarly to Fig. 37, UUIDs #1, #2, #3, and #4 as specification information specifying external data to be respectively associated in the future with the first to fourth main images of the track #1 are generated in advance, and a track #3 in which the UUIDs #1 to #4 are arranged in the same order as the corresponding four main images is generated. Then, the track #3 including the UUIDs #1 to #4 is stored in the mdat box.

Furthermore, in the association-type sequence file of Fig. 45, a trak box that manages each of the tracks #1 to #3 stored in the mdat box is stored in the moov box. The trak box that manages each of the tracks #1 to #3 includes a tkhd box in which a track ID of a track to be managed by the trak box is set.

Moreover, the trak box that manages the tracks #2 and #3 further has a tref box. In the tref box of the trak box that manages the track #2, it is set that another track related to the track #2 is the track #1 (track_ID = 1), and that the track #2 is a track of a thumbnail image (type = thmb). In the tref box of the trak box that manages the track #3, it is set that another track related to the track #3 is the track #1 (track_ID = 1) and that the track #3 is a track of metadata (here, specification information) (type = cdsc).

Whereas, the MP4 file to store four pieces of audio #1 to #4 to be respectively associated with the four main images in the association-type sequence file is configured similarly to the case of Fig. 44.

In a case where there is a request for association processing of associating each of the four main images of the track #1 in the association-type sequence file with each of the four pieces of audio #1 to #4 in the MP4 file after generation of the association-type sequence file, in the association processing, the file control unit 43 assigns UUIDs #1 to #4, which are generated in advance the respective four main images of the track #1 in the associative sequence file and serve as specification information of external data, to the four pieces of audio #1 to #4 to be respectively associated with the four main images, and the file control unit 43 stores the UUIDs #1 to #4 respectively assigned to the pieces of audio #1 to #4 into the MP4 file storing the pieces of audio #1 to #4.

That is, the file control unit 43 generates a track #2i of the UUID #i for the MP4 file and stores in the mdat box, and generates a trak box to manage the track #2i and stores in the moov box.

The trak box that manages the track #2i has a tkhd box and a tref box. In the tkhd box of the trak box that manages the track #2i, it is set that a track ID for specifying the track #2i to be managed is 2i.

Moreover, in the tref box of the trak box that manages the track #2i, it is set that another track related to the track #2i is a track #2i-1 (track_ID = 2i-1) and that the track #2i is a track of metadata (here, specification information) (type = cdsc).

As described above, by storing a uuid generated in advance as the specification information for the four main images of the track #1 in the association-type sequence file into the MP4 file storing the pieces of audio #1 to #4, the four main images can be associated with the pieces of audio #1 to #4.

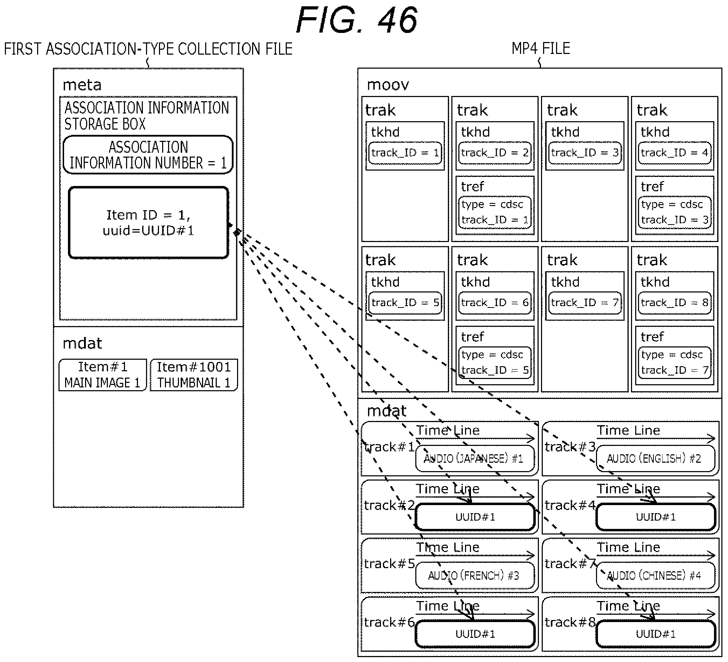

Fig. 46 is a view illustrating a fourth example of association between a main image as internal data and audio as external data, in a case where an MP4 file is adopted as a file to store the audio as external data.

Fig. 46 illustrates an example of association between one main image stored in a first association-type collection file and four pieces of audio stored in an MP4 file.

The first association-type collection file is generated by, for example, the pre-storage method, and is configured similarly to the case of Fig. 43.

The MP4 file to store four pieces of audio #1 to #4 to be associated with one main image in the association-type sequence file is configured similarly to the case of Fig. 44.

In a case where there is a request for association processing of associating the main image Item #1 in the first association-type collection file with the pieces of audio #1 to #4 in the MP4 file after generation of the first association-type collection file, in the association processing, the file control unit 43 assigns a UUID #1, which is generated in advance for the main image Item #1 in the first association-type collection file and serves as specification information of external data to be associated with the main image Item #1, to the pieces of audio #1 to #4 to be associated with the main image Item #1, and the file control unit 43 stores the UUID#1 assigned to the pieces of audio #1 to #4 into the MP4 file storing the pieces of audio #1 to #4.

That is, for the MP4 file, the file control unit 43 generates tracks #2, #4, #6, and #8 of the UUID #1 assigned respectively to the pieces of audio #1 to #4 and stores in the mdat box, and generates trak boxes to respectively manage the tracks #2, #4, #6, and #8 and stores in the moov box.

The trak box that manages a track #2i (i = 1, 2, 3, 4) has a tkhd box and a tref box. In the tkhd box of the trak box that manages the track #2i, it is set that a track ID for specifying the track #2i to be managed is 2i.

Moreover, in the tref box of the trak box that manages the track #2i, it is set that another track related to the track #2i is a track #2i-1 (track_ID = 2i-1) and that the track #2i is a track of metadata (here, specification information) (type = cdsc).

As described above, by storing the UUID #1 as specification information generated in advance for the main image Item #1 into the MP4 file storing the pieces of audio #1 to #4, one main image Item #1 can be associated with four pieces as a plurality of pieces of audio #1 to #4.

In Fig. 46, although the pieces of audio #1 to #4 are pieces of audio having the same contents, the audio #1 is Japanese audio, the audio #2 is English audio, the audio #3 is French audio, and the audio #4 is Chinese audio. Therefore, according to the association processing of Fig. 46, it is possible to associate the main image Item #1 with the four pieces of audio #1 to #4 having the same contents but different languages.

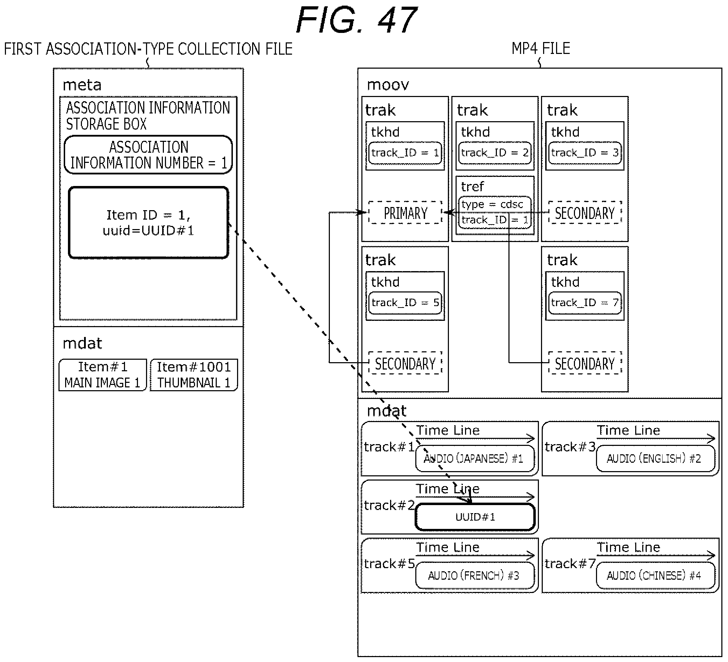

Fig. 47 is a view illustrating a fifth example of association between a main image as internal data and audio as external data, in a case where an MP4 file is adopted as a file to store the audio as the external data.

Fig. 47 illustrates an example of association between one main image stored in a first association-type collection file and four pieces of audio stored in an MP4 file.

The first association-type collection file is generated by, for example, the pre-storage method, and is configured similarly to the case of Fig. 43.

The MP4 file to store four pieces of audio #1 to #4 to be associated with one main image in the association-type sequence file is configured similarly to the case of Fig. 44. However, in the MP4 file of Fig. 47, it is set in a trak box to manage a track #1 of the audio #1 that the track #1 is a primary track, and it is set in trak boxes that manage the tracks #3, #5, and #7 of the pieces of audio #2 to #4 that the tracks #3, #5, and #7 are secondary tracks whose primary is the track #1.

In a case where there is a request for association processing of associating a main image Item #1 in the first association-type collection file with the pieces of audio #1 to #4 in the MP4 file after generation of the first association-type collection file, in the association processing, the file control unit 43 assigns a UUID #1, which is generated in advance for the main image Item #1 in the first association-type collection file and serves as specification information of external data to be associated with the main image Item #1, to the primary audio #1 among the pieces of audio #1 to #4 to be associated with the main image Item #1, and the file control unit 43 stores the UUID #1 assigned to the audio #1 into the MP4 file storing the pieces of audio #1 to #4.

That is, for the MP4 file, the file control unit 43 generates a track #2 of the UUID #1 assigned to the primary audio #1 and stores in the mdat box, and generates a trak box to manage the track #2 and stores in the moov box.

The trak box that manages the track #2 has a tkhd box and a tref box. In the tkhd box of the trak box that manages the track #2, it is set that a track ID for specifying the track #2 to be managed is 2.

Moreover, in the tref box of the trak box that manages the track #2, it is set that another track related to the track #2 is the track #1 (track_ID = 1) and that the track #2 is a track of metadata (here, specification information) (type = cdsc).

As described above, by storing the UUID #1 as specification information generated in advance for the main image Item #1 into the MP4 file storing the pieces of audio #1 to #4, one main image Item #1 can be associated with four pieces as a plurality of pieces of audio #1 to #4.

Here, in Fig. 47, since the UUID #1 is not assigned to the secondary pieces of audio #2 to #4 stored in the MP4 file, the main image Item #1 and each of the secondary pieces of audio #2 to #4 are not so to speak directly associated with each other.

However, in the MP4 file, as described above, it is set that (tracks of) the pieces of audio #2 to #4 are (tracks of) secondary audio having the audio #1 of the track #1 as primary audio. Further, in accordance with setting of the MP4 file, the main image Item #1 and each of the secondary pieces of audio #2 to #4 are indirectly associated with each other through association between the main image Item #1 and the primary audio #1.

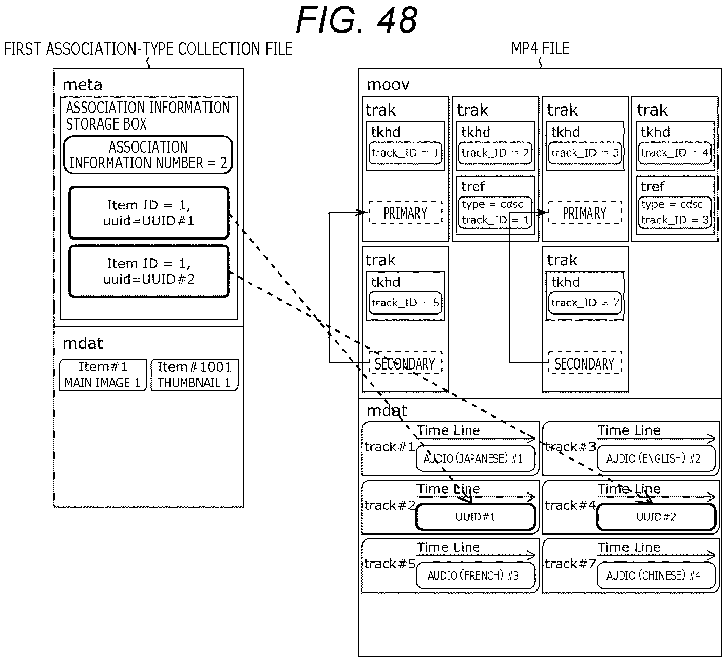

Fig. 48 is a view illustrating a sixth example of association between a main image as internal data and audio as external data, in a case where an MP4 file is adopted as a file to store the audio as the external data.

Fig. 48 illustrates an example of association between one main image stored in a first association-type collection file and four pieces of audio stored in an MP4 file.

The first association-type collection file is generated by, for example, the pre-storage method, and is configured similarly to the case of Fig. 43. However, in the first association-type collection file of Fig. 48, in addition to the association information in which (an item ID of) the main image Item #1 is correlated with the UUID #1, association information in which the main image Item #1 is correlated with a UUID #2 different from the UUID #1 is stored in an association information storage box, and an association information number is not 1 but 2.

The MP4 file to store four pieces of audio #1 to #4 to be associated with two main images in the association-type sequence file is configured similarly to the case of Fig. 47.

However, in the MP4 file of Fig. 47, in a trak box that individually manages tracks #1 and #3 of the respective pieces of audio #1 and #2, it is set that the tracks #1 and #3 are primary tracks. Furthermore, it is set in a trak box to manage a track #5 of the audio #3 that the track #5 is a secondary track whose primary is the track #1, and it is set in a trak box to manage the track #7 of the audio #4 that the track #7 is a secondary track whose primary is the track #3.

In a case where there is a request for association processing of associating the main image Item #1 in the first association-type collection file with the pieces of audio #1 and #2 in the MP4 file, and associating the main image Item #1 with the pieces of audio #3 and #4 in the MP4 file after generation of the first association-type collection file, in the association processing, the file control unit 43 assigns a UUID #1, which is generated in advance for the main image Item #1 in the first association-type collection file and serves as specification information of external data to be associated with the main image Item #1, to the primary audio #1 of the pieces of audio #1 and #2 to be associated with the main image Item #1, and the file control unit 43 stores the UUID #1 assigned to the audio #1 into the MP4 file storing the pieces of audio #1 and #2.

Moreover, the file control unit 43 assigns a UUID #2, which is generated in advance for the main image Item #1 in the first association-type collection file and serves as specification information of external data to be associated with the main image Item #1, to the primary audio #3 of the pieces of audio #3 and #4 to be associated with the main image Item #2, and the file control unit 43 stores the UUID #2 assigned to the audio #3 into the MP4 file storing the pieces of audio #3 and #4.

That is, for the MP4 file, the file control unit 43 generates a track #2 of the UUID #1 assigned to the primary audio #1 and stores in the mdat box, and generates a trak box to manage the track #2 and stores in the moov box.

The trak box that manages the track #2 has a tkhd box and a tref box. In the tkhd box of the trak box that manages the track #2, it is set that a track ID for specifying the track #2 to be managed is 2.

Moreover, in the tref box of the trak box that manages the track #2, it is set that another track related to the track #2 is the track #1 (track_ID = 1) and that the track #2 is a track of metadata (here, specification information) (type = cdsc).

For the MP4 file, the file control unit 43 generates a track #4 of the UUID #2 assigned to the primary audio #3 and stores in the mdat box, and generates a trak box to manage the track #4 and stores in the moov box.

The trak box that manages the track #4 has a tkhd box and a tref box. In the tkhd box of the trak box that manages the track #4, it is set that the track ID for specifying the track #4 to be managed is 4.

Moreover, in the tref box of the trak box that manages the track #4, it is set that another track related to the track #4 is the track #3 (track_ID = 3) and that the track #4 is a track of metadata (type = cdsc).

As described above, by storing the UUIDs #1 and #2 as a plurality of pieces of different specification information generated in advance for the main image Item #1 into the MP4 file storing the pieces of audio #1 to #4, it is possible to associate two pieces of audio #1 and #2 and to associate two pieces of audio #3 and #4 with the main image Item #1, that is, to associate the main image Item #1 with the four pieces of audio #1 to #4.

Here, in Fig. 48, as described in Fig. 47, the UUID #1 is not assigned to the secondary audio #2, and the main image Item #1 and the secondary audio #2 are not directly associated with each other. However, by setting of the MP4 file indicating that the audio #2 is secondary audio having the audio #1 as primary, the main image Item #1 and the secondary audio #2 are indirectly associated via association between the main image Item #1 and the primary audio #1. Similarly, the UUID #2 is not assigned to the secondary audio #4, and the main image Item #1 and the secondary audio #4 are not directly associated with each other. However, by setting of the MP4 file indicating that the audio #4 is secondary audio having the audio #3 as primary, the main image Item #1 and the secondary audio #4 are indirectly associated via association between the main image Item #3 and the primary audio #1.

### <Association-type HEIF file generated by area securing method and association-type HEIF file after association processing>

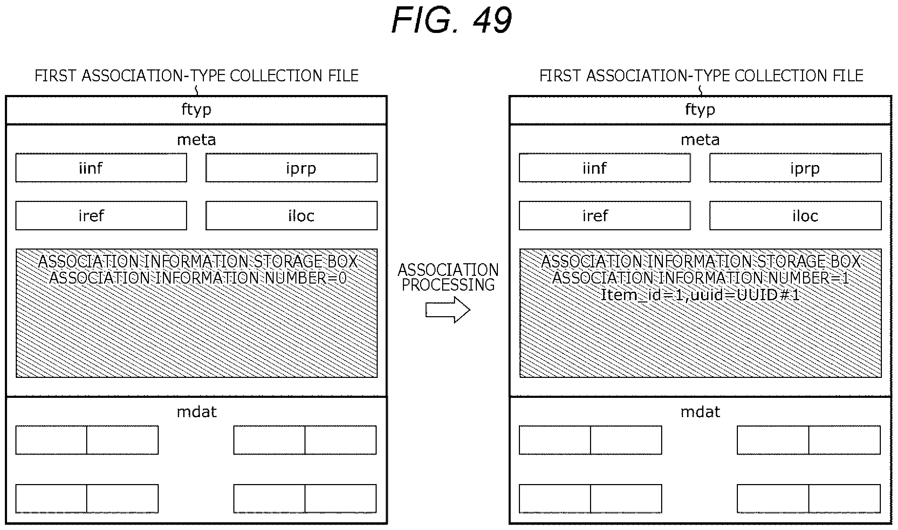

Fig. 49 is a view for explaining a first example of a first association-type collection file generated by the area securing method and a state of the first association-type collection file after association processing.

Note that, hereinafter, description of storage of media data such as an image and a track of the media data into an mdat box in generation of an association-type HEIF file will be appropriately omitted.

In generating the first association-type collection file by the area securing method, for example, the file control unit 43 generates an association information storage box having the association information number set to 0 and having an empty area (padding area) as a reserved area, and generates a first association-type collection file in which the association information storage box is stored in the meta box.

Whether or not valid association information is stored (set) in the association information storage box can be recognized by the association information number.

Furthermore, the association information storage box can be provided with a flag indicating whether or not valid association information is stored in the association information storage box, and the flag allows recognition as to whether or not the valid association information is stored in the association information storage box.

Hereinafter, it is assumed that, for example, whether or not valid association information is stored in the association information storage box is recognized on the basis of the association information number.

In a case where there is a request for association processing of associating a main image Item #1 in the first association-type collection file with external data after generation of the first association-type collection file, in the association processing, the file control unit 43 generates a UUID #1 as specification information of external data to be associated with the main image Item #1, and generates association information in which the UUID #1 is correlated with an item ID #1 of the main image Item #1.

Moreover, the file control unit 43 overwrites an empty area as the reserved area in the association information storage box with the association information, and updates the association information number to a value (here, 1) obtained by incrementing a current value by 1.

In the first association-type collection file of Fig. 49, the writing of the association information into the association information storage box can be performed within a range of a capacity of the empty area in the association information storage box.

As described above, in association processing performed after generation of the first association-type collection file, by generating the first association-type collection file in which the association information storage box having the reserved area is stored in the meta box, and writing (overwriting) the association information in which the UUID #1 as specification information of external data is correlated with the item ID #1 of the main image Item #1 into the reserved area in the association information storage box, it is possible to associate the internal data with the external data later while preventing offset shift of data already stored in the mdat box.

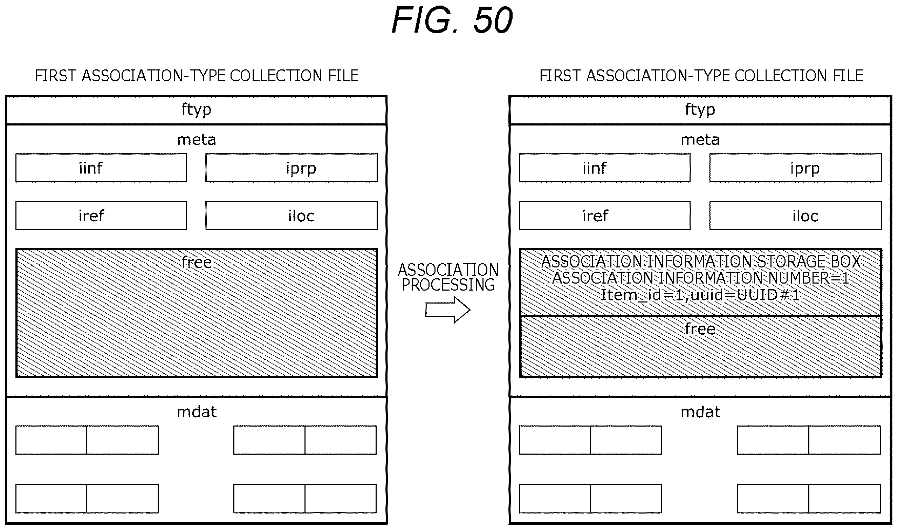

Fig. 50 is a view for explaining a second example of the first association-type collection file generated by the area securing method and a state of the first association-type collection file after association processing.

In generating the first association-type collection file by the area securing method, the file control unit 43 generates, for example, a free box having an empty area (padding area) as a reserved area, and generates a first association-type collection file in which the free box is stored in the meta box. The free box is a box that can store any data, and in the present embodiment, the free box has an empty area as the reserved area.

In a case where there is a request for association processing of associating a main image Item #1 in the first association-type collection file with external data after generation of the first association-type collection file, in the association processing, the file control unit 43 generates a UUID #1 as specification information of external data to be associated with the main image Item #1, and generates association information in which the UUID #1 is correlated with an item ID #1 of the main image Item #1.

Furthermore, the file control unit 43 generates an association information number in which the number of pieces of generated association information is set, and generates an association information storage box storing the association information number and the association information.

Then, the file control unit 43 overwrites the association information storage box into the meta box by using the reserved area of the free box, and reduces a capacity (size) of the free box by a capacity of the association information storage box.

In the first association-type collection file of Fig. 50, the writing of the association information storage box can be performed within a range of a capacity of the free box at the time of generating the first association-type collection file.

As described above, in association processing performed after generation of the first association-type collection file, by generating the first association-type collection file in which the free box having the reserved area is stored in the meta box, and using the reserved area of the free box to write, into the reserved area, the association information storage box storing the association information in which the UUID #1 as the specification information of the external data is correlated with the item ID #1 of the main image Item #1, it is possible to associate the internal data with the external data later while preventing offset shift of data already stored in the mdat box.

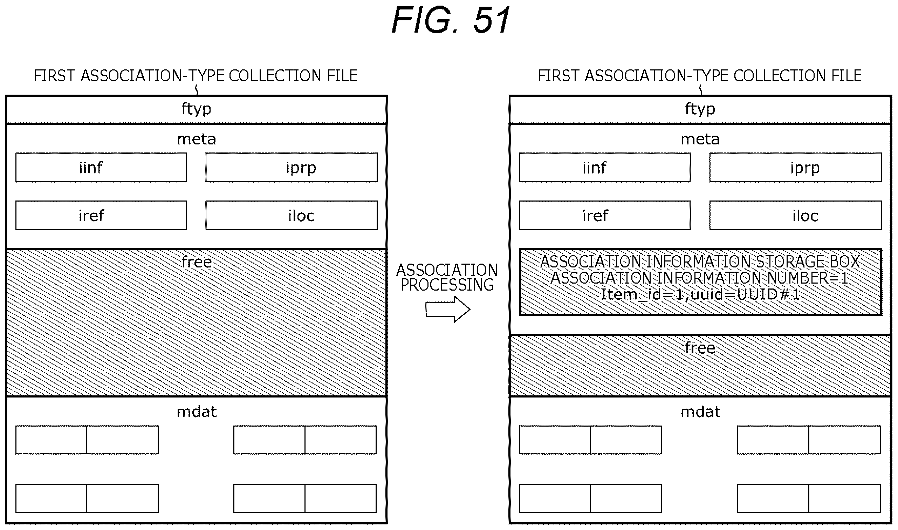

Fig. 51 is a view for explaining a third example of the first association-type collection file generated by the area securing method and a state of the first association-type collection file after association processing.

In Fig. 51, except that the first association-type collection file is generated in which the free box is not stored in the meta box but in a file hierarchy between the meta box and the mdat box, processing similar to that in the case of Fig. 50 is performed.

Also in the case of Fig. 51, similarly to the case of Fig. 50, it is possible to associate the internal data with the external data later while preventing offset shift of data already stored in the mdat box.

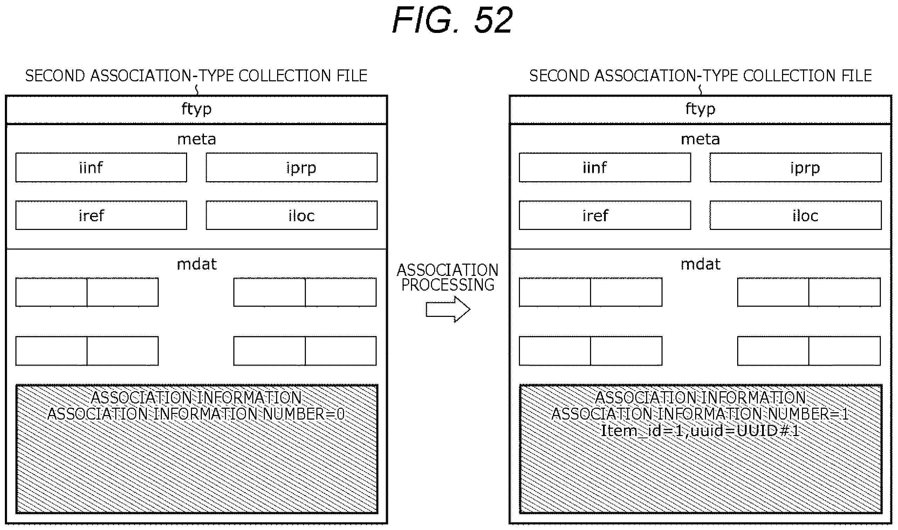

Fig. 52 is a view for explaining a first example of a second association-type collection file generated by the area securing method and a state of the second association-type collection file after association processing.

In generating the first association-type collection file by the area securing method, the file control unit 43 generates a second association-type collection file that has, for example, the association information number set to 0, and in which an area for association information having an empty area as a reserved area is stored as an item in the mdat box.

Whether or not the area for association information as an item has valid association information can be recognized by the association information number. Furthermore, in the area for association information as an item, a flag can be provided indicating whether or not the area for association information as an item has valid association information, and the flag enables recognition as to whether or not the area for association information as an item has valid association information.

Hereinafter, it is assumed that, for example, whether or not the area for association information as an item has valid association information is recognized by the association information number.

In a case where there is a request for association processing of associating a main image Item #1 in the second association-type collection file with external data after generation of the second association-type collection file, in the association processing, the file control unit 43 generates a UUID #1 as specification information of external data to be associated with the main image Item #1, and generates association information in which the UUID #1 is correlated with an item ID #1 of the main image Item #1.

Moreover, the file control unit 43 overwrites, with the association information, the empty area as the reserved area of the area for association information as an item, and updates the association information number to a value (here, 1) obtained by incrementing a current value by 1.

In the second association-type collection file of Fig. 52, the writing of the association information to the area for association information can be performed within a range of a capacity of the empty area in the area for association information.

As described above, in association processing performed after generation of the second association-type collection file, by generating the second association-type collection file in which the area for association information having the reserved area is stored as an item in the meta box, and writing the association information in which the UUID #1 as the specification information of the external data and the item ID #1 of the main image Item #1 are correlated with each other into the reserved area in the area for association information, it is possible to associate the internal data with the external data later while preventing offset shift of data already stored in the mdat box.

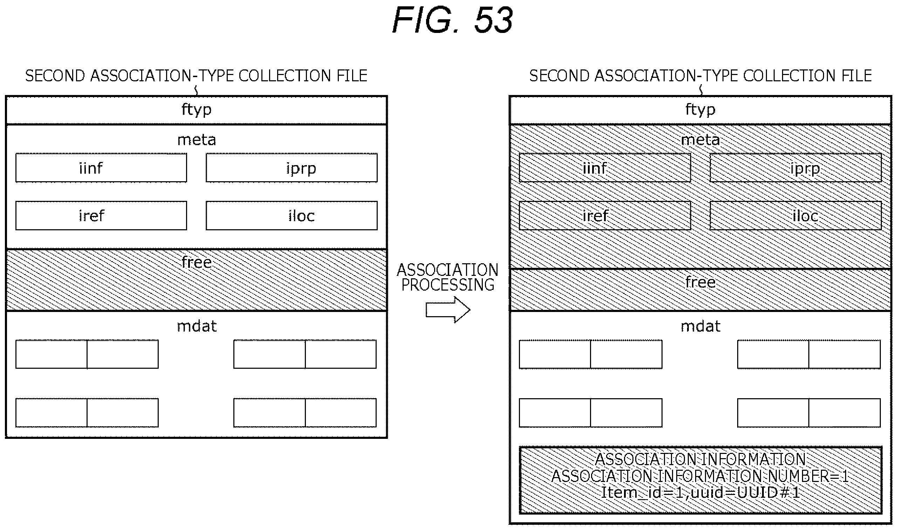

Fig. 53 is a view for explaining a second example of the second association-type collection file generated by the area securing method and a state of the second association-type collection file after association processing.

In generating the second association-type collection file by the area securing method, for example, the file control unit 43 generates a free box, and generates a second association-type collection file in which the free box is stored in a file hierarchy between the meta box and the mdat box.

Note that, since association information is not stored in the mdat box immediately after generation, the collection file generated in Fig. 53 does not have a form of the second association-type collection file in which association information is stored as an item in the mdat box. However, the collection file is to have a form of the second association-type collection file in the future when association processing is performed, and thus is referred to as the second association-type collection file for convenience.

In a case where there is a request for association processing of associating a main image Item #1 in the second association-type collection file with external data after generation of the second association-type collection file, in the association processing, the file control unit 43 generates a UUID #1 as specification information of external data to be associated with the main image Item #1, and generates association information in which the UUID #1 is correlated with an item ID #1 of the main image Item #1.

Furthermore, the file control unit 43 generates an association information number in which the number of pieces of generated association information is set, and stores the association information number and the association information as one item in a form of adding after the last item of the mdat box.

Moreover, the file control unit 43 adds, to the meta box, metadata (metadata to be stored in the iinf box, the iloc box, or the like) regarding the association information number and the association information as the item added to the mdat box.

The addition of the metadata to the meta box increases a capacity (data amount) of the meta box, but data corresponding to the increase in the capacity is written using the reserved area of the free box. Therefore, the metadata regarding the association information number and the association information as the item added to the mdat box can be considered to be written into the reserved area of the free box.

In relationship information related to the association between the main image Item #1 and the external data described above, that is, among the association information in which the UUID #1 is correlated with the item ID #1 of the main image Item #1, the association information number, and the metadata added to the meta box, the file control unit 43 reduces a capacity of the free box by a data amount of the metadata added to the meta box.

Here, in Fig. 53, since the association information number and the association information as an item are stored (written) in a form of being added after the last item of the mdat box, the reserved area of the free box is not consumed. Therefore, the capacity of the free box is not changed (reduced) by the association information number and the association information as an item added after the last item of the mdat box.

In the second association-type collection file of Fig. 53, the writing of the relationship information can be performed within a range in which a capacity of the metadata to be added to the meta box in the relationship information does not exceed a capacity of the free box at the time of generating the second association-type collection file.

As described above, in association processing performed after generation of the second association-type collection file, by generating the second association-type collection file storing the free box having the reserved area, storing, as the last item of the mdat box, association information in which the UUID #1 serving as the specification information of the external data is correlated with the item ID #1 of the main image Item #1, and adding metadata related to the association information to the meta box by using the reserved area of the free box, it is possible to associate the internal data with the external data later while preventing offset shift of data already stored in the mdat box.

Note that, in Fig. 53, the free box can be provided not in the file hierarchy but in the meta box.

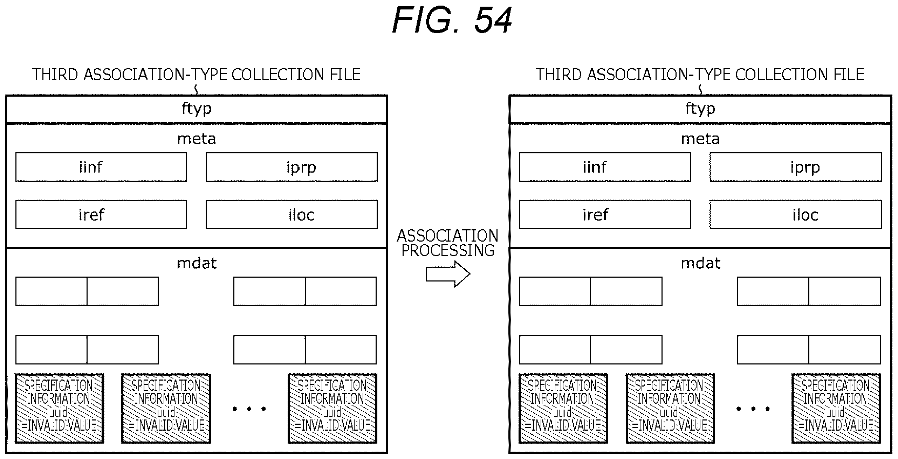

Fig. 54 is a view for explaining a first example of a third association-type collection file generated by the area securing method and a state of the third association-type collection file after association processing.

In generating the third association-type collection file by the area securing method, for example, the file control unit 43 generates the third association-type collection file in which each of one or more pieces of information to serve as specification information is stored as an item in the mdat box.

An area (area for specification information) of the information to serve as specification information stored in the mdat box is a reserved area in which the specification information is stored (in the future), and for example, padding can be performed with an invalid value. For example, in a case where a uuid is adopted as the specification information, all zeros can be adopted as an invalid value.

In generating the third association-type collection file, for example, by the file control unit 43 generating an invalid value as the uuid and writing the invalid value as an item into the mdat box, the reserved area to store the specification information is secured.

Note that, at the time of generating the third association-type collection file, metadata regarding information (invalid value) to serve as specification information as an item is also generated and stored in the meta box.

Examples of the metadata related to the information to serve as specification information as an item include: an item ID of information to serve as specification information; an offset; a size; association information associating a main image as internal data with specification information of external data, that is, association information in which an item ID of the main image and an item ID of the information to serve as specification information as the item are correlated respectively as a reference source and a reference destination (association information stored in the iref box described in Fig. 12); and the like.

Furthermore, the information to serve as specification information as an item can be stored in the mdat box by the number equal to or less than a number of main images (the number of items) as the internal data of the third association-type collection file, for example.

In a case where there is a request for association processing of associating a main image Item #1 in the third association-type collection file with external data after generation of the third association-type collection file, in the association processing, the file control unit 43 generates a UUID #1 as valid specification information of external data to be associated with the main image Item #1, and writes (overwrites with an invalid value) the UUID #1 into (an area of) information to serve as specification information as an item associated with the item ID #1 of the main image Item #1 by the metadata in the meta box.

In the third association-type collection file in Fig. 54, the writing of the valid specification information can be performed within a range of the number of pieces of information to serve as specification information stored in the mdat box at the time of generating the third association-type collection file.

As described above, in association processing performed after generation of the third association-type collection file, by generating the third association-type collection file in which the reserved area to store the specification information is secured in the mdat box, that is, the third association-type collection file in which the information to serve as specification information is stored in the mdat box, and writing the UUID #1 as the specification information to be assigned to the external data into the information to serve as specification information correlated with the item ID #1 of the main image Item #1, it is possible to associate the internal data with the external data later while preventing offset shift of data already stored in the mdat box.

Note that, at the time of generating the third association-type collection file, for example, valid specification information (specification information of a valid value) such as a uuid can be stored in the mdat box instead of the information (invalid value) to serve as specification information.

The generation of the third association-type collection file in which the valid specification information is stored in the mdat box is generation of the third association-type collection file storing specification information before being assigned to external data, and thus is to be generation of the third association-type collection file by the pre-storage method.

In this case, for the specification information, for example, by providing a flag indicating whether or not the specification information is assigned to the external data, the flag enables recognition as to whether the specification information is assigned or unassigned.

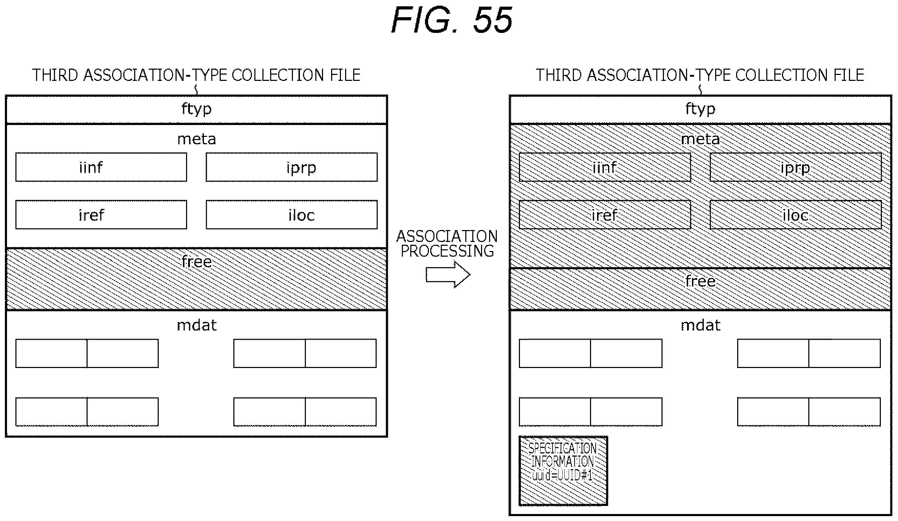

Fig. 55 is a view for explaining a second example of the third association-type collection file generated by the area securing method and a state of the third association-type collection file after association processing.

In generating the third association-type collection file by the area securing method, for example, the file control unit 43 generates a free box, and generates the third association-type collection file in which the free box is stored in a file hierarchy between the meta box and the mdat box.

Note that, since specification information as an item is not stored in the mdat box immediately after generation, and thus metadata regarding the specification information as an item is not stored in the meta box as well, the collection file generated in Fig. 55 does not have a form of the third association-type collection file in which the specification information is stored as an item in the mdat box. However, the collection file is to have a form of the third association-type collection file in the future when association processing is performed, and thus is referred to as the third association-type collection file for convenience.

In a case where there is a request for association processing of associating a main image Item #1 in the third association-type collection file with external data after generation of the third association-type collection file, in the association processing, the file control unit 43 generates a UUID #1 as specification information of external data to be associated with the main image Item #1, and stores the UUID #1 as one item in a form of adding after the last item of the mdat box.

Moreover, the file control unit 43 adds, to the meta box, metadata (metadata to be stored in iinf box, iref box, iloc box, or the like) regarding the UUID #1 as the item added to the mdat box.

The addition of the metadata to the meta box increases a capacity of the meta box, but data corresponding to the increase in the capacity is written using the reserved area of the free box. Therefore, it can be considered that the metadata regarding the specification information as the item added to the mdat box is written into the reserved area of the free box.

In relationship information related to association between the main image Item #1 and the external data, that is, among the UUID #1 as an item and the metadata related to the UUID #1, the file control unit 43 reduces a capacity of the free box by a data amount of the metadata related to the UUID #1.

Here, in Fig. 55, similarly to the case of Fig. 53, since the UUID #1 as an item is stored in a form of being added after the last item of the mdat box, the reserved area of the free box is not consumed. Therefore, the UUID #1 as the item added after the last item of the mdat box does not change the capacity of the free box.

In the third association-type collection file in Fig. 55, the writing of the relationship information can be performed within a range in which a capacity of the metadata regarding the specification information as an item in the relationship information does not exceed a capacity of the free box at the time of generating the third association-type collection file.

As described above, in association processing performed after generation of the third association-type collection file, by generating the third association-type collection file storing the free box, storing, as the last item of the mdat box, the UUID #1 serving as the specification information of the external data, and adding metadata related to the specification information to the meta box by using the reserved area of the free box, it is possible to associate the internal data with the external data later while preventing offset shift of data already stored in the mdat box.

Note that, in Fig. 53, the free box can be provided not in the file hierarchy but in the meta box.

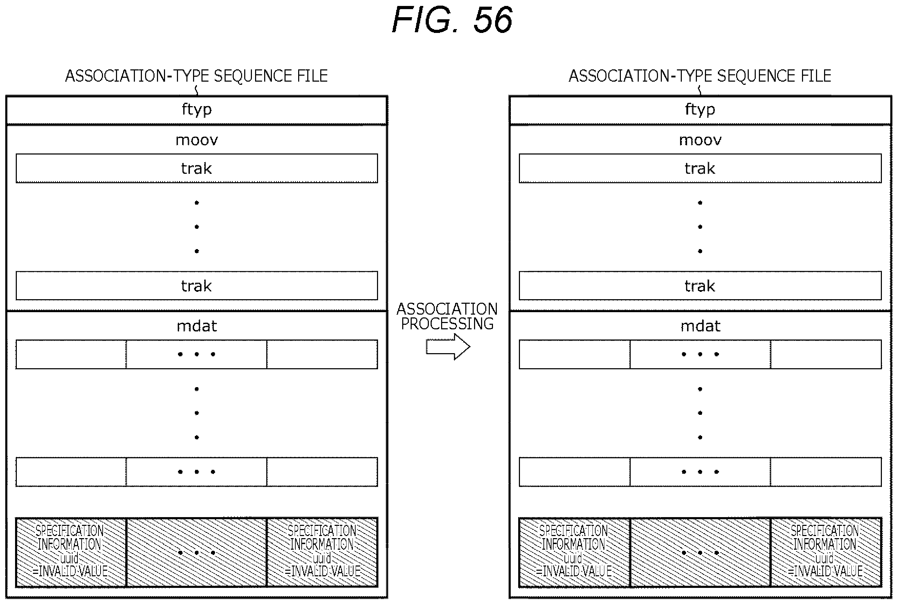

Fig. 56 is a view for explaining a first example of an association-type sequence file generated by the area securing method and a state of the association-type sequence file after association processing.

In generating the association-type sequence file by the area securing method, the file control unit 43 generates, for example, an association-type sequence file in which a track of information to serve as specification information is stored in the mdat box.

An area (area for specification information) of the track of information to serve as specification information stored in the mdat box is a reserved area in which the specification information is stored (in the future), and, for example, padding can be performed with an invalid value. For example, in a case where a uuid is adopted as the specification information, all zeros can be adopted as an invalid value.

In generating the association-type collection file, by the file control unit 43 generating, for example, an invalid value as the uuid, and writing a track having the invalid value into the mdat box, a reserved area to store the specification information is secured.

Note that, at the time of generating the association-type sequence, metadata for managing the track of information (invalid value) to serve as specification information is also generated and stored in (the trak box of) the meta box.

Examples of the metadata for managing the track of the information to serve as specification information include: a track ID of the track of the information to serve as specification information; an offset; a size; a track ID of another track (here, a track of a main image) related to the track of the information to serve as specification information (information to be stored in a trak box that manages the track #3 of the specification information described in Fig. 14); and the like.

Furthermore, the track of the information to serve as specification information can be formed by, for example, the information to serve as specification information of a number equal to the number of main images (the number of frames) as the internal data of the association-type sequence file.

In a case where there is a request for association processing of associating a main image Item #1 in the association-type sequence file with external data after generation of the association-type sequence file, in the association processing, the file control unit 43 generates a UUID #1 as valid specification information of external data to be associated with the main image Item #1, and writes (overwrites with an invalid value) the UUID #1 into (an area of) the information to serve as specification information associated with the main image Item #1 by metadata in the meta box and the time information on a timeline, in the track of the information to serve as specification information.

In the association-type sequence file in Fig. 56, the writing of valid specification information can be performed within a range of the number of pieces of information constituting the track of the information to serve as specification information stored in the mdat box at the time of generating the association-type sequence file.

As described above, in association processing performed after generation of the association-type sequence file, by generating the association-type sequence file in which the reserved area to store the specification information is secured in the mdat box, that is, the association-type sequence file in which the track of the information to serve as specification information is stored in the mdat box, and writing the UUID #1 serving as the specification information to be assigned to the external data into the information to serve as specification information associated with the main image Item #1, it is possible to associate the internal data with the external data later while preventing offset shift of data already stored in the mdat box.

Note that, at the time of generating the association-type sequence file, the mdat box can store a track of valid specification information such as a uuid, for example, instead of the information (invalid value) to serve as specification information.

The generation of the association-type sequence file in which the track of the valid specification information is stored in the mdat box is generation of the association-type sequence file storing specification information before being assigned to external data, and thus is to be generation of the association-type sequence file by the pre-storage method.

In this case, for the specification information, for example, by providing a flag indicating whether or not the specification information is assigned to the external data, the flag enables recognition as to whether the specification information is assigned or unassigned.

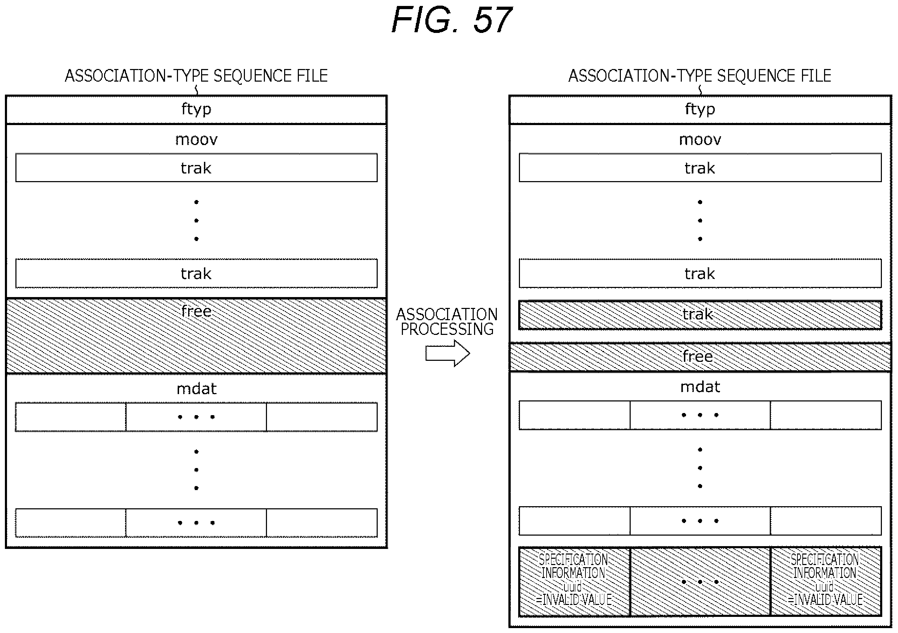

Fig. 57 is a view for explaining a second example of the association-type sequence file generated by the area securing method and a state of the association-type sequence file after association processing.

In generating the association-type sequence file by the area securing method, for example, the file control unit 43 generates a free box, and generates an association-type sequence file in which the free box is stored in a file hierarchy between the meta box and the mdat box.

Note that, since a track of specification information is not stored in the mdat box immediately after generation, and thus metadata for managing the track of the specification information is not stored in the moov box, the sequence file generated in Fig. 57 does not have a form of the association-type sequence file in which the track of the specification information is stored in the mdat box. However, the sequence file is to have a form of the association-type collection file in the future when association processing is performed, and thus is referred to as the association-type sequence file for convenience.

In a case where there is a request for association processing of associating a main image Item #1 in the association-type sequence file with external data after generation of the association-type sequence file, in the association processing, the file control unit 43 stores a track including one or more pieces of information to serve as specification information (hereinafter, also referred to as an additional information track) in a form of adding the track after the last track of the mdat box. As the information to serve as specification information constituting the additional information track, for example, an invalid value similar to that in the case of Fig. 56 can be adopted.

Moreover, the file control unit 43 generates a trak box to store metadata and manage the additional information track added to the mdat box, and adds the trak box to the meta box.

In generating the trak box that manages the additional information track, there is generated a trak box (the trak box that manages the track #3 of the specification information described with reference to Fig. 14) storing a track ID of the additional information track, an offset, a size, a track ID of another track (here, a track of a main image) related to the additional information track, and the like.

The file control unit 43 generates a UUID #1 as valid specification information of external data to be associated with the main image Item #1, and rewrites (overwrites with an invalid value), with the UUID #1, the information to serve as specification information associated with the main image Item #1 by the metadata in the meta box and time information on a timeline, in the additional information track.

The addition of the trak box (storing metadata) that manages the additional information track to the meta box increases a capacity of the meta box, but data corresponding to the increase in the capacity is written using the reserved area of the free box. Therefore, the trak box that manages the additional information track can be considered to be written into the reserved area of the free box.

In relationship information related to the association between the main image Item #1 and the external data described above, that is, among the additional information track and the trak box that manages the additional information track, the file control unit 43 reduces a capacity of the free box by a data amount of the trak box that manages the additional information track.

Here, in Fig. 57, since the additional information track is stored in a form of being added after the last track of the mdat box, the reserved area of the free box is not consumed.

In the association-type sequence file in Fig. 57, the writing of the relationship information can be performed within a range in which a data amount of the trak box that manages the additional information track in the relationship information does not exceed a capacity of the free box at the time of generating the association-type sequence file.

As described above, in association processing performed after generation of the association-type sequence file, by generating the association-type sequence file storing the free box, storing the additional information track as the last track of the mdat box and adding the trak box that manages the additional information track to the meta box by using the reserved area of the free box, and rewriting the information to serve as specification information constituting the additional information track with the UUID #1 as the specification information of the external data, it is possible to associate the internal data with the external data later while preventing offset shift of data already stored in the mdat box.

Note that, in Fig. 57, the free box can be provided not in the file hierarchy but in the meta box.

Furthermore, as the additional information track, it is possible to generate a track including pieces of information of a number equal to the number of main images to be associated with the external data at the time of generating the additional information track, or generate a track including pieces of information of a number equal to the number of main images constituting the track of the main image at the time of the first generation of the additional information track.

However, in a case of generating, as the additional information track, a track including pieces of information of a number equal to the number of main images to be associated with the external data at the time of generating the additional information track, the additional information track needs to be added each time association processing is performed, which complicates management of the additional information track, association between the specification information written in the additional information track and the main image, and the like.

In a case of generating, as the additional information track, a track including pieces of information of a number equal to the number of main images constituting the track of the main image at the time of the first generation of the additional information track, in the subsequent association processing, the information to serve as specification information associated with the main image only needs to be rewritten with valid specification information of the external data, in the additional information track.

Moreover, at the time of generating the association-type sequence file, the mdat box can store an additional information track including valid specification information such as a uuid, for example, instead of the information (invalid value) to serve as specification information.

The generation of the association-type sequence file in which the additional information track including the valid specification information is stored in the mdat box is generation of the association-type sequence file storing specification information before being assigned to external data, and thus is to be generation of the association-type sequence file by the pre-storage method.

In this case, for the specification information, for example, by providing a flag indicating whether or not the specification information is assigned to the external data, the flag enables recognition as to whether the specification information is assigned or unassigned.

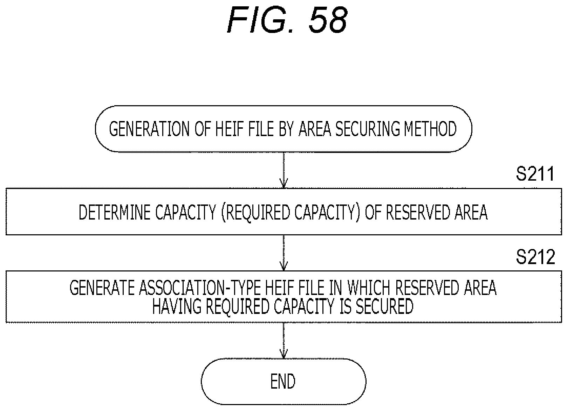

Fig. 58 is a flowchart for explaining an example of processing of generating an association-type HEIF file by the area securing method.

In step S211, the file control unit 43 determines a capacity to be required (hereinafter, also referred to as a required capacity) as a capacity of the reserved area, and the process proceeds to step S212.

Here, in a case of generating a box having a reserved area, such as a free box, at least 8 bytes for storing a size and a type are required in the box. Therefore, the size of the box is equal to or larger than a value obtained by adding 8 bytes to the required capacity of the reserved area.

For example, in a case of generating a HEIF file storing a free box, when adding association information or specification information as an item to the mdat box in the association processing as illustrated in Fig. 53 or 55, it is necessary to add metadata regarding the association information or the specification information as an item to the meta box, in accordance with addition of the association information or the specification information as an item. In this case, the required capacity is determined to be a value equal to or larger than a data amount of the metadata to be added to the meta box.

Furthermore, for example, in a case of generating a HEIF file storing a free box, when adding the additional information track to the mdat box in the association processing as illustrated in Fig. 57, it is necessary to add metadata for managing the additional information track to the moov box, in accordance with the addition of the additional information track. In this case, the required capacity is determined to be a value equal to or larger than the data amount of the metadata to be added to the moov box.

In addition, the required capacity can be determined in accordance with one or more of: a data amount of one piece of specification information; the number of main images stored in the HEIF file (the number of main images that may be associated with external data); the number of pieces of external data that may be associated with the main image; and the like.

The required capacity increases as the data amount of the specification information increases. The number of main images that may be associated with the external data can be determined, for example, within a range of the number of main images in the HEIF file. The required capacity increases as the number of main images that may be associated with external data is larger. The number of pieces of external data that may be associated with the main image can be determined to be any number.

In a case of adopting, as the specification information, information that enables assignment of a same value to a plurality of pieces of external data, such as a uuid, for example, an increase or decrease in the number of pieces of external data that may be associated with one main image does not affect the required capacity. In a case of adopting, as the specification information, specification information different for every piece of external data, for example, such as a hash value with the external data as an input or a file name, the required capacity increases as the number of pieces of external data that may be associated with the main image is larger.

The required capacity can be determined, for example, in accordance with a product of a data amount of one piece of specification information and the number of main images with which the external data may be associated.

The data amount of one piece of specification information can be determined by a type of the specification information, for example, whether the specification information is a URL, a uuid, a hash value, or the like.

The number of main images with which the external data may be associated can be determined to be a larger value as a remaining capacity increases, in accordance with the remaining capacity of a medium storing the HEIF file, for example. Furthermore, for example, by determining the maximum number of main images that may be stored in one HEIF file, in accordance with the maximum number, the number of main images with which the external data may be associated can be determined to be larger value as the maximum number is larger. Moreover, for example, by the file control unit 43 evaluating the main image stored in the HEIF file, in accordance with the number of main images having good evaluation, the number of main images with which the external data may be associated can be determined to be a larger value as the number of main images having good evaluation increases. In the evaluation of the main image, for example, by obtaining information regarding image quality such as S/N and sharpness of the main image, and the main image having the S/N, the sharpness, or the like equal to or greater than a threshold value can be determined as the main image having good evaluation. In addition, the number of main images with which the external data may be associated can be determined in accordance with a plurality of elements such as a remaining capacity of the medium described above.

In step S212, the file control unit 43 generates the association-type HEIF file described with reference to Figs. 49 to 57 in which the reserved area having the required capacity is secured, and the process end.

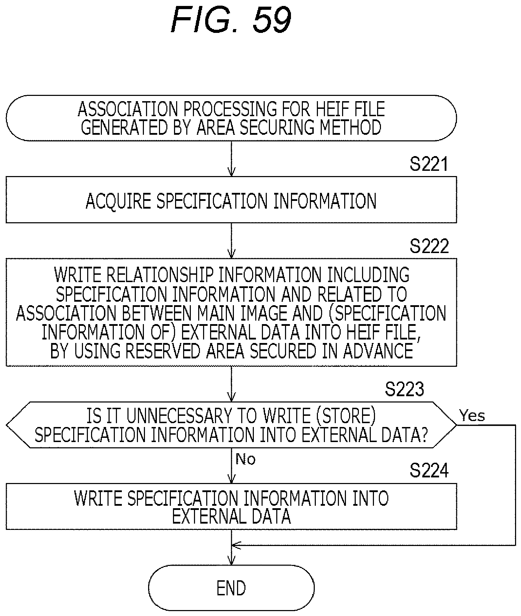

Fig. 59 is a flowchart for explaining an example of association processing for an association-type HEIF file generated by the area securing method.

In step S221, the file control unit 43 acquires specification information of external data, and the process proceeds to step S222.

For example, in a case where the external data is data stored in a single-track MP4 file or a WAV file, a uuid, a hash value of the MP4 file or the WAV file storing the external data (or a hash value of the external data itself), a URL, or the like can be adopted as the specification information.

Furthermore, for example, in a case where the external data is a multi-track MP4 file, it is possible to adopt, as the specification information, a set of a URL of the MP4 file storing the external data and a track ID of a track of the external data, a set of a URL of the MP4 file storing the external data and time information on a timeline of the external data, a set of a URL of the MP4 file storing the external data and a hash value of a track of the external data, and the like. The uuid, the hash value, and the URL are acquired by generation. The track ID and the time information are acquired by referring to the MP4 file storing the external data.

In step S222, by using a reserved area secured in advance, the file control unit 43 writes relationship information including specification information and related to association between the main image and (the specification information of) the external data into an association-type HEIF file generated by the area securing method, and consequently generates the association-type HEIF file storing the relationship information, and the process proceeds to step S223.

In step S223, the file control unit 43 determines whether or not it is necessary to write the specification information into (a file storing) the external data.

In a case where it is determined in step S223 that it is not necessary to write the specification information into the external data, for example, in a case where the specification information is information that can specify the external data without being written into the external data, such as a hash value generated using the external data or the like as an input, the process skips step S224 and ends. That is, in a case where it is not necessary to write the specification information into the external data, the association between the main image and the external data is completed by writing the relationship information into the association-type HEIF file.

Furthermore, in a case where it is determined in step S233 that it is necessary to write the specification information into the external data, for example, in a case where the specification information is information that can specify the external data by being written into the external data, such as the uuid, the process proceeds to step S224.

In step S224, the file control unit 43 writes (stores) the specification information acquired in step S221 into the file storing the external data, and the process ends. That is, in a case where it is necessary to write the specification information into the external data, the association between the main image and the external data is completed by writing the relationship information into the association-type HEIF file and writing the specification information into the file storing the external data.

Note that the file storing the external data to be associated with the main image stored in the association-type HEIF file generated by the area securing method may be generated before the association processing is performed, or may be generated in parallel with the execution of the association processing. In a case where the file storing the external data is generated in parallel with the execution of the association processing, for example, in step S224, a file storing the specification information together with the external data is generated.

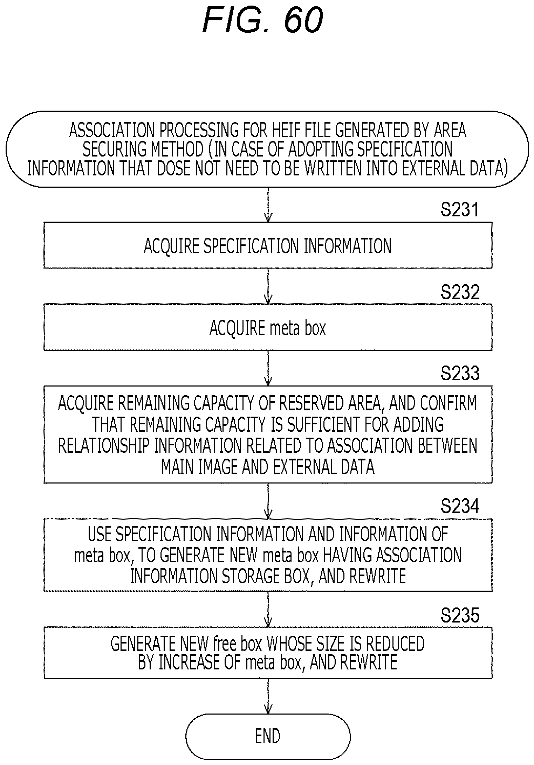

Fig. 60 is a flowchart for explaining an example of association processing for a first association-type collection file generated by the area securing method.

In Fig. 60, for example, it is assumed that the first association-type collection file illustrated in Fig. 51 in which the free box is provided in the meta box is set as a target of the association processing, and specification information that does not need to be written into external data is used.

In step S231, the file control unit 43 acquires specification information of external data, and the process proceeds to step S232.

For example, the file control unit 43 generates a hash value by calculating with SHA -256 by using a file storing the external data as an input, and acquires the hash value as the specification information of the external data.

In step S232, the file control unit 43 acquires a meta box by reading from the first association-type collection file of Fig. 51 generated by the area securing method, and the process proceeds to step S233.

In step S233, the file control unit 43 acquires a remaining capacity of the reserved area in the free box of the first association-type collection file in Fig. 51, and confirms that the remaining capacity is sufficient for adding relationship information related to association between the main image and the external data, that is, for adding an association information storage box storing the association information number and the association information in Fig. 51, and the process proceeds to step S234.

Note that, in step S233, in a case where the remaining capacity of the reserved area is insufficient for adding the relationship information related to the association between the main image and the external data, for example, the fact is displayed on the liquid crystal panel 19, and the process ends.

In step S234, the file control unit 43 uses the specification information of the external data and information of the meta box, to generate an association information storage box storing the association information number and the association information in Fig. 51, and further generate a new meta box storing the association information storage box.

Moreover, the file control unit 43 rewrites the meta box of the first association-type collection file with the new meta box, and the process proceeds from step S234 to step S235.

In step S235, the file control unit 43 generates a new free box whose size is reduced by an increase in a size (data amount) of the new meta box with respect to the meta box before rewriting.

Moreover, the file control unit 43 rewrites the free box of the first association-type collection file with the new free box, and the process ends.

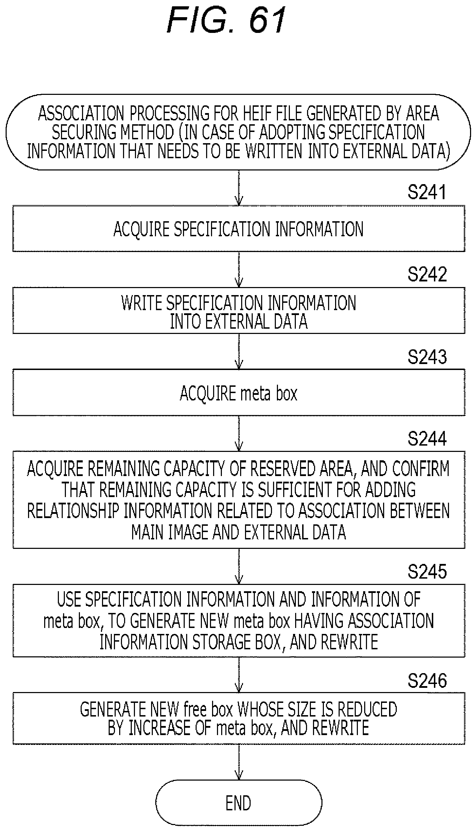

Fig. 61 is a flowchart for explaining another example of the association processing for the first association-type collection file generated by the area securing method.

In Fig. 61, for example, similarly to Fig. 60, it is assumed that the first association-type collection file illustrated in Fig. 51 in which the free box is provided in the meta box is set as a target of the association processing. Moreover, in Fig. 61, it is assumed that specification information that needs to be written into external data is used.

In step S241, the file control unit 43 acquires specification information of external data, and the process proceeds to step S242. For example, the file control unit 43 generates a uuid, and acquires the uuid as the specification information of the external data.

In step S242, the file control unit 43 writes (stores) the uuid as the specification information acquired in step S221 into a file storing external data, and the process proceeds to step S243.

For example, in a case where the file storing the external data is a WAV file, the file control unit 43 writes the uuid into a LIST chunk of the WAV file as described with reference to Fig. 29 and the like. Furthermore, for example, in a case where the file storing the external data is an MP4 file, a track of the uuid is written into an mdat box of the MP4 file as described with reference to Fig. 43 and the like.

In steps S243 to S246, processing similar to that in steps S232 to S235 respectively in Fig. 61 is performed, and the process ends.

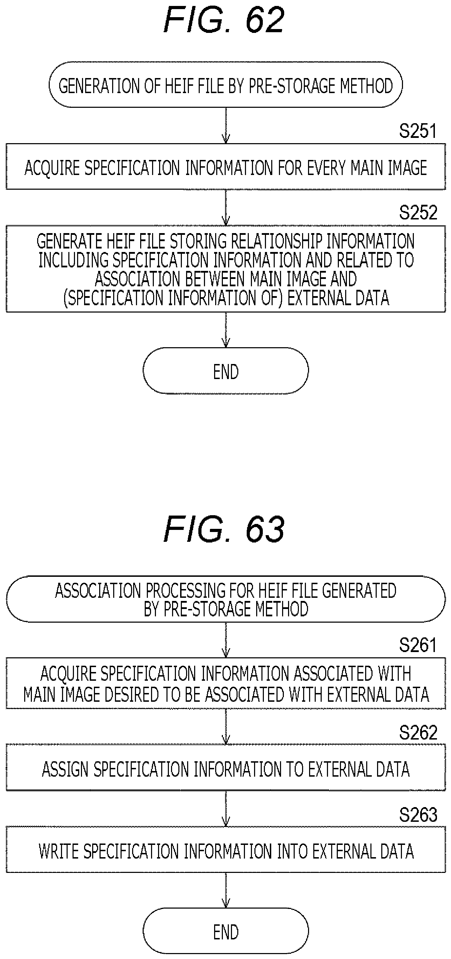

Fig. 62 is a flowchart for explaining an example of processing of generating an association-type HEIF file by the pre-storage method.

In step S251, the file control unit 43 acquires specification information for every main image stored in the association-type HEIF file, and the process proceeds to step S252.

For example, by generating, the file control unit 43 acquires a uuid as the specification information for every main image stored in the association-type HEIF file.

In step S252, the file control unit 43 generates an association-type HEIF file (an association-type HEIF file that is similar to the association-type HEIF file of Figs. 10 to 12 or 14 in which the main image and the external data are apparently associated with each other) storing relationship information that includes specification information before being assigned to the external data acquired in step S251 and is related to association between the main image and (the specification information of) the external data, and the process ends.

Fig. 63 is a flowchart for explaining an example of association processing for an association-type HEIF file generated by the pre-storage method.

In step S261, from the association-type HEIF file generated by the pre-storage method, the file control unit 43 acquires, for example, a uuid as the specification information associated with the main image desired to be associated with the external data, and the process proceeds to step S262.

For example, in a case where the association-type HEIF file generated by the pre-storage method is a first association-type collection file, acquisition of specification information associated with a predetermined main image from the first association-type collection file can be performed as described in the flowchart of Fig. 21.

In step S262, the file control unit 43 assigns the specification information acquired in step S261 to the external data, that is, determines the specification information of the external data as the specification information acquired in step S261, and the process proceeds to step S263.

In step S263, the file control unit 43 writes (stores) the uuid as the specification information acquired in step S221 into a file storing the external data, and the process ends.

For example, in a case where the file storing the external data is a WAV file, the file control unit 43 writes the uuid into a LIST chunk of the WAV file as described with reference to Fig. 29 and the like. Furthermore, for example, in a case where the file storing the external data is an MP4 file, a track of the uuid is written into an mdat box of the MP4 file as described with reference to Fig. 43 and the like.

In the association processing for the association-type HEIF file generated by the pre-storage method, the association between the main image and the external data is completed by writing the specification information into the file storing the external data.

### <Description of computer applied with present technology>

Next, a series of processes of each block constituting the above-described file control unit 43 and another signal processing unit 13 (Fig. 1) can be performed by hardware or software. In a case where the series of processes is performed by software, a program that forms the software is installed in a computer and the like.

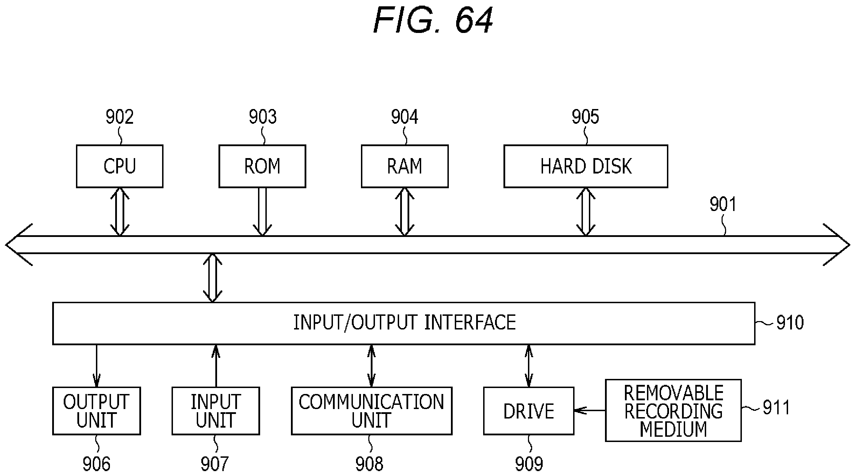

Fig. 64 is a block diagram illustrating a configuration example of an embodiment of a computer to be installed with a program for executing the series of processes described above.

The program can be recorded in advance on a hard disk 905 or a ROM 903 as a recording medium built in the computer.

Alternatively, the program can be stored (recorded) in a removable recording medium 911 driven by a drive 909. Such a removable recording medium 911 can be provided as so-called package software. Here, examples of the removable recording medium 911 include, for example, a flexible disk, a compact disc read only memory (CD-ROM), a magneto optical (MO) disk, a digital versatile disc (DVD), a magnetic disk, a semiconductor memory, and the like.

Note that the program can be installed in the computer from the removable recording medium 911 as described above, or can be downloaded to the computer via a communication network or a broadcast network and installed in the built-in hard disk 905. That is, for example, the program can be wirelessly transferred from a download site to the computer via an artificial satellite for digital satellite broadcasting, or can be transferred by wire to the computer via a network such as a local area network (LAN) and the Internet.

The computer incorporates a central processing unit (CPU) 902, and an input/output interface 910 is connected to the CPU 902 via a bus 901.

When a command is inputted by a user operating an input unit 907 or the like via the input/output interface 910, in response to this, the CPU 902 executes a program stored in the read only memory (ROM) 903. Alternatively, the CPU 902 loads a program stored in the hard disk 905 into a random access memory (RAM) 904 and executes the program.

Therefore, the CPU 902 performs the processing according to the above-described flowchart or the processing performed by the configuration of the above-described block diagram. Then, as necessary, the CPU 902 causes a processing result to be outputted from an output unit 906 or transmitted from a communication unit 908 via the input/output interface 910, for example, and further to be recorded on the hard disk 905, and the like.

Note that the input unit 907 includes a keyboard, a mouse, a microphone, and the like. Furthermore, the output unit 906 includes a liquid crystal display (LCD), a speaker, and the like.

Here, in this specification, the processing performed by the computer according to the program needs not necessarily be performed in chronological order with the order described as the flowchart. That is, the processing performed by the computer according to the program includes processing executed in parallel or individually (for example, parallel processing or processing by an object).

Furthermore, the program may be processed by one computer (processor), or may be distributed and processed by a plurality of computers. Moreover, the program may be transferred to a remote computer to be executed.

Moreover, in this specification, a system means a set of a plurality of components (devices, modules (parts), and the like), and it does not matter whether or not all components are in a same housing. Therefore, a plurality of devices housed in separate housings and connected via a network, and a single device with a plurality of modules housed in one housing are both systems.

Note that the embodiment of the present technology is not limited to the above-described embodiment, and various modifications can be made without departing from the scope of the present technology.

For example, the present technology can have a cloud computing configuration in which one function is shared and processed in cooperation by a plurality of devices via a network.

Furthermore, each step described in the above-described flowchart can be executed by one device, and also shared and executed by a plurality of devices.

Moreover, in a case where one step includes a plurality of processes, the plurality of processes included in the one step can be executed by one device, and also shared and executed by a plurality of devices.

Furthermore, the effects described in this specification are merely examples and are not limited, and other effects may be present.

Note that the present technology can have the following configurations.

<1> A file processing device including:
   a file control unit configured to generate a high efficiency image file format (HEIF) file in which a reserved area is secured, the reserved area being used to store relationship information related to association of an image stored in the HEIF file with specification information specifying external data that is outside the HEIF file and is to be associated with the image.
<2> The file processing device according to <1>, in which
   the file control unit determines a required capacity that is a capacity of the reserved area, and generates the HEIF file in which a reserved area having the required capacity is secured.
<3> The file processing device according to <2>, in which
   the file control unit determines the required capacity in accordance with one or more of: a data amount of the specification information; a number of images to be stored in the HEIF file and to be able to be associated with the external data; and a number of pieces of external data that is able to be associated with an image that is stored in the HEIF file.
<4> The file processing device according to <3>, in which
   the file control unit determines a number of images to be stored in the HEIF file and to be able to be associated with the external data, in accordance with one or more of: a remaining capacity of a medium that stores the HEIF file; a maximum number of main images being able to be stored in the HEIF file; and evaluation of an image that is stored in the HEIF file.
<5> The file processing device according to any one of <1> to <4>, in which
   the file control unit generates the HEIF file in which a meta box stores an association information storage box that stores association information associating the image with specification information of the external data, the association information storage box having the reserved area.
<6> The file processing device according to any one of <1> to <4>, in which
   the file control unit generates the HEIF file storing a free box, the free box having the reserved area and being capable of storing any data.
<7> The file processing device according to any one of <1> to <4>, in which
   the file control unit generates the HEIF file in which an mdat box stores, as an item, an area for association information that associates the image with specification information of the external data, the area having the reserved area.
<8> The file processing device according to any one of <1> to <4>, in which
   the file control unit generates the HEIF file in which an area of information to serve as the specification information is stored as the reserved area in an mdat box.
<9> A file processing method including:
   generating a high efficiency image file format (HEIF) file in which a reserved area is secured, the reserved area being used to store relationship information related to association of an image stored in the HEIF file with specification information specifying external data that is outside the HEIF file and is to be associated with the image.
<10> A program for causing a computer to function as:
   a file control unit configured to generate a high efficiency image file format (HEIF) file in which a reserved area is secured, the reserved area being used to store relationship information related to association of an image stored in the HEIF file with specification information specifying external data that is outside the HEIF file and is to be associated with the image.
<11> A file processing device including:
   a file control unit configured to use a reserved area to write relationship information into a high efficiency image file format (HEIF) file in which the reserved area is secured, the reserved area being used to store the relationship information related to association of an image stored in the HEIF file with specification information specifying external data that is outside the HEIF file and is to be associated with the image.
<12> The file processing device according to <11>, in which
   the file control unit writes the association information into the reserved area of an association information storage box of the HEIF file in which a meta box stores the association information storage box that stores association information associating the image with specification information of the external data, the association information storage box having the reserved area.
<13> The file processing device according to <11>, in which
   the file control unit writes the relationship information by using a reserved area of a free box in the HEIF file storing the free box, the free box having the reserved area and being capable of storing any data.
<14> The file processing device according to <11>, in which
   the file control unit writes association information into a reserved area of an area for the association information in the HEIF file in which an mdat box stores, as an item, the area for the association information that associates the image with specification information of the external data, the area having the reserved area.
<15> The file processing device according to <11>, in which
   the file control unit writes the specification information into an area of information to serve as the specification information in the HEIF file in which an mdat box stores the area of the information to serve as the specification information as the reserved area.
<16> The file processing device according to any one of <11> to <15>, in which
   the file control unit writes the specification information into a file storing the external data.
<17> The file processing device according to <16>, in which
   the specification information includes a universally unique identifier.
<18> A file processing method including:
   using a reserved area to write relationship information into a high efficiency image file format (HEIF) file in which the reserved area is secured, the reserved area being used to store the relationship information related to association of an image stored in the HEIF file with specification information specifying external data that is outside the HEIF file and is to be associated with the image.
<19> A program for causing a computer to function as:
   a file control unit configured to use a reserved area to write relationship information into a high efficiency image file format (HEIF) file in which the reserved area is secured, the reserved area being used to store the relationship information related to association of an image stored in the HEIF file with specification information specifying external data that is outside the HEIF file and is to be associated with the image.

### REFERENCE SIGNS LIST

- 10: Digital camera
- 11: Optical system
- 13: Signal processing unit
- 14: Medium
- 15, 16: Interface
- 17: Button/key
- 18: Touch panel
- 19: Liquid crystal panel
- 20: Viewfinder
- 21: Interface
- 41: Optical system/image sensor control unit
- 42: Encoding control unit
- 43: File control unit
- 44: Medium control unit
- 45: Operation control unit
- 46: Display control unit
- 47: UI control unit
- 901: Bus
- 902: CPU
- 903: ROM
- 904: RAM
- 905: Hard disk
- 906: Output unit
- 907: Input unit
- 908: Communication unit
- 909: Drive
- 910: Input/output interface
- 911: Removable recording medium

## Claims

1. A file processing device comprising:
a file control unit configured to generate a high efficiency image file format (HEIF) file in which a reserved area is secured, the reserved area being used to store relationship information related to association of an image stored in the HEIF file with specification information specifying external data that is outside the HEIF file and is to be associated with the image.

2. The file processing device according to claim 1, wherein
the file control unit determines a required capacity that is a capacity of the reserved area, and generates the HEIF file in which a reserved area having the required capacity is secured.

3. The file processing device according to claim 2, wherein
the file control unit determines the required capacity in accordance with one or more of: a data amount of the specification information; a number of images to be stored in the HEIF file and to be able to be associated with the external data; and a number of pieces of external data that is able to be associated with an image that is stored in the HEIF file.

4. The file processing device according to claim 3, wherein
the file control unit determines a number of images to be stored in the HEIF file and to be able to be associated with the external data, in accordance with one or more of: a remaining capacity of a medium that stores the HEIF file; a maximum number of main images being able to be stored in the HEIF file; and evaluation of an image that is stored in the HEIF file.

5. The file processing device according to claim 1, wherein
the file control unit generates the HEIF file in which a meta box stores an association information storage box that stores association information associating the image with specification information of the external data, the association information storage box having the reserved area.

6. The file processing device according to claim 1, wherein
the file control unit generates the HEIF file storing a free box, the free box having the reserved area and being capable of storing any data.

7. The file processing device according to claim 1, wherein
the file control unit generates the HEIF file in which an mdat box stores, as an item, an area for association information that associates the image with specification information of the external data, the area having the reserved area.

8. The file processing device according to claim 1, wherein
the file control unit generates the HEIF file in which an area of information to serve as the specification information is stored as the reserved area in an mdat box.

9. A file processing method comprising:
generating a high efficiency image file format (HEIF) file in which a reserved area is secured, the reserved area being used to store relationship information related to association of an image stored in the HEIF file with specification information specifying external data that is outside the HEIF file and is to be associated with the image.

10. A program for causing a computer to function as:
a file control unit configured to generate a high efficiency image file format (HEIF) file in which a reserved area is secured, the reserved area being used to store relationship information related to association of an image stored in the HEIF file with specification information specifying external data that is outside the HEIF file and is to be associated with the image.

11. A file processing device comprising:
a file control unit configured to use a reserved area to write relationship information into a high efficiency image file format (HEIF) file in which the reserved area is secured, the reserved area being used to store the relationship information related to association of an image stored in the HEIF file with specification information specifying external data that is outside the HEIF file and is to be associated with the image.

12. The file processing device according to claim 11, wherein
the file control unit writes the association information into the reserved area of an association information storage box of the HEIF file in which a meta box stores the association information storage box that stores association information associating the image with specification information of the external data, the association information storage box having the reserved area.

13. The file processing device according to claim 11, wherein
the file control unit writes the relationship information by using a reserved area of a free box in the HEIF file storing the free box, the free box having the reserved area and being capable of storing any data.

14. The file processing device according to claim 11, wherein
the file control unit writes association information into a reserved area of an area for the association information in the HEIF file in which an mdat box stores, as an item, the area for the association information that associates the image with specification information of the external data, the area having the reserved area.

15. The file processing device according to claim 11, wherein
the file control unit writes the specification information into an area of information to serve as the specification information in the HEIF file in which an mdat box stores the area of the information to serve as the specification information as the reserved area.

16. The file processing device according to claim 11, wherein
the file control unit writes the specification information into a file storing the external data.

17. The file processing device according to claim 16, wherein
the specification information includes a universally unique identifier.

18. A file processing method comprising:
using a reserved area to write relationship information into a high efficiency image file format (HEIF) file in which the reserved area is secured, the reserved area being used to store the relationship information related to association of an image stored in the HEIF file with specification information specifying external data that is outside the HEIF file and is to be associated with the image.

19. A program for causing a computer to function as:
a file control unit configured to use a reserved area to write relationship information into a high efficiency image file format (HEIF) file in which the reserved area is secured, the reserved area being used to store the relationship information related to association of an image stored in the HEIF file with specification information specifying external data that is outside the HEIF file and is to be associated with the image.
